(19) Europäisches Patentamt European Patent Office Office européen des brevets

(11) **EP 4 543 115 A1**

(12) **EUROPEAN PATENT APPLICATION**
published in accordance with Art. 153(4) EPC

(43) Date of publication:
23.04.2025 Bulletin 2025/17

(21) Application number: 23822856.3

(22) Date of filing: 15.05.2023

(51) International Patent Classification (IPC):
*H04W 72/04* (2023.01)

(52) Cooperative Patent Classification (CPC):
H04L 1/16; H04W 28/04; H04W 28/06;
H04W 72/04; H04W 74/08

(86) International application number:
PCT/CN2023/094339

(87) International publication number:
WO 2023/241286 (21.12.2023 Gazette 2023/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.06.2022 CN 202210675048

(71) Applicant: ZTE Corporation
Shenzhen, Guangdong 518057 (CN)

(72) Inventors:
• LIANG, Chulong
Shenzhen, Guangdong 518057 (CN)

• XU, Jin
Shenzhen, Guangdong 518057 (CN)
• YUAN, Zhifeng
Shenzhen, Guangdong 518057 (CN)
• LI, Liguang
Shenzhen, Guangdong 518057 (CN)
• YU, Guanghui
Shenzhen, Guangdong 518057 (CN)
• KANG, Jian
Shenzhen, Guangdong 518057 (CN)
• FU, Qiang
Shenzhen, Guangdong 518057 (CN)

(74) Representative: Savi, Massimiliano et al
Notarbartolo & Gervasi S.p.A.
Viale Achille Papa, 30
20149 Milano (IT)

(54) **INFORMATION TRANSMISSION METHOD AND APPARATUS, AND BASE STATION, DEVICE, STORAGE MEDIUM AND PROGRAM PRODUCT**

(57) Provided in the embodiments of the present disclosure is an information transmission method. The method comprises: receiving transmission blocks, which are sent by at least one second node, wherein the transmission blocks form a transmission block set; according to the transmission block set, obtaining information of a correct transmission block set; and performing encoding processing on the information of the correct transport block set to obtain feedback information, wherein the feedback information is used for representing the reception of the transmission blocks, which are sent by the at least one second node, and the encoding processing comprises representing the information of the correct transmission block set in a binary form; and sending the feedback information to the at least one second node.

FIG. 2

**Description**

**CROSS-REFERENCE TO RELATED APPLICATION**

This application is based on and claims the priority of Chinese patent application No. 202210675048.7 filed on June 15, 2022, the disclosure of which is incorporated herein by reference in its entirety.

**TECHNICAL FIELD**

Embodiments of the present disclosure relate to the field of communications technologies, in particular to an information transmission method and an apparatus, a base station, a user equipment, a storage medium, and a program product.

**BACKGROUND**

With the development of wireless communications technology, each base station (BS) needs to support connection of tens of thousands of user equipments (DEs). Taking a contention-based grant-free (CBGF) random access transmission scheme as an example, a base station does not need to perform scheduling and resource allocation in advance for UEs that send data, and cannot know in advance which UEs have data transmission requirements. As a result, there is a possibility that a plurality of UEs use the same time and frequency resource for transmission. In order for the base station to distinguish between different UEs in a process of reception and detection, the UEs that send data each will randomly select a resource (also called signature) from a random access resource set (for example, a spread spectrum sequence, or a pilot sequence) provided by a system to transmit data.

Since the base station does not perform scheduling for the UEs, the base station needs to feed back an acknowledgment signal to each UE for determining whether a data packet is successfully received. However, as one base station serves thousands of UEs at the same time, if a 1-bit response signal is fed back to each served UE, thousands of bit response signals need to be fed back. This causes excessive feedback overheads, leading to the waste of spectrum resources.

**SUMMARY**

Embodiments of the present disclosure provide an information transmission method and an apparatus, a base station, a UE, a computer-readable storage medium, and a computer program product, aiming at saving spectrum resources and improving data transmission efficiency.

In accordance with a first aspect of the present disclosure, an embodiment provides an information transmission method, which includes: receiving a transport block (TB) sent by at least one second node, where the TB forms a TB set; obtaining information about a set of correct TBs according to the TB set; encoding the information about the set of correct TBs to obtain feedback information, where the feedback information is used to represent a reception condition of the TB sent by the at least one second node, and the encoding processing includes binary representation performed on the information about the set of correct TBs; and sending the feedback information to the at least one second node.

In accordance with a second aspect of the present disclosure, an embodiment provides an information transmission method applied to a second node, the method includes: sending a TB to a first node; and receiving feedback information sent by the first node, where the feedback information is used to represent a reception condition of the TB.

In accordance with a third aspect of the present disclosure, an embodiment provides an information transmission apparatus, which includes: a receiving module configured to receive a TB sent by at least one second node, where the TB forms a TB set; a correct TB information obtaining module configured to obtain information about a set of correct TBs according to the TB set; a feedback information generation module configured to encode the information about the set of correct TBs to obtain feedback information, where the feedback information is used to represent a reception condition of the TB sent by the at least one second node, and the encoding processing includes binary representation performed on the information about the set of correct TBs, or compression coding performed on the information about the set of correct TBs; and a sending module configured to send the feedback information to the at least one second node.

In accordance with a fourth aspect of the present disclosure, an embodiment provides an information transmission apparatus, which includes: a sending module configured to send a TB to a first node; and a receiving module configured to receive feedback information sent by the first node, where the feedback information is used to represent a reception condition of the TB.

In accordance with a fifth aspect of the present disclosure, an embodiment provides a base station, which includes: a memory, a processor, and a computer program stored in the memory and executable by the processor, where the computer program, when executed by the processor, causes the processor to perform the information transmission method of any one of the first aspect or the second aspect.

In accordance with a sixth aspect of the present disclosure, an embodiment provides a UE, which includes: a memory, a processor, and a computer program stored in the memory and executable by the processor, where the computer program, when executed by the processor, causes the processor to perform the information transmission method of any one of the first aspect or the second aspect.

In accordance with a seventh aspect of the present disclosure, an embodiment provides a computer-readable storage medium, which stores computer-executable instructions configured to cause a computer to perform the information transmission method of any one of the first aspect or the second aspect.

In accordance with an eighth aspect of the present disclosure, an embodiment provides a computer program product, which includes a computer program or computer instructions stored in a computer-readable storage medium, from which a processor of a computing device reads the computer program or the computer instructions, where the computer program or the computer instructions, when executed by the processor, cause the computing device to perform the information transmission method of any one of the first aspect or the second aspect.

According to an information transmission method and an apparatus, a base station, a UE, a storage medium, and a program product provided in the embodiments of the present disclosure, spectrum resources can be saved and data transmission efficiency can be improved.

**BRIEF DESCRIPTION OF DRAWINGS**

FIG. 1 is a schematic diagram of an application scenario and system architecture of an information transmission method provided by an embodiment of the present disclosure;

FIG. 2 is a flowchart of an information transmission method provided by an embodiment of the present disclosure;

FIG. 3 is a flowchart of an information transmission method provided by an embodiment of the present disclosure;

FIG. 4 is a flowchart of an information transmission method provided by an embodiment of the present disclosure;

FIG. 5 is a flowchart of an information transmission method provided by an embodiment of the present disclosure;

FIG. 6 is a flowchart of determining a TB error pattern provided by an embodiment of the present disclosure;

FIG. 7 is a flowchart of determining a TB error pattern provided by another embodiment of the present disclosure;

FIG. 8 is a flowchart of determining a compressed codeword according to a set of identifiers of correct TBs provided by an embodiment of the present disclosure;

FIG. 9 is a flowchart of determining a compressed codeword according to a TB error pattern provided by another embodiment of the present disclosure;

FIG. 10 is a flowchart of a method for determining feedback information provided by an embodiment of the present disclosure;

FIG. 11 is a schematic diagram of a relationship among a second node, a TB, and a UE identifier provided by an example of the present disclosure;

FIG. 12 is a schematic diagram of a relationship among a second node, a TB, a random access signature, and a signature index provided by an example of the present disclosure;

FIG. 13 is a schematic diagram of determining feedback information according to a set of identifiers of correct TBs provided by an example of the present disclosure;

FIG. 14 is a schematic diagram of a relationship among a second node, a TB, a random access signature, and a signature index provided by an example of the present disclosure;

FIG. 15 is a schematic diagram of a relationship among a second node, a TB, a UE identifier, a random access signature, and a signature index provided by an example of the present disclosure;

FIG. 16 is a schematic diagram of determining feedback information according to a set of identifiers of correct TBs provided by an example of the present disclosure;

FIG. 17 is a schematic diagram of a relationship among a second node, a TB, a UE identifier, a random access signature, and a signature index provided by an example of the present disclosure;

FIG. 18 is a schematic diagram of determining feedback information according to a set of identifiers of correct TBs provided by an example of the present disclosure;

FIG. 19 is a schematic diagram of determining feedback information through arithmetic coding according to a TB error pattern provided by an example of the present disclosure;

FIG. 20 is a mapping diagram of a TB error pattern and a compressed codeword provided by an example of the present disclosure;

FIG. 21 is a schematic diagram of determining feedback information through arithmetic coding according to a TB error pattern provided by an example of the present disclosure;

FIG. 22 is a schematic diagram of determining feedback information through arithmetic coding according to a TB error pattern provided by an example of the present disclosure;

FIG. 23 is a mapping diagram of a TB error pattern and a compressed codeword provided by an example of the present disclosure;

FIG. 24 is a schematic diagram of determining feedback information through arithmetic coding according to a TB error pattern provided by an example of the present disclosure;

FIG. 25 is a schematic diagram of a relationship among a second node, a TB, a random access signature, and a signature index provided by an example of the present disclosure;

FIG. 26 is a schematic diagram of determining feedback information through arithmetic coding according to a TB error pattern provided by an example of the present disclosure;

FIG. 27 is a mapping diagram of a TB error pattern and a compressed codeword provided by an example of the present disclosure;

FIG. 28 is a schematic diagram of a relationship among a second node, a TB, a random access signature, and a signature index provided by an example of the present disclosure;

FIG. 29 is a schematic diagram of determining feedback information through arithmetic coding according to a TB error pattern provided by an example of the present disclosure;

FIG. 30 is a mapping diagram of a TB error pattern, a compressed codeword, and feedback information provided by an example of the present disclosure;

FIG. 31 is a schematic diagram of determining feedback information through arithmetic coding according to a set of identifiers of correct TBs provided by an example of the present disclosure;

FIG. 32 is a schematic diagram of determining feedback information through arithmetic coding according to a set of identifiers of correct TBs provided by an example of the present disclosure;

FIG. 33 is a flowchart of an information transmission method provided by an embodiment of the present disclosure;

FIG. 34 is a flowchart of a determining method based on a decoding result provided by an embodiment of the present disclosure;

FIG. 35 is a schematic diagram of an information transmission apparatus provided by an embodiment of the present disclosure;

FIG. 36 is a schematic diagram of an information transmission apparatus provided by an embodiment of the present disclosure;

FIG. 37 is a schematic diagram of a base station provided by an embodiment of the present disclosure; and

FIG. 38 is a schematic diagram of a UE provided by an embodiment of the present disclosure.

## DETAILED DESCRIPTION

In order to make the objectives, technical schemes and advantages of the present disclosure clear, the present disclosure is described in detail in conjunction with the accompanying drawings and embodiments. It should be understood that the particular embodiments described herein are only intended to explain the present disclosure, and are not intended to limit the present disclosure.

It is to be noted that although a functional module division is shown in a schematic diagram of an apparatus and a logical order is shown in a flowchart, the steps shown or described may be executed, in some cases, with a different module division from that of the apparatus or in a different order from that in the flowchart. The terms such as "first" and "second" in the description, claims and above-mentioned drawings are intended to distinguish between similar objects and are not necessarily to describe a specific order or sequence.

In the description of embodiments of the present disclosure, unless otherwise explicitly defined, the terms such as "configure", "install", and "connect" should be construed in a broad sense, and those skilled in the art can determine the meanings of the above terms in the present disclosure in a rational way in conjunction with the contents of embodiments of the technical schemes. In the embodiments of the present disclosure, the term such as "further," "exemplary," or "optionally" is used to represent as an example, an illustration, or a description and should not be construed as being more preferred or advantageous than another embodiment or design. The use of the term such as "further," "exemplary," or "optionally," is intended to present a related concept in an illustrative manner.

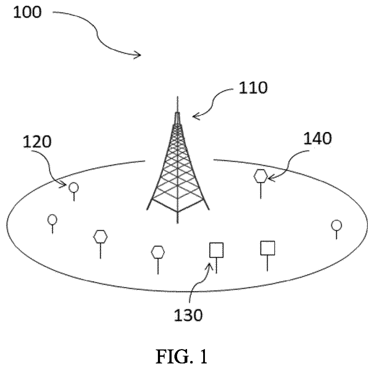

FIG. 1 is a schematic diagram of an application scenario and system architecture of an information transmission method provided by an embodiment of the present disclosure. As shown in FIG. 1, in a wireless communications system 100, a base station 110 serves a plurality of types of UEs (120, 130, 140), and there may be one or more UEs for each type. Therefore, the base station 110 serves a plurality of UEs.

The information transmission method provided in the present disclosure may be applied to various communications systems, for example, an Internet of Things (IoT), a narrow band Internet of Things (NB-IoT), Long Term Evolution (LTE), or a 5th Generation (5G) communications system, or may also be a hybrid architecture of LTE and 5G, a 5G new radio (NR) system, or a new communications system emerging in future communications development. Provided that an entity in the communication system can receive a TB and send feedback information on a reception condition of the TB, and another entity can send the TB and receive the feedback information on the reception condition of the TB, the information transmission method provided by the embodiments of the present disclosure can be utilized.

The UE in the embodiments of the present disclosure is a device which provides voice and/or data connectivity to a user, for example, a handheld device or vehicle-mounted device with a wireless connection function. The UE may also be another processing device connected to a wireless modem. The UE can communicate with one or more core networks through a radio access network (RAN). The UE may also be referred to as a wireless terminal, a subscriber unit, a subscriber station, a mobile station, a mobile, a remote station, an access point, a remote terminal, an access terminal, a user terminal, or a user agent. The UE may be a mobile terminal device, for example, a mobile phone (also referred to as a "cellular" phone), or a computer having a mobile terminal device. For example, the UE may be a portable, pocket-sized, handheld, computer-built-in or vehicle-mounted mobile apparatus, which exchanges a language and/or data with the RAN. For example, the UE may alternatively be a device such as a personal communication service (PCS) phone, a cordless telephone set, a session initiation protocol (SIP) phone, a wireless local loop (WLL) station, or a personal digital assistant (PDA). Common UEs include, for example, a mobile phone, a tablet computer, a notebook computer, a palmtop computer, a mobile internet device (MID), or a wearable device, for example, a smart watch, a smart band, or a pedometer. The embodiments of the present disclosure are not limited thereto.

The base station in the embodiments of the present disclosure may be a base transceiver station (BTS) in a global system for mobile communication (GSM) or code division multiple access (CDMA), a NodeB in wideband code division multiple access (WCDMA), an evolved Node B (eNB or e-NodeB) in LTE, an NR controller, a gNode B (gNB) in a 5G system, a centralized unit, a new wireless base station, a radio remote module, a micro base station, a relay, a distributed unit, a transmission reception point (TRP) or a transmission point (TP), or any other wireless access device. However, the embodiments of the present disclosure are not limited thereto. A network device may cover one or more cells.

Taking the 5G Technical Specification (TS) of the 3rd Generation Partnership Project (3GPP) as an example, transmission of UE is scheduled by a base station, and therefore, an acknowledgment signal does not need to be fed back in the downlink. In the uplink, the UE receives a TB signal sent by the base station, and determines, by using a cyclic redundancy check (CRC) code of a TB, whether a current TB is correctly received. If the CRC check succeeds for the TB, it is considered that the reception is correct, and the UE feeds back a positive acknowledgment state (represented by bit "1") to the base station on a time-frequency resource designated by the base station. Otherwise, the UE feeds back a negative acknowledgment (NACK) state (represented by bit "0") to the base station. According to requirements of different scenarios, the acknowledgment state can be transmitted on five physical uplink control channel (PUCCH) formats defined by the 5G standard. These five formats are: PUCCH format 0, PUCCH format 1, PUCCH format 2, PUCCH format 3, and PUCCH format 4, respectively. PUCCH formats 0 and 1 are used to transmit 1-or 2-bit hybrid automatic repeat request (HARQ) acknowledgment (HARQ-ACK) information and scheduling request. PUCCH formats 2 to 4 are used to transmit a channel state information (CSI) report or multi-bit HARQ-ACK information.

Table 1 A quantity of resources occupied by different PUCCH formats, a quantity of bits transmitted, and example uses

| PUCCH format | Number of OFDM symbols $N_{symb}$ | Number of RBs $N_{RB}$ | Number of REs $N_{RE}$ | Number A of bits of a payload | Use |
|---|---|---|---|---|---|
| 0 | 1~2 | 1 | 12 or 24 | $\leq 2$ | HARQ-ACK information feedback, and scheduling request |
| 1 | 4~14 | 1 | 48~168 | $\leq 2$ | HARQ-ACK information feedback, and scheduling request |
| 2 | 1~2 | >1 | $\geq 12$ | >2 | HARQ-ACK information feedback, scheduling request, and CSI report |
| 3 | 4~14 | $\geq 1$ | $\geq 48$ | >2 | HARQ-ACK information feedback, scheduling request, and CSI report |
| 4 | 4~14 | 1 | $\geq 48$ | >2 | HARQ-ACK information feedback, scheduling request, and CSI report |

Table 1 shows the number of bits of the payload, the number of resources occupied, and the uses under different PUCCH formats, where OFDM represents Orthogonal Frequency Division Multiplexing, RB represents Resource Block, and RE represents Resource Element.

The number of bits of the payload of each of PUCCH formats 0 and 1 is not greater than 2. Phase-shift keying (PSK) is performed on a load, then a modulated load is multiplied by a sequence, and spectrum spreading is performed on a product thereof to obtain a transmission signal. Polarization code channel coding and PSK are performed on PUCCH formats 2 to 4 to obtain a transmission signal.

As can be seen from Table 1, on average, at least 6 REs are required for transmitting each 1-bit acknowledgment signal. For a future large-scale scheduling-free system, even if the base station only serves 1000 UEs, at least 6000 REs are required for acknowledgment signal feedback (about 36 RBs, each RB having 12*14=168 REs). This will occupy a large amount of spectrum resources. However, in fact, the number of UEs with data transmission at the same time is far less than 1000 (often only a few dozen), thus efficiency of feeding back acknowledgment signals is low.

In view of this, the embodiments of the present disclosure provide an information transmission method and an apparatus, a base station, a UE, a storage medium, and a program product. By performing coding on information about a set of correctly-received TBs, a plurality of correctly-received acknowledgment signals of UEs are compressed, such that a quantity of input bits of channel coding is greatly reduced or even minimized, and then channel coding and modulation are performed, after which processed signals are transmitted. Each UE decodes and decompresses the received acknowledgment signal and extracts a corresponding acknowledgment signal, thereby achieving the purpose of saving spectrum resources and improving data transmission efficiency.

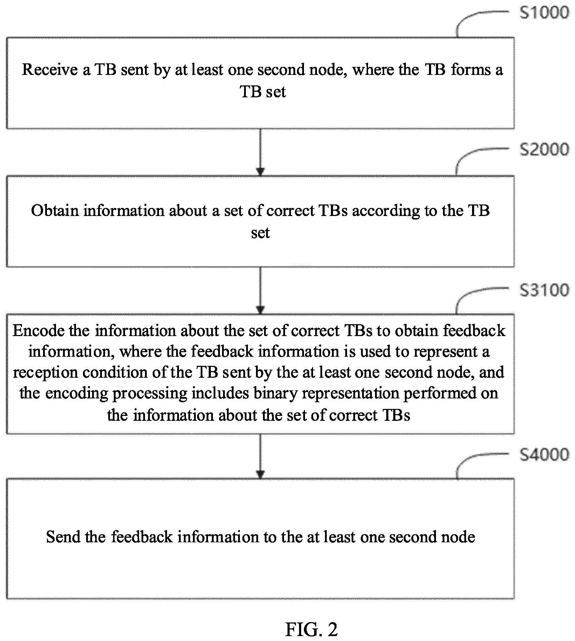

FIG. 2 is a flowchart of an information transmission method provided by an embodiment of the present disclosure. As shown in FIG. 2, the information transmission method provided by the embodiment of the present disclosure can be utilized for any network element having data reception and signaling transmission functions, such as a base station, a relay, or a terminal device, including but not limited to steps S1000, S2000, S3100 and S4000.

At S1000, a TB sent by at least one second node is received, the TBs forms a TB set.

In some embodiments, a first node receives a signal, which includes a TB, sent by one second node.

In some embodiments, when the first node receives signals including TBs sent by a plurality of second nodes, the second nodes form a sequence of second nodes, and the TBs sent by the plurality of second nodes form a TB set. Here, the sequence of second nodes includes Nu second nodes, and the TB set includes Nb TBs, where Nu and Nb are positive integers, and Nu is less than or equal to Nb.

It is to be noted that, in some embodiments, one second node may send one or more TBs to the first node, and the one or more TBs form a TB set. In some other embodiments, two or more second nodes may send one or more TBs to the first node, and the TBs form a TB set.

In some embodiments, a TB in the TB set includes a TB identifier, an ordered set of TB identifiers includes Na TB identifiers I(1), I(2), ..., and I(Na), and Na is a size of the ordered set of TB identifiers. For i=1, 2, ..., Na, an $i^{th}$ element in the ordered set of TB identifiers is I(i). Here, the $i^{th}$ element I(i) in the ordered set of TB identifiers may be an integer i or an integer i-1.

In some embodiments, the TB is indicated by a TB identifier.

In some embodiments, the TB identifier may be one of the following: a UE identifier, an index value of a UE identifier, or a signature index.

In some embodiments, the UE identifier is a UE identifier of a second node in the sequence of second nodes, and UE identifiers of two different second nodes in the sequence of second nodes are different. The UE identifiers may be used for the first node to distinguish between different TBs in the TB set in a signal including the TB set, and the UE identifier is an integer.

It should be noted that the UE identifier may be a subscription permanent identifier (SUPI), a generic public subscription identifier (GPSI), a permanent equipment identifier (PEI), a network access identifier (NAI), a subscription concealed identifier (SUCI), a globally unique temporary identity (GUTI), a radio network temporary identifier (RNTI), a system information RNTI (SI-RNTI), a paging RNTI (P-RNTI), a random access RNTI (RA-RNTI), a temporary cell RNTI, (TC-RNTI), a cell RNTI (C-RNTI), a transmit power control-physical uplink control channel-RNTI (TPC-PUCCH-RNTI), a transmit power control-physical uplink shared channel-RNTI (TPC-PUSCH-RNTI), a transmit power control-sounding reference symbols-RNTI (TPC-SRS-RNTI), an interruption RNTI (INT-RNTI), a modulation coding scheme cell RNTI (MCS-C-RNTI), a configured scheduling RNTI (CS-RNTI), a slot format indication RNTI (SFI-RNTI), a semi-persistent RNTI (SP-CSI-RNTI), or the like.

In some embodiments, the TB identifier is a UE identifier, and elements in the ordered set of TB identifiers are UE identifiers. An example is: the ordered set of TB identifiers I = <I(1), I(2), I(3), I(4), I(5)> = <0, 1, 2, 3, 4>, where the size Na of the ordered set of TB identifiers is equal to 5, and a UE identifier corresponding to the second element I(2) in the ordered set of TB identifiers is 1. Another example is: the ordered set of TB identifiers I = <I(1), I(2), I(3), I(4), I(5)> = <1, 2, 3, 4, 5>, where the size Na of the ordered set of TB identifiers is equal to 5, and the UE identifier corresponding to the second element I(2) in the ordered set of TB identifiers is 2. Still another example is: the ordered set of TB identifiers I = <I(1), I(2), I(3), I(4)> = <0, 11, 20, 30>, where the size Na of the ordered set of TB identifiers is equal to 4, and the UE identifier corresponding to the second element I(2) in the ordered set of TB identifiers is 11.

In some embodiments, the index value of a UE identifier is an index k of an element I(k) in an ordered set of TB identifiers I = <I(1), I(2), ..., I(Na)>, k = 1, 2, ..., Na, and the index value of the UE identifier is an integer.

In some embodiments, the TB identifier is the index value of the UE identifier, the UE identifier is an element in an ordered set of UE identifiers, and the ordered set of UE identifiers includes Na UE identifiers ID(1), ID(2), ..., ID(Na). Here, Na is a size of the ordered set of UE identifiers and the size of the ordered set of TB identifiers, k = 1, 2, ..., Na, and an index value of a UE identifier corresponding to a $k^{th}$ UE identifier ID(k) in the ordered set of UE identifiers is a $k^{th}$ element I(k) in elements in the ordered set of TB identifiers. An example is: the ordered set of UE identifiers ID = <ID(1), ID(2), ID(3), ID(4)> = <0, 11, 20, 30>, and the corresponding ordered set of TB identifiers I = <I(1), I(2), I(3), I(4)> = <0, 1, 2, 3>; where the size of the ordered set of UE identifiers and the size of the ordered set of TB identifiers are both Na = 4, and an index value of a UE identifier of an element ID(2) = 11 in the ordered set of UE identifiers is the element I(2) = 1 in the ordered set of TB identifiers.

In some embodiments, the TB identifier is a signature index, and the signature index is a signature index of a random access signature, that is, a TB in the TB set includes the random access signature. The random access signature is an element in an ordered set of random access signatures, and the ordered set of random access signatures includes Na random access signatures r(1), r(2), ..., r(Na). Here, Na is a size of the ordered set of random access signatures and the size of the ordered set of TB identifiers, i = 1, 2, ..., Na, and a signature index of an $i^{th}$ random access signature r(i) in the ordered set of random access signatures is an $i^{th}$ element I(i) in the ordered set of TB identifiers, where the $i^{th}$ element I(i) in the ordered set of TB identifiers may be an integer i or an integer i-1.

It should be noted that the random access signature may be a pilot, a reference signal, a preamble, a spread spectrum sequence, an interleaver, an interleaver pattern, an interleaver sequence, a scrambling sequence, a sparse code sequence, or the like.

In some embodiments, the second node determines a random access signature of a TB according to a UE identifier of the TB, as a random access signature included in the TB in the TB set. The random access signatures may be used for the first node to distinguish between different TBs in the TB set in the signal including the TB set.

In some embodiments, the second node determines a random access signature of a TB according to a higher layer parameter, as a random access signature included in the TB in the TB set. The random access signatures may be used for the first node to distinguish between different TBs in the TB set in the signal including the TB set.

It should be noted that the first node and the second node may be any network elements with data reception and signaling transmission functions such as base stations, relays, or terminal devices.

At S2000, information about a set of correct TBs is obtained according to the TB set.

It should be noted that the information about the set of correct TBs includes a maximum quantity Pmax of correct TBs, the ordered set of TB identifiers, the size Na of the ordered set of TB identifiers, a set of identifiers of correct TBs, a quantity P of correct TBs, a TB error pattern a, or a length Nf of feedback information f. It should be noted that the feedback information can be obtained according to one or more of the foregoing information about the correct TB, that is, the generation of the feedback information does not necessarily require all the information.

In some embodiments, the maximum quantity Pmax of correct TBs is equal to the size Na of the ordered set of TB identifiers. In some other embodiments, the maximum quantity Pmax of correct TBs is configured by the first node. In some other embodiments, the maximum quantity Pmax of correct TBs is pre-configured by using a higher layer parameter.

In some embodiments, the information about the set of correct TBs is the set of identifiers of correct TBs, and the set of identifiers of correct TBs is a set of UE identifiers included in correctly-received TBs in the TB set. The correctly-received TB is a TB whose acknowledgment state is a positive acknowledgment ACK. A UE identifier belonging to the set of identifiers of correct TBs is used to indicate that an acknowledgment state of a TB corresponding to the UE identifier is positive acknowledgment ACK. A UE identifier not belonging to the set of identifiers of correct TBs is used to indicate that an acknowledgment state of a TB corresponding to the UE identifier is negative acknowledgment NACK.

In some embodiments, the information about the set of correct TBs is the set of identifiers of correct TBs, and the set of identifiers of correct TBs is a set of index values of UE identifiers. The correctly-received TB is a TB whose acknowledgment state is a positive acknowledgment ACK. An index value of a UE identifier belonging to the set of identifiers of correct TBs is used to indicate that an acknowledgment state of a TB corresponding to the index value of the UE identifier is positive acknowledgment ACK. An index value of a UE identifier not belonging to the set of identifiers of correct TBs is used to indicate that an acknowledgment state of a TB corresponding to the index value of the UE identifier is negative acknowledgment NACK.

In some embodiments, the information about the set of correct TBs is the set of identifiers of correct TBs, and the set of identifiers of correct TBs is a set of signature indexes of random access signatures corresponding to correctly-received TBs in the TB set. The correctly-received TB is a TB whose acknowledgment state is a positive acknowledgment ACK. A signature index of a random access signature belonging to the set of identifiers of correct TBs is used to indicate that an acknowledgment state of a TB corresponding to the random access signature is positive acknowledgment ACK. A signature index of a random access signature not belonging to the set of identifiers of correct TBs is used to indicate that an acknowledgment state of a TB corresponding to the random access signature is negative acknowledgment NACK.

At S3100, the information about the set of correct TBs is encoded to obtain feedback information, where the feedback information is used to represent a reception condition of the TB sent by the at least one second node, and the encoding processing includes binary representation performed on the information about the set of correct TBs.

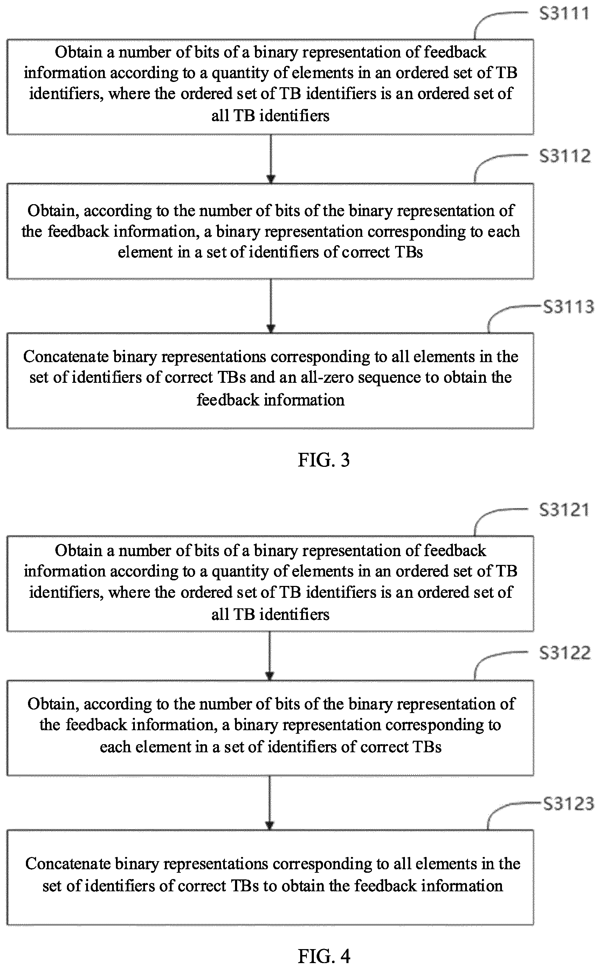

In some embodiments, after binary representation is separately performed on P elements in the set of identifiers of correct TBs, the first node performs zero-padding processing, that is, concatenation with a certain length of all-zero sequence is performed to obtain the feedback information. FIG. 3 is a flowchart of an information transmission method provided by an embodiment of the present disclosure. The method includes steps S3111, S3112, and S3113, and describes a process of concatenating binary representations of a set of identifiers of correct TBs and an all-zero sequence to obtain feedback information.

At S3111, a number of bits of a binary representation of the feedback information are obtained according to a quantity of elements in an ordered set of TB identifiers, where the ordered set of TB identifiers is an ordered set of all TB identifiers.

It can be understood that, according to the quantity of elements in the ordered set of TB identifiers and a rule of binary representation, it is possible to determine a quantity of bits required for a binary representation of the TB identifier. In an implementation, when the ordered set of TB identifiers includes Na elements, $\lceil \log_2(\mathrm{Na}) \rceil$ bits are required for a binary representation, where $\lceil \log_2(\mathrm{Na}) \rceil$ represents the smallest integer greater than or equal to $\log_2(\mathrm{Na})$. For example, when there are UE identifiers of 1, 2, 3, 4, 5, 6, and 7, at least 3 bits are required for the binary representation.

At S3112, a binary representation corresponding to each element in the set of identifiers of correct TBs is obtained according to the number of bits of the binary representation of the feedback information.

In some embodiments, a first node separately performs binary representation on P elements in the set of identifiers of correct TBs to obtain a sequence with a length of $P \cdot \lceil \log_2(Na) \rceil$, where $\lceil \log_2(Na) \rceil$ represents the smallest integer greater than or equal to $\log_2(Na)$.

At S3113, binary representations corresponding to all elements in the set of identifiers of correct TBs and an all-zero sequence are concatenated to obtain the feedback information.

In some embodiments, the first node performs zero-padding processing on the binary-represented P elements, that is, concatenates the sequence with the length of $P \cdot \lceil \log_2(Na) \rceil$ and an all-zero sequence with a length of $(Pmax - P) \cdot \lceil \log_2(Na) \rceil$ to form feedback information with a length $Nf = Pmax \cdot \lceil \log_2(Na) \rceil$; where $\lceil \log_2(Na) \rceil$ represents the smallest integer greater than or equal to $\log_2(Na)$.

In some embodiments, after separately performing binary representation on the P elements in the set of identifiers of correct TBs, the first node concatenates binary representations corresponding to all the elements in the set of identifiers of correct TBs to obtain the feedback information. FIG. 4 is a flowchart of an information transmission method provided by an embodiment of the present disclosure. The method includes steps S3121, S3122, and S3123, and describes a process of directly using binary representations of a set of identifiers of correct TBs as feedback information.

At S3121, a number of bits of a binary representation of the feedback information are obtained according to a quantity of elements in an ordered set of TB identifiers, where the ordered set of TB identifiers is an ordered set of all TB identifiers.

It can be understood that, according to the quantity of elements in the ordered set of TB identifiers and a rule of binary representation, it is possible to determine a quantity of bits required for a binary representation of the TB identifier. In an implementation, when the ordered set of TB identifiers includes Na elements, $\lceil \log_2(Na) \rceil$ bits are required for a binary representation, where $\lceil \log_2(Na) \rceil$ represents the smallest integer greater than or equal to $\log_2(Na)$. For example, when there are UE identifiers of 1, 2, 3, 4, 5, 6, 7, at least 3 bits are required for the binary representation.

At S3122, a binary representation corresponding to each element in the set of identifiers of correct TBs is obtained according to the number of bits of the binary representation of the feedback information.

In some embodiments, a first node separately performs binary representation on P elements in the set of identifiers of correct TBs to obtain a sequence with a length of $P \cdot \lceil \log_2(Na) \rceil$, where $\lceil \log_2(Na) \rceil$ represents the smallest integer greater than or equal to $\log_2(Na)$.

At S3123, binary representations corresponding to all elements in the set of identifiers of correct TBs is concatenated to obtain the feedback information.

In some embodiments, the first node directly sends feedback information with the length of $P \cdot \lceil \log_2(Na) \rceil$ to the at least one second node without performing zero-padding on the binary-represented P elements.

It should be noted that in practical application, the TB sent by the second node can be identified by using the UE identifier, the index value of the UE identifier, and the signature index as TB identifiers. After receiving these TBs with TB identifiers, the first node can construct the feedback information in a way of zero-padding or not performing zero-padding, that is, the TB identifier is not necessarily related to zero-padding.

In some embodiments, a signature index corresponding to the TB can be obtained according to the UE identifier. The UE identifier has a mapping relationship with the signature index.

In some embodiments, the UE identifier is used as a part of a random number seed of a pseudorandom number generator (PRNG) to generate a pseudo-random signature index. The pseudo-random signature index is used as the signature index corresponding to the TB.

In some embodiments, the UE identifier is used as all of the random number seed of the PRNG to generate a pseudo-random signature index. The pseudo-random signature index is used as the signature index corresponding to the TB.

At S4000, the feedback information is sent to the at least one second node.

In some embodiments, the first node sends the feedback information to the at least one second node, where the feedback information can represent a reception condition at the first node of the TB sent by the at least one second node.

The information transmission method provided by the embodiment can greatly reduce a quantity of input bits of channel coding, thereby saving spectrum resources and improving data transmission efficiency.

In some embodiments, the first node has no correctly-received TB, and the set of identifiers of correct TBs is an empty set, that is, when P = 0, the first node determines that the length Nf of the feedback information f is 0, that is, the feedback information f is an empty sequence. The first node determines that a signal including the feedback information f which is an empty sequence is a null signal. In other words, the first node determines that the signal including the feedback information f is a zero power signal.

In the information transmission method provided by the above embodiment, the first node sends the zero power signal, such that energy overheads are reduced, and a second node in the sequence of second nodes does not receive the signal including the feedback information f (that is, the zero power signal) successfully. Therefore, the second node in the sequence of second nodes can determine that the feedback information is negative acknowledgment NACK.

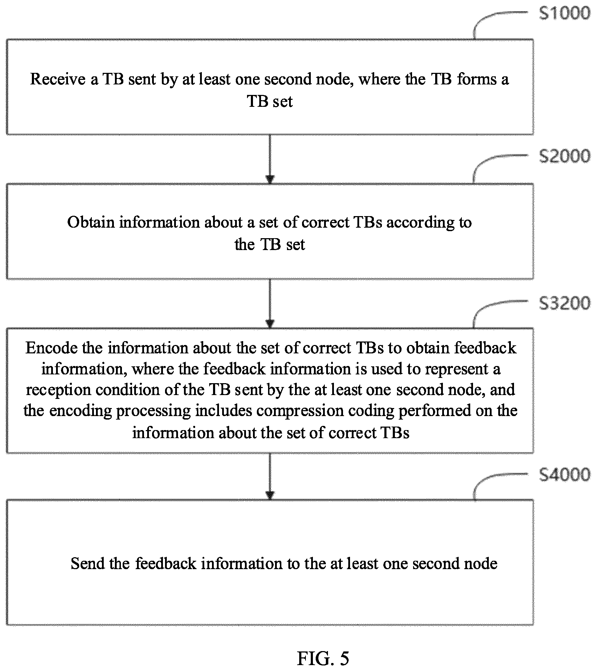

FIG. 5 is a flowchart of an information transmission method provided by another embodiment of the present disclosure. As shown in FIG. 5, the information transmission method provided by the embodiment of the present disclosure can be utilized for any network element having data reception and signaling transmission functions, such as a base station, a relay, or a terminal device, including but not limited to steps S1000, S2000, S3200 and S4000.

At S1000, a TB sent by at least one second node is received, the TBs forms a TB set.

At S2000, information about a set of correct TBs is obtained according to the TB set.

At S3200, the information about the set of correct TBs is encoded to obtain feedback information, where the feedback information is used to represent a reception condition of the TB sent by the at least one second node, and the encoding processing includes compression coding performed on the information about the set of correct TBs.

At S4000, the feedback information is sent to the at least one second node.

The difference between the embodiment corresponding to FIG. 5 and the embodiment corresponding to FIG. 2 is that the encoding processing is compression coding performed on the information about the set of correct TBs. Therefore, contents of steps S1000, S2000, and S4000 will not be described in detail.

It can be understood that the compression coding may be at least one of the following source coding algorithms: arithmetic coding, Huffman coding, or Shannon-Fano coding.

In some embodiments, a compressed codeword c is directly determined according to the information about the set of correct TBs, where the compressed codeword c is a bit sequence with a length of Nc. The information about the set of correct TBs includes at least one of the following: a maximum quantity Pmax of correct TBs, an ordered set of TB identifiers, a size Na of the ordered set of TB identifiers, a set of identifiers of correct TBs, a quantity P of correct TBs, or a TB error pattern a.

In some embodiments, when the information about the set of correct TBs is the set of identifiers of correct TBs, compression coding is performed on the set of identifiers of correct TBs to determine the compressed codeword c.

In some embodiments, when the information about the set of correct TBs is the TB error pattern a, the compressed codeword c can be determined according to the TB error pattern a.

It should be noted that the TB error pattern a is determined according to at least one of the following: the ordered set of TB identifiers, the size Na of the ordered set of TB identifiers, the set of identifiers of correct TBs, or the quantity P of correct TBs.

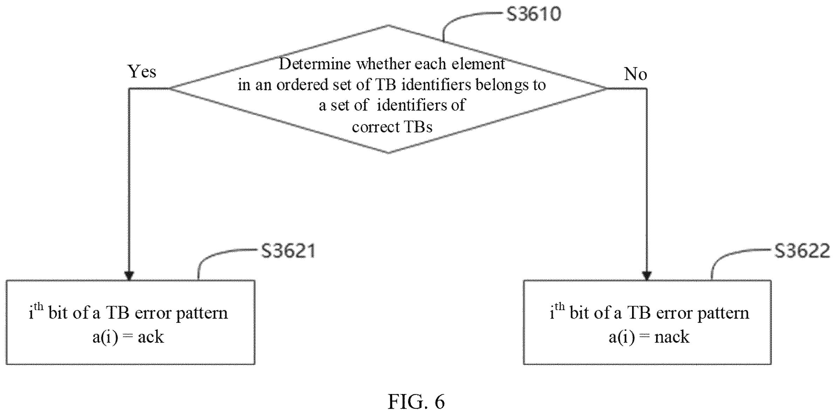

FIG. 6 is a flowchart of a method for determining a TB error pattern a provided by an embodiment of the present disclosure. As shown in FIG. 6, the TB error pattern a is determined by the following steps S3610, S3621, and S3622.

At S3610, it is determined whether each element in an ordered set of TB identifiers belongs to a set of identifiers of correct TBs.

At S3621, in response to an $i^{th}$ element in the ordered set of TB identifiers belonging to the set of identifiers of correct TBs, an $i^{th}$ bit of the TB error pattern a(i) = ack.

At S3622, in response to the $i^{th}$ element in the ordered set of TB identifiers not belonging to the set of identifiers of correct TBs, the $i^{th}$ bit of the TB error pattern a(i) = nack.

It can be understood that an "ack" bit is used to indicate that an acknowledgment state of a TB is positive acknowledgment ACK, and a "nack" bit is used to indicate that an acknowledgment state of a TB is negative acknowledgment NACK. In other words, a(i) = ack indicates that an acknowledgment state of a TB corresponding to the $i^{th}$ element in the ordered set of TB identifiers is positive acknowledgment ACK, and a(i) = nack indicates that an acknowledgment state of a TB corresponding to the $i^{th}$ element in the ordered set of TB identifiers is negative acknowledgment NACK.

In some embodiments, the "ack" bit is bit "1" and the "nack" bit is bit "0".

In some embodiments, the "ack" bit is bit "0" and the "nack" bit is bit "1".

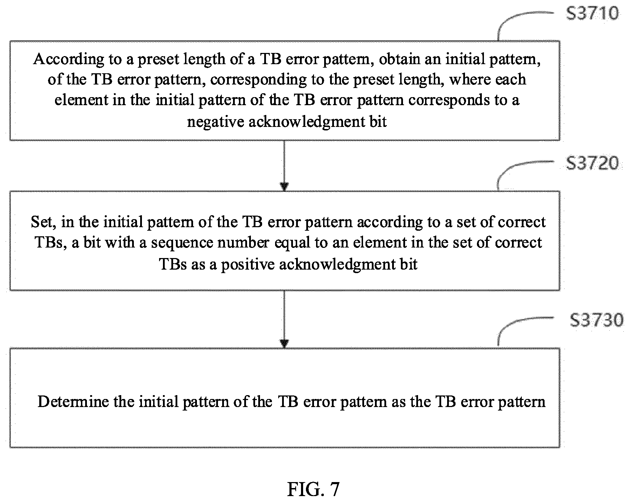

FIG. 7 is a flowchart of a method for determining a TB error pattern a provided by another embodiment of the present disclosure. As shown in FIG. 7, the TB error pattern a is determined by the following steps S3710, S3720, and S3730.

At S3710, according to a preset length of a TB error pattern, an initial pattern, of the TB error pattern, corresponding to the preset length is obtained, where each element in the initial pattern of the TB error pattern corresponds to a negative acknowledgment bit.

In some embodiments, the TB error pattern is set to be a sequence having a length of Na and each element being a "nack" bit, where Na is a size of an ordered set of TB identifiers.

At S3720, according to a set of correct TBs, in the initial pattern of the TB error pattern, a bit with a sequence number equal to an element in the set of correct TBs is set as a positive acknowledgment bit.

At S3730, the initial pattern of the TB error pattern is determined as the TB error pattern.

In some embodiments, according to a set of correct TBs, BI = {BI(1), BI(2), ..., BI(P)}, for i = 1, 2, ..., P, a BI(i)$^{th}$ bit in the initial pattern of the TB error pattern is set to a(BI(i)) = ack, and an updated initial pattern of the TB error pattern is the TB error pattern, where P is a quantity of correct TBs.

It can be understood that an "ack" bit is used to indicate that an acknowledgment state of a TB is positive acknowledgment ACK, and a "nack" bit is used to indicate that an acknowledgment state of a TB is negative acknowledgment NACK. In other words, a(i) = ack indicates that an acknowledgment state of a TB corresponding to an i$^{th}$ element in the ordered set of TB identifiers is positive acknowledgment ACK, and a(i) = nack indicates that an acknowledgment state of a TB corresponding to the i$^{th}$ element in the ordered set of TB identifiers is negative acknowledgment NACK.

In some embodiments, the "ack" bit is bit "1" and the "nack" bit is bit "0".

In some embodiments, the "ack" bit is bit "0" and the "nack" bit is bit "1".

In some embodiments, a length of a compressed codeword is determined according to a size of the ordered set of TB identifiers and the quantity of correct TBs.

In a particular embodiment, a length Nc of a compressed codeword c is greater than or equal to $\left\lceil \log_2 \binom{Na}{P} \right\rceil$, where Na represents the size of the ordered set of TB identifiers, P represents the quantity of correct TBs, $\left\lceil \log_2 \binom{Na}{P} \right\rceil$ is the smallest integer greater than or equal to $\log_2 \binom{Na}{P}$, and $\binom{Na}{P}$ is the number of combinations of Na choosing P. The compressed codeword c is obtained by arithmetic coding of mapping $\binom{Na}{P}$ bit sequences each having a length of Na and including P "ack" bits to a bit sequence with a length of $\left\lceil \log_2 \binom{Na}{P} \right\rceil$.

In some embodiments, the length of the compressed codeword is determined according to a length of the TB error pattern and the quantity of correct TBs.

In a particular embodiment, the length Nc of the compressed codeword c is equal to $\left\lceil \log_2 \binom{Na}{P} \right\rceil$, where Na represents the length of the TB error pattern a, P represents the quantity of correct TBs, $\left\lceil \log_2 \binom{Na}{P} \right\rceil$ is the smallest integer greater than or equal to $\log_2 \binom{Na}{P}$, and $\binom{Na}{P}$ is the number of combinations of Na choosing P.

In some embodiments, feedback information f includes $\left\lceil \log_2 (Pmax) \right\rceil$ bits for indicating the quantity P of correct TBs, where $\left\lceil \log_2 (Pmax) \right\rceil$ is the smallest integer greater than or equal to $\log_2(Pmax)$.

In some embodiments, when the quantity P of correct TBs is less than or equal to 1, the feedback information f includes an all-zero sequence with a length of $\left\lceil \log_2 (Pmax) \right\rceil$, where $\left\lceil \log_2 (Pmax) \right\rceil$ is the smallest integer greater than or equal to $\log_2(Pmax)$.

In some embodiments, the feedback information f includes $\lceil \log_2(Pmax+1) \rceil$ bits for indicating the quantity P of correct TBs, where $\lceil \log_2(Pmax+1) \rceil$ is the smallest integer greater than or equal to $\log_2(Pmax+1)$.

In some embodiments, the feedback information f includes an all-zero sequence with a length of

$$\left\lceil \log_2\binom{Na}{Pmax} \right\rceil - \left\lceil \log_2\binom{Na}{P} \right\rceil$$

, where $\left\lceil \log_2\binom{Na}{Pmax} \right\rceil$ is the smallest integer greater than or equal to

$\log_2\binom{Na}{Pmax}$, $\binom{Na}{Pmax}$ is the number of combinations of Na choosing Pmax, $\left\lceil \log_2\binom{Na}{P} \right\rceil$ is the smallest

integer greater than or equal to $\log_2\binom{Na}{P}$, and $\binom{Na}{P}$ is the number of combinations of Na choosing P.

In some embodiments, a length Nf of the feedback information f is determined according to at least one of the following parameters: a maximum quantity of correct TBs, the quantity of correct TBs, the size of the ordered set of TB identifiers, or the length of the TB error pattern.

In some embodiments, the length of the feedback information f is $\left\lceil \log_2\binom{Na}{P} \right\rceil$.

In some embodiments, the length of the feedback information f is $\left\lceil \log_2(Pmax) \right\rceil + \left\lceil \log_2\binom{Na}{P} \right\rceil$.

In some embodiments, the length of the feedback information f is $\left\lceil \log_2(Pmax+1) \right\rceil + \left\lceil \log_2\binom{Na}{P} \right\rceil$.

In some embodiments, the length of the feedback information f is $\left\lceil \log_2(Pmax) \right\rceil + \left\lceil \log_2\binom{Na}{Pmax} \right\rceil$.

In some embodiments, the length of the feedback information f is $\left\lceil \log_2(Pmax+1) \right\rceil + \left\lceil \log_2\binom{Na}{Pmax} \right\rceil$.

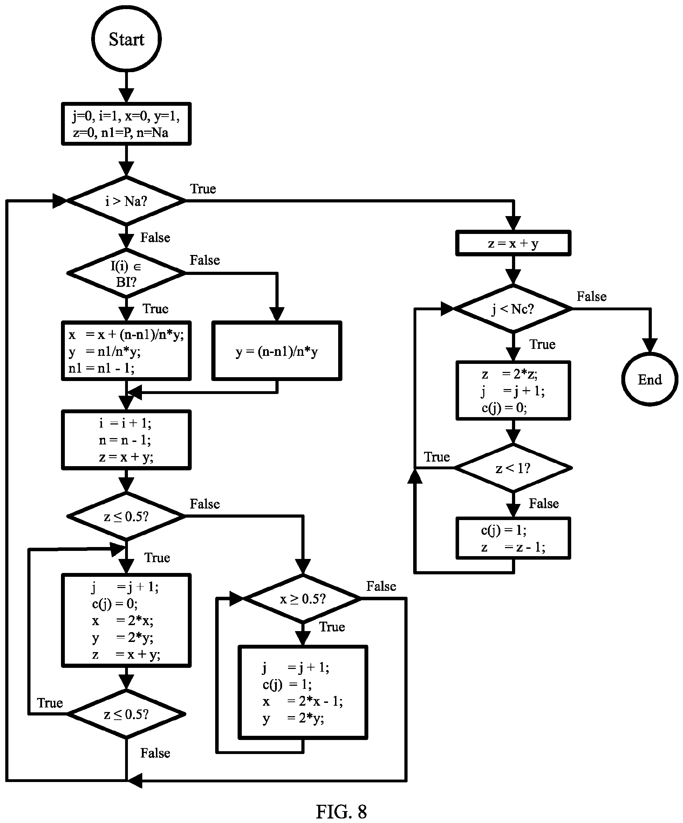

FIG. 8 is a flowchart of determining a compressed codeword according to a set of identifiers of correct TBs provided by an embodiment of the present disclosure. As shown in FIG. 8, BI is a set of identifiers of correct TBs, P is a quantity of correct TBs, I(1), I(2), ..., I(Na) are Na elements included in an ordered set of TB identifiers, and Na is a size of the ordered set of TB identifiers. In the method block diagram, bit representation of a compressed codeword c with a length of

$$\left\lceil \log_2\binom{Na}{P} \right\rceil$$ is finally output, where $\left\lceil \log_2\binom{Na}{P} \right\rceil$ is the smallest integer greater than or equal to $\log_2\binom{Na}{P}$,

and $\binom{Na}{P}$ is the number of combinations of Na choosing P.

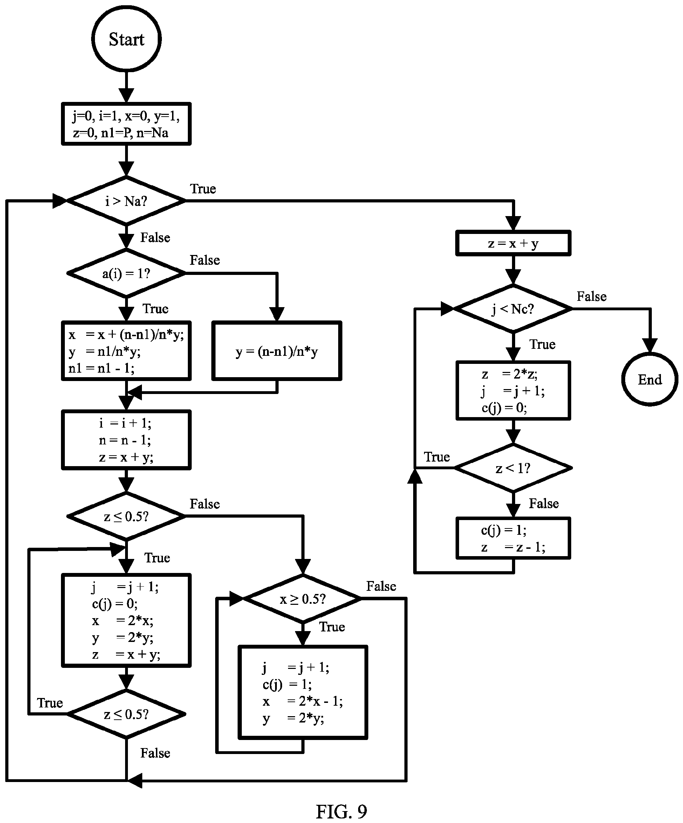

FIG. 9 is a flowchart of determining a compressed codeword according to a TB error pattern provided by another embodiment of the present disclosure. As shown in FIG. 9, Na is a length of a TB error pattern a, and P is a quantity of correct TBs. In the method block diagram, bit representation of a compressed codeword c with a length of $\left\lceil \log_2\binom{Na}{P} \right\rceil$

is finally output, where $\left\lceil \log_2 \binom{Na}{P} \right\rceil$ is the smallest integer greater than or equal to $\log_2 \binom{Na}{P}$, and $\binom{Na}{P}$ is the number of combinations of Na choosing P.

In some embodiments, the compressed codeword is determined as feedback information.

In some embodiments, the compressed codeword and an all-zero sequence are concatenated to obtain the feedback information.

In some embodiments, a bit sequence of the quantity of correct TBs, the compressed codeword, and an all-zero sequence are concatenated to obtain the feedback information. The bit sequence of the quantity of correct TBs is obtained by the following method. Details are provided below.

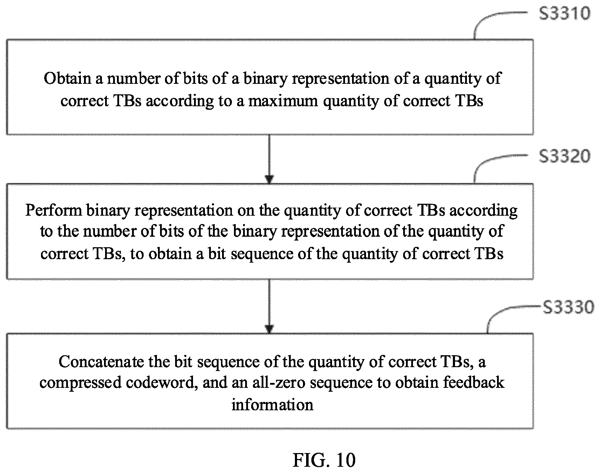

FIG. 10 is a flowchart of a method for determining feedback information provided by an embodiment of the present disclosure. As shown in FIG. 10, feedback information f is determined by the following steps S3310, S3320, and S3330.

At S3310, a number of bits of a binary representation of a quantity of correct TBs are obtained according to a maximum quantity of correct TBs.

At S3320, binary representation is performed on the quantity of correct TBs according to the number of bits of the binary representation of the quantity of correct TBs, to obtain a bit sequence of the quantity of correct TBs.

At S3330, the bit sequence of the quantity of correct TBs, a compressed codeword, and an all-zero sequence are concatenated to obtain the feedback information.

In some embodiments, channel coding is performed on the feedback information to obtain a first coding sequence.

It should be noted that the channel coding may be, but is not limited to, polar coding, low-density parity check (LDPC) coding, convolutional coding, turbo coding, Reed-Muller (RM) coding, Reed-Solomon (RS) coding, Bose-Chaudhuri-Hocquenghem (BCH) coding, concatenated coding, cyclic coding, block coding, Hamming coding, Golay coding, repetition coding, single-parity-check (SPC) coding, cyclic redundancy check coding, superposition coding, sparse superposition coding, sparse regression coding, lattice coding, algebraic geometric coding, Goppa coding, polarization-adjusted convolutional (PAC) coding, pre-transformed polar coding, or parity-check polar coding.

Example 1:

In this example, a first node is a base station and a second node is a terminal device. This example includes a plurality of terminal devices which form a sequence of second nodes, and a TB identifier is a UE identifier. The following illustrates a process in which feedback information f is not sent in response to a quantity of correct TBs being 0.

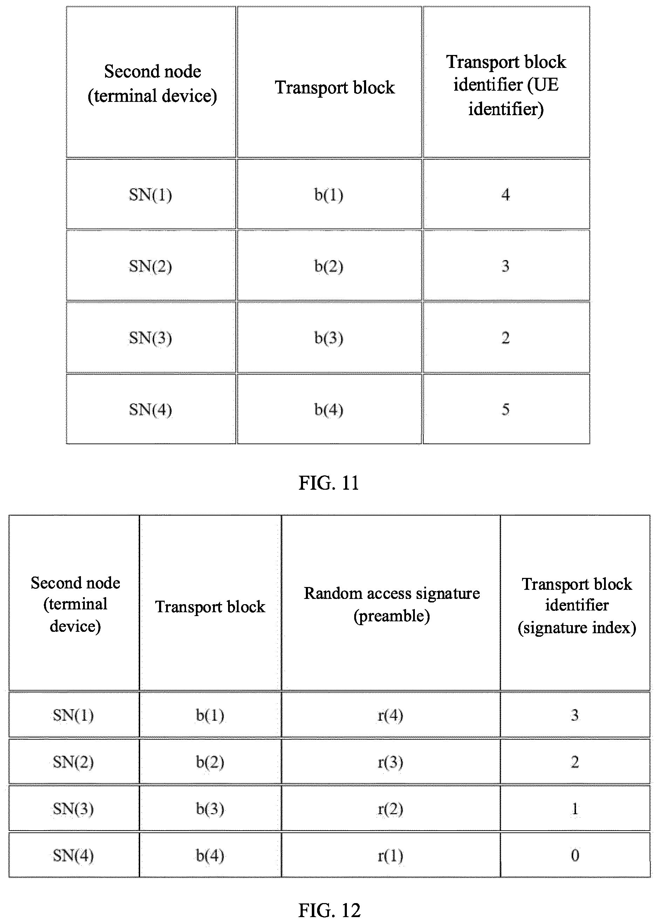

FIG. 11 is a schematic diagram of a relationship among a second node, a TB, and a UE identifier provided by an example of the present disclosure. As shown in FIG. 11, the base station receives a signal, including a TB set B, sent by a sequence of terminal devices. The sequence of terminal devices includes Nu = 4 terminal devices: SN(1), SN(2), SN(3), and SN(4), and the TB set B includes Nb = 4 TBs: b(1), b(2), b(3), and b(4). The signal including the TB set B includes: a signal including the TB b(1), a signal including the TB b(2), a signal including the TB b(3), and a signal including the TB b(4).

In this example, for t = 1, 2, 3, 4, a TB b(t) in the TB set B is sent to the base station by a terminal device SN(t) in the sequence of terminal devices. The TB b(t) in the TB set B corresponds to a UE identifier of the terminal device SN(t), and the UE identifier of the terminal device SN(t) is an RA-RNTI. UE identifiers of the terminal devices SN(1), SN(2), SN(3) and SN(4) are 4, 3, 2 and 5, respectively, where the UE identifiers 4, 3, 2, and 5 are elements of an ordered set of TB identifiers including Na = 8 UE identifiers 0, 1, 2, 3, 4, 5, 6, and 7.

In this example, a maximum quantity of correct TBs Pmax = 3 is configured by the base station. A set of identifiers of correct TBs is a set of UE identifiers included in correctly-received TBs in the TB set. In this example, the base station determines, according to the signal including the TB set B, that the set of identifiers of correct TBs is an empty set Φ, that is, the quantity P of correct TBs is equal to 0. Then the base station determines, according to the set of identifiers of correct TBs being the empty set Φ (or the quantity P of correct TBs equal to 0), that a length Nf of the feedback information f is equal to 0 and the feedback information f is an empty sequence. Correspondingly, the base station determines that a signal including the feedback information f is a zero power signal.

The base station then sends the zero power signal including the feedback information f to the sequence of terminal devices SN(1), SN(2), SN(3), SN(4). The sequence of terminal devices SN(1), SN(2), SN(3), SN(4) receives the zero power signal including the feedback information f. Those having ordinary skill in the art will understand that for t = 1, 2, 3, 4, in response to the terminal device SN(t) failing in decoding, acknowledgment of the TB b(t) is determined to be negative acknowledgment NACK.

Example 2:

A difference between this example and Example 1 is that in this example, a TB identifier is an index value of a UE identifier. An ordered set of UE identifiers ID = <ID(1), ID(2), ID(3), ID(4)> = <0, 11, 20, 30>, and a corresponding ordered set of TB identifiers I = <I(1), I(2), I(3), I(4)> = <0, 1, 2, 3>. An index value of a UE identifier with element ID(1) = 0 in the ordered set of UE identifiers is an element I(1) = 0 in the ordered set of TB identifiers. An index value of a UE identifier with element ID(2) = 11 in the ordered set of UE identifiers is an element I(2) = 1 in the ordered set of TB identifiers. An index value of a UE identifier with element ID(3) = 20 in the ordered set of UE identifiers is an element I(3) = 2 in the ordered set of TB identifiers. An index value of a UE identifier with element ID(4) = 30 in the ordered set of UE identifiers is an element I(4) = 3 in the ordered set of TB identifiers. A size Na of the ordered set of TB identifiers is equal to 4, i.e. Na = 4.

Another difference between this example and Example 1 is that in this example, UE identifiers of terminal devices SN(1), SN(2), SN(3), SN(4) are 0, 11, 20 and 30, respectively, where the UE identifiers 0, 11, 20, and 30 are elements of the ordered set ID of UE identifiers.

Example 3:

A difference between this example and Example 1 is that in this example, a TB identifier is a signature index, which is an element of an ordered set of TB identifiers including Na = 6 signature indexes 0, 1, 2, 3, 4, and 5. A set of identifiers of correct TBs is a set of signature indexes of random access signatures included in correctly-received TBs in a TB set.

FIG. 12 is a schematic diagram of a relationship among a second node, a TB, a random access signature, and a signature index provided by an example of the present disclosure. Another difference between this example and Example 1 is that in this example, as shown in FIG. 12, for t = 1, 2, 3, 4, a TB b(t) in a TB set B includes random access signatures, where the random access signatures are preambles. Random access signatures included in TBs b(1), b(2), b(3) and b(4) are respectively preambles r(4), r(3), r(2) and r(1) determined by terminal devices SN(1), SN(2), SN(3) and SN(4) according to higher layer parameters. Here, the preambles r(4), r(3), r(2) and r(1) are elements of an ordered set of random access signatures. The ordered set of random access signatures includes Na = 6 preambles r(1), r(2), r(3), r(4), r(5), and r(6), where signature indexes of the preambles r(1), r(2), r(3), r(4), r(5) and r(6) are respectively Na = 6 signature indexes 0, 1, 2, 3, 4, and 5 included in the ordered set of TB identifiers.

Example 4:

A difference between this example and Example 1 is that in this example, for t = 1, 2, 3, 4, a UE identifier of a terminal device SN(t) is a TC-RNTI. An ordered set of TB identifiers includes Na = 7 UE identifiers 1, 2, 3, 4, 5, 6, and 7.

Another difference between this example and Example 1 is that in this example, a base station determines the following according to a signal including a TB set B: a set of identifiers of correct TBs is a set BI = {2, 3}, and a quantity P of correct TBs is equal to 2.

Another difference between this example and Example 1 is that in this example, feedback information f is determined by the base station according to the following parameters: a set of identifiers of correct TBs BI = {2, 3}, the quantity of correct TBs P = 2, a size of the ordered set of TB identifiers Na = 7, and a maximum quantity of correct TBs Pmax = 3.

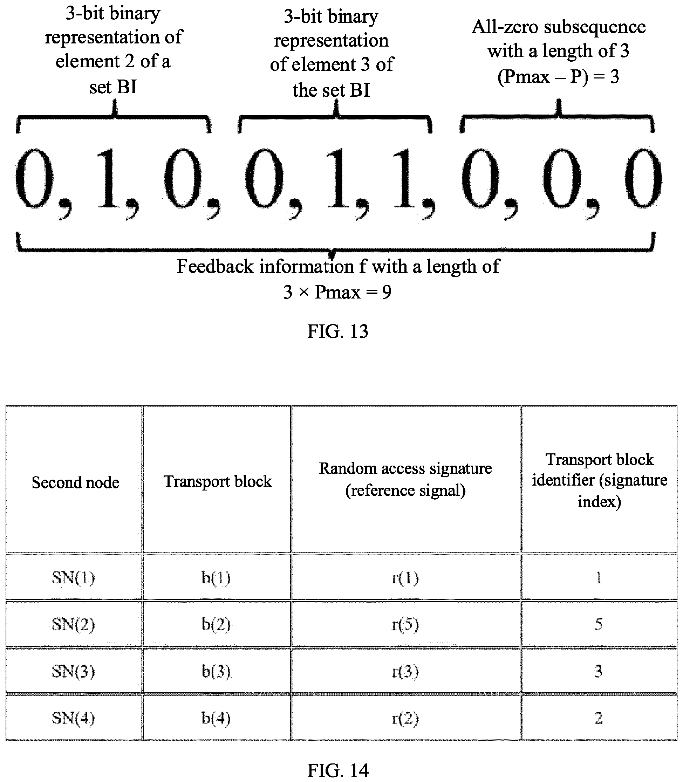

FIG. 13 is a schematic diagram of determining feedback information according to a set of identifiers of correct TBs provided by an example of the present disclosure. As shown in FIG. 13, a method for determining feedback information f is as follows:

- the base station determines that the binary representations of $\lceil \log_2(Na) \rceil = \lceil \log_2 7 \rceil = 3$ bits of P = 2 elements in the set of identifiers of correct TBs BI = {2, 3} are [0, 1, 0] and [0, 1, 1], respectively;

- the base station concatenates [0, 1, 0] and [0, 1, 1] to obtain a compressed sequence d = [0, 1, 0, 0, 1, 1] with a length of $P \cdot \lceil \log_2(Na) \rceil = 2 \times \lceil \log_2 7 \rceil = 6$ ; and

- the base station concatenates the compressed sequence d = [0, 1, 0, 0, 1, 1] and an all-zero sequence [0, 0, 0] with a length of $(Pmax-P) \cdot \lceil \log_2(Na) \rceil = (3-2) \times \lceil \log_2 7 \rceil = 3$ to obtain feedback information f = [0, 1, 0, 0, 1, 1, 0, 0, 0] with a length of $Nf = Pmax \cdot \lceil \log_2(Na) \rceil = 3 \times \lceil \log_2 7 \rceil = 9$ .

Another difference between this example and Example 1 is that in this example, the base station sends a signal including the feedback information f = [0, 1, 0, 0, 1, 1, 0, 0, 0] to a sequence of terminal devices SN(1), SN(2), SN(3), SN(4). The sequence of terminal devices SN(1), SN(2), SN(3), SN(4) receives the signal including the feedback information f. Terminal devices SN(1), SN(2), SN(3), and SN(4) separately decode the signal including the feedback information f, and determine acknowledgment of TBs b(1), b(2), b(3), and b(4), respectively, according to the following method.

If the terminal device SN(1) fails in decoding, the terminal device SN(1) determines that acknowledgment of the TB b(1) is negative acknowledgment NACK. If the terminal device SN(1) performs decoding successfully and obtains the feedback information f, the terminal device SN(1) judges every $\lceil \log_2(Na) \rceil = \lceil \log_2 7 \rceil = 3$ bits of the feedback information f obtained through decoding. When it's judged that there is no UE identifier 4 of the terminal device SN(1) included in the feedback information f, the terminal device SN(1) determines that acknowledgment of the TB b(1) is negative acknowledgment NACK.

If the terminal device SN(2) fails in decoding, the terminal device SN(2) determines that acknowledgment of the TB b(2) is negative acknowledgment NACK. If the terminal device SN(2) performs decoding successfully and obtains the feedback information f, the terminal device SN(2) judges every $\lceil \log_2(Na) \rceil = \lceil \log_2 7 \rceil = 3$ bits of the feedback information f obtained through decoding. When it's judged that the fourth to sixth bits include a UE identifier 3 of the terminal device SN(2), the terminal device SN(2) determines that acknowledgment of the TB b(2) is positive acknowledgment ACK.

If the terminal device SN(3) fails in decoding, the terminal device SN(3) determines that acknowledgment of the TB b(3) is negative acknowledgment NACK. If the terminal device SN(3) performs decoding successfully and obtains the feedback information f, the terminal device SN(3) judges every $\lceil \log_2(Na) \rceil = \lceil \log_2 7 \rceil = 3$ bits of the feedback information f obtained through decoding. When it's judged that the first to third bits include a UE identifier 2 of the terminal device SN(3), the terminal device SN(3) determines that acknowledgment of the TB b(3) is positive acknowledgment ACK.

If the terminal device SN(4) fails in decoding, the terminal device SN(4) determines that acknowledgment of the TB b(4) is negative acknowledgment NACK. If the terminal device SN(4) performs decoding successfully and obtains the feedback information f, the terminal device SN(4) judges every $\lceil \log_2(Na) \rceil = \lceil \log_2 7 \rceil = 3$ bits of the feedback information f obtained through decoding. When it's judged that there is no UE identifier 5 of the terminal device SN(4) included in the feedback information f, the terminal device SN(4) determines that acknowledgment of the TB b(4) is negative acknowledgment NACK.

In the information transmission method provided by the above example, a value 0 of the UE identifier is excluded, to prevent the following case: the feedback information f always includes an all-zero sequence of $\lceil \log_2(Na) \rceil$ bits when P < Pmax, resulting in the feedback information f including the UE identifier 0 regardless of whether a TB including the UE identifier 0 is correctly decoded or not, which causes the terminal device to always determine that acknowledgment of the TB including the UE identifier 0 is positive acknowledgment ACK, leading to false determination of the terminal device.

Example 5:

A difference between this example and Example 4 is that in this example, a TB identifier is a signature index, where the signature index is an element of an ordered set of TB identifiers including Na = 7 signature indexes 1, 2, 3, 4, 5, 6, and 7.

FIG. 14 is a schematic diagram of a relationship among a second node, a TB, a random access signature, and a signature index provided by an example of the present disclosure. As shown in FIG. 14, another difference between this example and Example 4 is that in this example, as shown in FIG. 14, for t = 1, 2, 3, 4, a TB b(t) in a TB set B includes random access signatures, where the random access signatures are reference signals. Random access signatures included in TBs b(1), b(2), b(3) and b(4) are respectively reference signals r(1), r(5), r(3) and r(2) determined by terminal devices SN(1), SN(2), SN(3) and SN(4) according to higher layer parameters. The reference signals r(1), r(5), r(3) and r(2) are elements of an ordered set of random access signatures. The ordered set of random access signatures includes Na = 7 reference signals r(1), r(2), r(3), r(4), r(5), r(6), r(7), where signature indexes of the reference signals r(1), r(2), r(3), r(4), r(5), r(6), r(7) are respectively Na = 7 signature indexes 1, 2, 3, 4, 5, 6, and 7 included in the ordered set of TB identifiers.

Another difference between this example and Example 4 is that in this example, a set of identifiers of correct TBs is a set of signature indexes of random access signatures included in correctly-received TBs in the TB set.

In this example, terminal devices SN(1), SN(2), SN(3), and SN(4) separately decode a signal including feedback information f, and determine acknowledgment of the TBs b(1), b(2), b(3), and b(4), respectively, according to the following method.

If the terminal device SN(1) fails in decoding, the terminal device SN(1) determines that acknowledgment of the TB b(1) is negative acknowledgment NACK. If the terminal device SN(1) performs decoding successfully and obtains the feedback information f, the terminal device SN(1) judges every $\lceil \log_2(\mathrm{Na}) \rceil = \lceil \log_2 7 \rceil = 3$ bits of the feedback information f obtained through decoding. When it's judged that there is no signature index 1, of a random access signature included in the TB b(1), the terminal device SN(1) determines that acknowledgment of the TB b(1) is negative acknowledgment NACK.

If the terminal device SN(2) fails in decoding, the terminal device SN(2) determines that acknowledgment of the TB b(2) is negative acknowledgment NACK. If the terminal device SN(2) performs decoding successfully and obtains the feedback information f, the terminal device SN(2) judges every $\lceil \log_2(\mathrm{Na}) \rceil = \lceil \log_2 7 \rceil = 3$ bits of the feedback information f obtained through decoding. When it's judged that there is no signature index 5, of a random access signature included in the TB b(2), the terminal device SN(2) determines that acknowledgment of the TB b(2) is negative acknowledgment NACK.

If the terminal device SN(3) fails in decoding, the terminal device SN(3) determines that acknowledgment of the TB b(3) is negative acknowledgment NACK. If the terminal device SN(3) performs decoding successfully and obtains the feedback information f, the terminal device SN(3) judges every $\lceil \log_2(\mathrm{Na}) \rceil = \lceil \log_2 7 \rceil = 3$ bits of the feedback information f obtained through decoding. When it's judged that the fourth to sixth bits include a signature index 3, of a random access signature included in the TB b(3), the terminal device SN(3) determines that acknowledgment of the TB b(3) is positive acknowledgment ACK.

If the terminal device SN(4) fails in decoding, the terminal device SN(4) determines that acknowledgment of the TB b(4) is negative acknowledgment NACK. If the terminal device SN(4) performs decoding successfully and obtains the feedback information f, the terminal device SN(4) judges every $\lceil \log_2(\mathrm{Na}) \rceil = \lceil \log_2 7 \rceil = 3$ bits of the feedback information f obtained through decoding. When it's judged that the first to third bits include a signature index 2, of a random access signature included in the TB b(4), the terminal device SN(4) determines that acknowledgment of the TB b(4) is positive acknowledgment ACK.

In the information transmission methods provided in Examples 4 and 5, by directly transmitting binary representations of elements in the set of identifiers of correct TBs, a compression and decoding process is less complex, and information transmission efficiency can be improved.

Example 6:

In this example, a first node is a relay and a second node is a terminal device. This example includes a plurality of terminal devices which form a sequence of second nodes, and a TB identifier is a UE identifier.

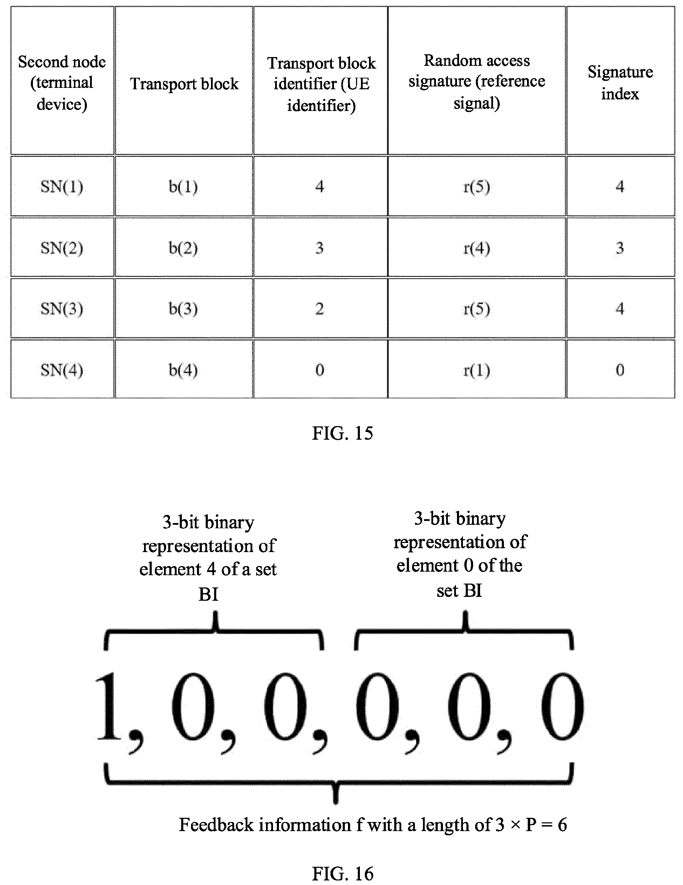

FIG. 15 is a schematic diagram of a relationship among a second node, a TB, a UE identifier, a random access signature, and a signature index provided by an example of the present disclosure. As shown in FIG. 15, the relay receives a signal, including a TB set B, sent by a sequence of terminal devices. The sequence of terminal devices includes Nu = 4 terminal devices: SN(1), SN(2), SN(3), and SN(4), and the TB set B includes Nb = 4 TBs: b(1), b(2), b(3), and b(4). The signal including the TB set B includes: a signal including the TB b(1), a signal including the TB b(2), a signal including the TB b(3), and a signal including the TB b(4).

For t = 1, 2, 3, 4, a TB b(t) in the TB set B is sent to the relay by a terminal device SN(t) in the sequence of terminal devices. The TB b(t) in the TB set B includes a random access signature and a UE identifier of the terminal device SN(t). Here, a UE identifier of the terminal device SN(t) is a C-RNTI. UE identifiers of the terminal devices SN(1), SN(2), SN(3) and SN(4) are 4, 3, 2 and 0, respectively, where the UE identifiers 4, 3, 2, and 0 are elements of an ordered set of TB identifiers including Na = 8 UE identifiers 0, 1, 2, 3, 4, 5, 6, and 7. For t = 1, 2, 3, 4, the random access signature included by the TB b(t) is a spread spectrum sequence, where the spread spectrum sequence is an element of an ordered set of random access signatures. The ordered set of random access signatures includes six spread spectrum sequences r(1), r(2), r(3), r(4), r(5), and r(6), where signature indexes of the spread spectrum sequences r(1), r(2), r(3), r(4), r(5) and r(6) are 0, 1, 2, 3, 4 and 5, respectively. Random access signatures included in the TBs b(1), b(2), b(3), b(4) are spread spectrum sequences determined by the terminal devices SN(1), SN(2), SN(3), SN(4) according to the UE identifiers 4, 3, 2, 0 of the terminal devices SN(1), SN(2), SN(3), SN(4) using the following formula.

A signature index of a spread spectrum sequence included in the TB b(t) = a remainder obtained by dividing the square of the UE identifier of the terminal device SN(t) by 6.

The UE identifiers 4, 3, 2 and 0 of the terminal devices SN(1), SN(2), SN(3) and SN(4) are substituted into the above formula, to obtain spread spectrum sequences r(5), r(4), r(5) and r(1), respectively, of the terminal devices SN(1), SN(2), SN(3) and SN(4).

In this example, a maximum quantity of correct TBs Pmax = 3 is configured by using a higher layer parameter. In this example, a set of identifiers of correct TBs is a set of UE identifiers included in correctly-received TBs in the TB set. In this example, the relay determines the following according to the signal including the TB set B: the set of identifiers of correct TBs is a set BI = {4, 0}, and a quantity P of correct TBs is equal to 2. Feedback information f is determined by the relay according to the following parameters: a set BI of identifiers of correct TBs, the quantity of correct TB P = 2, or the size of the ordered set of TB identifiers Na = 8.

FIG. 16 is a schematic diagram of determining feedback information according to a set of identifiers of correct TBs provided by an example of the present disclosure. As shown in FIG. 16, a method for determining the feedback information f is as follows:

- the relay determines that the binary representations of $\left\lceil \log_2(Na) \right\rceil = \left\lceil \log_2 8 \right\rceil = 3$ bits of P = 2 elements in the set of identifiers of correct TBs BI = {4, 0} are [1, 0, 0] and [0, 0, 0], respectively;

- the relay concatenates [1, 0, 0] and [0, 0, 0] to obtain feedback information f = [1, 0, 0, 0, 0, 0] with a length of $P \cdot \left\lceil \log_2(Na) \right\rceil = 2 \times \left\lceil \log_2 8 \right\rceil = 6$ ; and

- the relay sends a signal including the feedback information f= [1, 0, 0, 0, 0, 0] to the sequence of terminal devices <SN(1), SN(2), SN(3), SN(4)>. The sequence of terminal devices <SN(1), SN(2), SN(3), SN(4)> receives the signal including the feedback information f. The terminal devices SN(1), SN(2), SN(3), and SN(4) separately decode the signal including the feedback information f, and determine acknowledgment of the TBs b(1), b(2), b(3), and b(4), respectively, according to the following method.

If the terminal device SN(1) fails in decoding, the terminal device SN(1) determines that acknowledgment of the TB b(1) is negative acknowledgment NACK. If the terminal device SN(1) performs decoding successfully and obtains the feedback information f, the terminal device SN(1) judges every $\left\lceil \log_2(Na) \right\rceil = \left\lceil \log_2 8 \right\rceil = 3$ bits of the feedback information f obtained through decoding. When it's judged that the first to third bits include the UE identifier 4 of the terminal device SN(1), the terminal device SN(1) determines that acknowledgment of the TB b(1) is positive acknowledgment ACK.

If the terminal device SN(2) fails in decoding, the terminal device SN(2) determines that acknowledgment of the TB b(2) is negative acknowledgment NACK. If the terminal device SN(2) performs decoding successfully and obtains the feedback information f, the terminal device SN(2) judges every $\left\lceil \log_2(Na) \right\rceil = \left\lceil \log_2 8 \right\rceil = 3$ bits of the feedback information f obtained through decoding. When it's judged that there is no UE identifier 3 of the terminal device SN(2) included in the feedback information f, the terminal device SN(2) determines that acknowledgment of the TB b(2) is negative acknowledgment NACK.

If the terminal device SN(3) fails in decoding, the terminal device SN(3) determines that acknowledgment of the TB b(3) is negative acknowledgment NACK. If the terminal device SN(3) performs decoding successfully and obtains the feedback information f, the terminal device SN(3) judges every $\left\lceil \log_2(Na) \right\rceil = \left\lceil \log_2 8 \right\rceil = 3$ bits of the feedback information f obtained through decoding. When it's judged that there is no UE identifier 2 of the terminal device SN(3) included in the feedback information f, the terminal device SN(3) determines that acknowledgment of the TB b(3) is negative acknowledgment NACK.

If the terminal device SN(4) fails in decoding, the terminal device SN(4) determines that acknowledgment of the TB b(4) is negative acknowledgment NACK. If the terminal device SN(4) performs decoding successfully and obtains the feedback information f, the terminal device SN(4) judges every $\left\lceil \log_2(Na) \right\rceil = \left\lceil \log_2 8 \right\rceil = 3$ bits of the feedback information f obtained through decoding. When it's judged that the fourth to sixth bits are the UE identifier 0 of the terminal device SN(4), the terminal device SN(4) determines that acknowledgment of the TB b(4) is positive acknowledgment ACK.

In the information transmission method provided by this example, using TB identifiers as UE identifiers has the advantage that when the random access signatures of the terminal devices SN(1) and SN(3) are the same, acknowledgment signals of TBs of the different terminal devices can still be distinguished in the feedback information f. Compared with Example 4, this example skips zero-padding on the feedback information f, such that a length of the feedback information f is reduced from 9 to 6 under the condition that one UE identifier occupies 3 bits. In addition, the UE identifier 0 can be used without false determination of the feedback information f. With the same channel resources, a receiving power of the terminal device can be reduced and coverage can be improved. In this example, the UE identifier included in the correct TB is directly fed back without zero-padding, such that a compression process is simple and a code rate is further reduced, thereby improving performance.

Example 7:

A difference between this example and Example 6 is that in this example, a TB identifier is a signature index, where the signature index is an element of an ordered set of TB identifiers including Na = 6 TB identifiers 0, 1, 2, 3, 4, and 5.

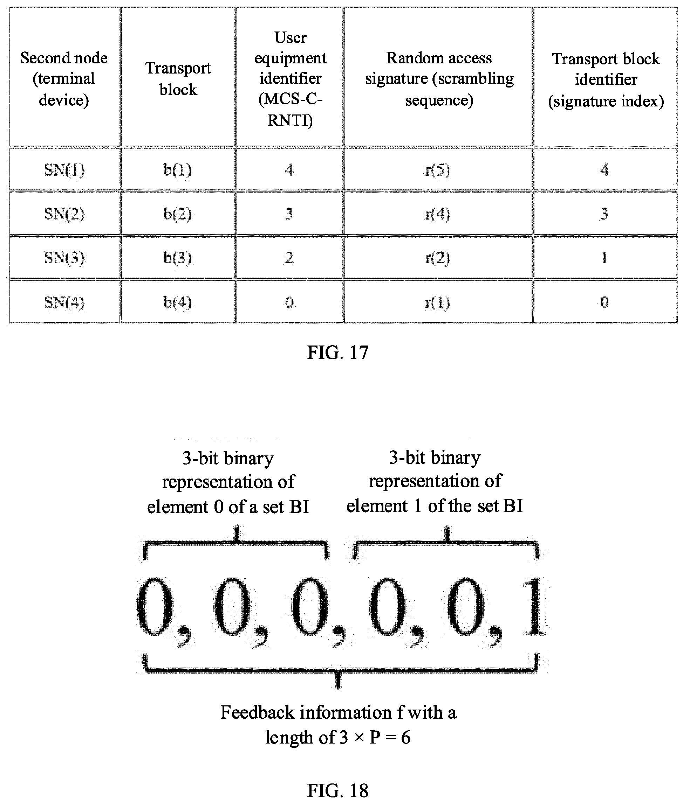

FIG. 17 is a schematic diagram of a relationship among a second node, a TB, a UE identifier, a random access signature, and a signature index provided by an example of the present disclosure. Another difference between this example and Example 6 is that, as shown in FIG. 17, for t = 1, 2, 3, 4, a UE identifier of a terminal device SN(t) is an MCS-C-RNTI. A random access signature included in a TB b(t) is a scrambling sequence, where the scrambling sequence is an element of an ordered set of random access signatures. The ordered set of random access signatures includes Na = 6 scrambling sequences r(1), r(2), r(3), r(4), r(5), and r(6), where signature indexes of the scrambling sequences r(1), r(2), r(3), r(4), r(5) and r(6) are respectively TB identifiers 0, 1, 2, 3, 4, and 5 included in the ordered set of TB identifiers. Random access signatures included in TBs b(1), b(2), b(3), b(4) are scrambling sequences separately determined according to the UE identifier of the terminal device SN(t) by the following method.

Terminal devices SN(1), SN(2), SN(3), and SN(4) respectively use UE identifiers 4, 3, 2 and 0 of the terminal devices SN(1), SN(2), SN(3) and SN(4) as a part of a random number seed of a pseudo-random sequence generator (PRSG), to obtain signature indexes 4, 3, 1, and 0, respectively, of random access signatures of the terminal devices SN(1), SN(2), SN(3), and SN(4), and obtain the random access signatures r(5), r(4), r(2), and r(1), respectively, included in the TBs b(1), b(2), b(3), and b(4).

Another difference between this example and Example 6 is that in this example, a set of identifiers of correct TBs is a set of signature indexes of random access signatures included in correctly-received TBs in a TB set. In this example, a relay determines the following according to a signal including a TB set B: the set of identifiers of correct TBs is a set BI = {1, 0}, and a quantity P of correct TBs is equal to 2. Feedback information f is determined by the relay according to the following parameters: a set BI of identifiers of correct TBs, the quantity of correct TB P = 2, or a size of an ordered set of TB identifiers Na = 6.

FIG. 18 is a schematic diagram of determining feedback information according to a set of identifiers of correct TBs provided by an example of the present disclosure. As shown in FIG. 18, a method for determining feedback information f is as follows:

- the relay determines that the binary representations of $\left\lceil \log_2(\text{Na}) \right\rceil = \left\lceil \log_2 6 \right\rceil = 3$ bits of P = 2 elements in the set of identifiers of correct TBs BI = {1, 0} are [0, 0, 1] and [0, 0, 0], respectively; and
- the relay concatenates [0, 0, 1] and [0, 0, 0] to obtain feedback information f = [0, 0, 0, 0, 0, 1] with a length of

$$P \cdot \left\lceil \log_2(\text{Na}) \right\rceil = 2 \times \left\lceil \log_2 6 \right\rceil = 6$$

Another difference between this example and Example 6 is that in this example, the relay sends a signal including the feedback information f = [0, 0, 0, 0, 0, 1] to a sequence of terminal devices <SN(1), SN(2), SN(3), SN(4)>. The terminal devices SN(1), SN(2), SN(3), and SN(4) separately receive and decode the signal including the feedback information f, and determine acknowledgment of the TBs b(1), b(2), b(3), and b(4), respectively, according to the following method.

If the terminal device SN(1) fails in decoding, the terminal device SN(1) determines that acknowledgment of the TB b(1) is negative acknowledgment NACK. If the terminal device SN(1) performs decoding successfully and obtains the feedback information f, the terminal device SN(1) judges every $\left\lceil \log_2(\text{Na}) \right\rceil = \left\lceil \log_2 6 \right\rceil = 3$ bits of the feedback information f obtained through decoding. When it's judged that there is no signature index 4, of the random access signature r(5) included in the TB b(1), included in the feedback information f, the terminal device SN(1) determines that acknowledgment of the TB b(1) is negative acknowledgment NACK.

If the terminal device SN(2) fails in decoding, the terminal device SN(2) determines that acknowledgment of the TB b(2) is negative acknowledgment NACK. If the terminal device SN(2) performs decoding successfully and obtains the feedback information f, the terminal device SN(2) judges every $\lceil \log_2(Na) \rceil = \lceil \log_2 6 \rceil = 3$ bits of the feedback information f obtained through decoding. When it's judged that there is no signature index 3, of the random access signature r(4) included in the TB b(2), included in the feedback information f, the terminal device SN(2) determines that acknowledgment of the TB b(2) is negative acknowledgment NACK.

If the terminal device SN(3) fails in decoding, the terminal device SN(3) determines that acknowledgment of the TB b(3) is negative acknowledgment NACK. If the terminal device SN(3) performs decoding successfully and obtains the feedback information f, the terminal device SN(3) judges every $\lceil \log_2(Na) \rceil = \lceil \log_2 6 \rceil = 3$ bits of the feedback information f obtained through decoding. When it's judged that the fourth to sixth bits include a signature index 1, of the random access signature r(2) included in the TB b(3), the terminal device SN(3) determines that acknowledgment of the TB b(3) is positive acknowledgment ACK.

If the terminal device SN(4) fails in decoding, the terminal device SN(4) determines that acknowledgment of the TB b(4) is negative acknowledgment NACK. If the terminal device SN(4) performs decoding successfully and obtains the feedback information f, the terminal device SN(4) judges every $\lceil \log_2(Na) \rceil = \lceil \log_2 6 \rceil = 3$ bits of the feedback information f obtained through decoding. When it's judged that the first to third bits include the signature index 0, of the random access signature r(1) included in the TB b(4), the terminal device SN(4) determines that acknowledgment of the TB b(4) is positive acknowledgment ACK.

In the information transmission method provided by this example, by selecting random access signatures using a pseudo-random sequence, a probability that random access signatures of different users are the same is reduced. Further, compared with Example 5, this example skips zero-padding on the feedback information f, such that a length of the feedback information f is reduced from 9 to 6 under the condition that one signature index occupies 3 bits. With the same channel resources, a channel code rate is reduced, a receiving power of the relay can be reduced, and coverage can be improved. In addition, an element in the set BI of identifiers of correct TBs may be at any position in the feedback information f. In this example, the signature index of the random access signature included in the correct TB is directly fed back without zero-padding, such that a compression process is simple and a channel code rate is further reduced, thereby improving performance.

Example 8:

In this example, a first node is a base station and a second node is a terminal device. This example includes a plurality of terminal devices which form a sequence of terminal devices, and a TB identifier is a UE identifier.

As shown in FIG. 11, the base station receives a signal, including a TB set B, sent by a sequence of terminal devices. The sequence of terminal devices includes Nu = 4 terminal devices: SN(1), SN(2), SN(3), and SN(4), and the TB set B includes Nb = 4 TBs: b(1), b(2), b(3), and b(4). the signal including the TB set B includes: a signal including the TB b(1), a signal including the TB b(2), a signal including the TB b(3), and a signal including the TB b(4).

In this example, for t = 1, 2, 3, 4, a TB b(t) in the TB set B is sent to the base station by a terminal device SN(t) in the sequence of terminal devices. The TB b(t) in the TB set B includes a UE identifier of the terminal device SN(t), and the UE identifier of the terminal device SN(t) is a CS-RNTI. UE identifiers of the terminal devices SN(1), SN(2), SN(3) and SN(4) are 4, 3, 2 and 5, respectively, where the UE identifiers 4, 3, 2, 5 are elements of an ordered set of TB identifiers I = <I(1), I(2), I(3), I(4), I(5), I(6), I(7), I(8)> = <0, 1, 2, 3, 4, 5, 6, 7>. The ordered set of TB identifiers includes Na UE identifiers 0, 1, 2, 3, 4, 5, 6, and 7.

In this example, a maximum quantity of correct TBs Pmax = 3 is configured by the base station. A set of identifiers of correct TBs is a set of UE identifiers corresponding to correctly-received TBs in the TB set. The base station determines the following according to the signal including the TB set B: the set of identifiers of correct TBs is a set BI = {2, 3}, and a quantity P of correct TBs is equal to 2.

In this example, feedback information f is determined by the base station according to the following parameters: the set BI of identifiers of correct TBs, the quantity of correct TBs P = 2, the ordered set I of TB identifiers, a size of the ordered set of TB identifiers Na = 8, the maximum quantity of correct TBs Pmax = 3, and a TB error pattern a. Here, the TB error pattern a is determined by the base station according to the following parameters: the set BI of identifiers of correct TBs, the ordered set I of TB identifiers, and the size Na of the ordered set of TB identifiers.

In this example, an "ack" bit indicating positive acknowledgment ACK is bit "1", and a "nack" bit indicating negative acknowledgment NACK is bit "0". The base station performs compression coding on the set of identifiers of correct TBs to determine a compressed codeword c according to the following method.

The base station determines the TB error pattern a = [0, 0, 1, 1, 0, 0, 0, 0] according to the set of identifiers of correct TBs BI = {2, 3}, the ordered set I of TB identifiers, and the size Na of the ordered set of TB identifiers.

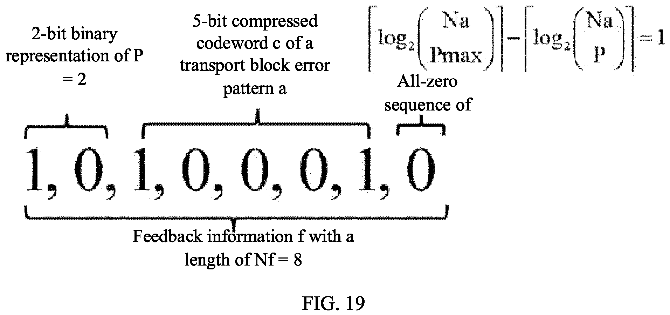

FIG. 19 is a schematic diagram of determining feedback information through arithmetic coding according to a TB error pattern provided by an example of the present disclosure. As shown in FIG. 19, the base station determines feedback information f for the TB error pattern a = [0, 0, 1, 1, 0, 0, 0, 0] according to the following method:

- the base station determines to represent P = 2 as a binary bit sequence Pb = [1, 0] with $\left\lceil \log_2(Pmax+1) \right\rceil = \left\lceil \log_2(3+1) \right\rceil = 2$ bits; and

- the base station determines, according to P = 2 and the TB error pattern a = [0, 0, 1, 1, 0, 0, 0, 0], that a length of the compressed codeword is $\left\lceil \log_2 \binom{Na}{P} \right\rceil = \left\lceil \log_2 \binom{8}{2} \right\rceil = 5$

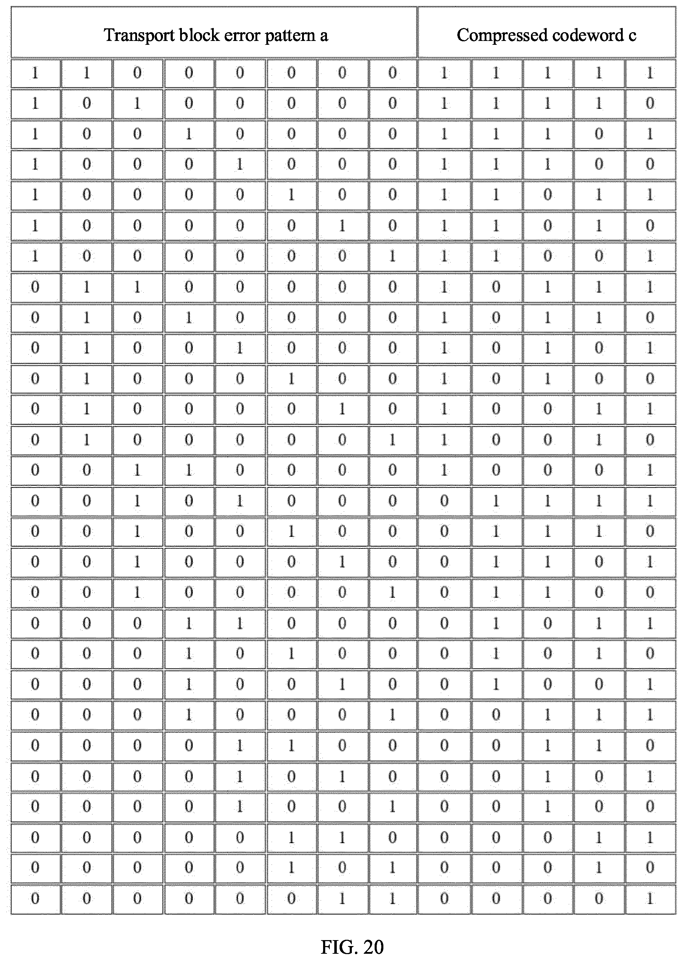

FIG. 20 is a mapping diagram of a TB error pattern and a compressed codeword provided by an example of the present disclosure. As shown in FIG. 20, a compressed codeword c = [1, 0, 0, 0, 1] is obtained through arithmetic coding of mapping $\binom{Na}{P} = \binom{8}{2} = 28$ sequences each having a length of Na = 8 and including P = 2 "ack" bits = 1 to a bit sequence with a length of $\left\lceil \log_2 \binom{Na}{P} \right\rceil = \left\lceil \log_2 \binom{8}{2} \right\rceil = 5$ .

The base station concatenates the bit sequence Pb = [1, 0], the compressed codeword c = [1, 0, 0, 0, 1], and an all-zero sequence with a length of $\left\lceil \log_2 \binom{Na}{Pmax} \right\rceil - \left\lceil \log_2 \binom{Na}{P} \right\rceil = \left\lceil \log_2 \binom{8}{3} \right\rceil - \left\lceil \log_2 \binom{8}{2} \right\rceil = 1$ to obtain feedback information f = [1, 0, 1, 0, 0, 0, 1, 0], where a length of the feedback information f is Nf = $\left\lceil \log_2(Pmax+1) \right\rceil + \left\lceil \log_2 \binom{Na}{Pmax} \right\rceil = 8$ .

In this example, the base station sends a signal including the feedback information f = [1, 0, 1, 0, 0, 0, 1, 0] to the sequence of terminal devices <SN(1), SN(2), SN(3), SN(4)>. The sequence of terminal devices <SN(1), SN(2), SN(3), SN(4)> receives the signal including the feedback information f. The terminal devices SN(1), SN(2), SN(3), and SN(4) separately decode the signal including the feedback information f, and determine acknowledgment of the TBs b(1), b(2), b(3), and b(4), respectively, according to the following method.

If the terminal device SN(1) fails in decoding, the terminal device SN(1) determines that acknowledgment of the TB b(1) is negative acknowledgment NACK. If the terminal device SN(1) performs decoding successfully and obtains the feedback information f, the terminal device SN(1) performs arithmetic decoding on the feedback information f obtained through decoding to obtain the TB error pattern a, and according to the UE identifier 4 of the terminal device SN(1) and a(5) = 0, the terminal device SN(1) determines that acknowledgment of the TB b(1) is negative acknowledgment NACK.

If the terminal device SN(2) fails in decoding, the terminal device SN(2) determines that acknowledgment of the TB b(2) is negative acknowledgment NACK. If the terminal device SN(2) performs decoding successfully and obtains the feedback information f, the terminal device SN(2) performs arithmetic decoding on the feedback information f obtained through decoding to obtain the TB error pattern a, and according to the UE identifier 3 of the terminal device SN(2) and a(4) = 1, the terminal device SN(2) determines that acknowledgment of the TB b(2) is positive acknowledgment ACK.

If the terminal device SN(3) fails in decoding, the terminal device SN(3) determines that acknowledgment of the TB b(3) is negative acknowledgment NACK. If the terminal device SN(3) performs decoding successfully and obtains the feedback information f, the terminal device SN(3) performs arithmetic decoding on the feedback information f obtained through decoding to obtain the TB error pattern a, and according to the UE identifier 2 of the terminal device SN(3) and a(3) = 1, the terminal device SN(3) determines that acknowledgment of the TB b(3) is positive acknowledgment ACK.

If the terminal device SN(4) fails in decoding, the terminal device SN(4) determines that acknowledgment of the TB b(4) is negative acknowledgment NACK. If the terminal device SN(4) performs decoding successfully and obtains the feedback information f, the terminal device SN(4) performs arithmetic decoding on the feedback information f obtained through decoding to obtain the TB error pattern a, and according to the UE identifier 5 of the terminal device SN(4) and a(6) = 0, the terminal device SN(4) determines that acknowledgment of the TB b(4) is negative acknowledgment NACK.

In the information transmission method provided by this example, the set BI of identifiers of correct TBs is converted into the TB error pattern a, and the feedback information f is obtained by arithmetic coding, where the all-zero sequence with the length of $\left\lceil \log_2 \binom{Na}{Pmax} \right\rceil - \left\lceil \log_2 \binom{Na}{P} \right\rceil$ is added, such that the length of the feedback information f does not change with a size of the set BI of identifiers of correct TBs, which can make decoding less complex. It should be noted that although the feedback information f has the same length as the TB error pattern a in this example, in practical application, the length Na of the TB error pattern a is long, and the feedback information f will be shorter than the length of the TB error pattern a. For example, when Na = 100 and Pmax = 4, the length Nf of the feedback information f is $\left\lceil \log_2(Pmax+1) \right\rceil + \left\lceil \log_2 \binom{Na}{Pmax} \right\rceil = \left\lceil \log_2(5) \right\rceil + \left\lceil \log_2 \binom{100}{4} \right\rceil = 3 + 22 = 25$, which is much shorter than the length of Na = 100. Therefore, given the same resources, the technical scheme provided by this example has a lower channel code rate than that of direct transmission of the TB error pattern a, such that the terminal device can adopt a lower receiving signal-to-noise ratio (SNR) and enhance coverage.

Example 9:

A difference between this example and Example 8 is that in this example, a maximum quantity of correct TBs Pmax = 4 is configured by a base station.

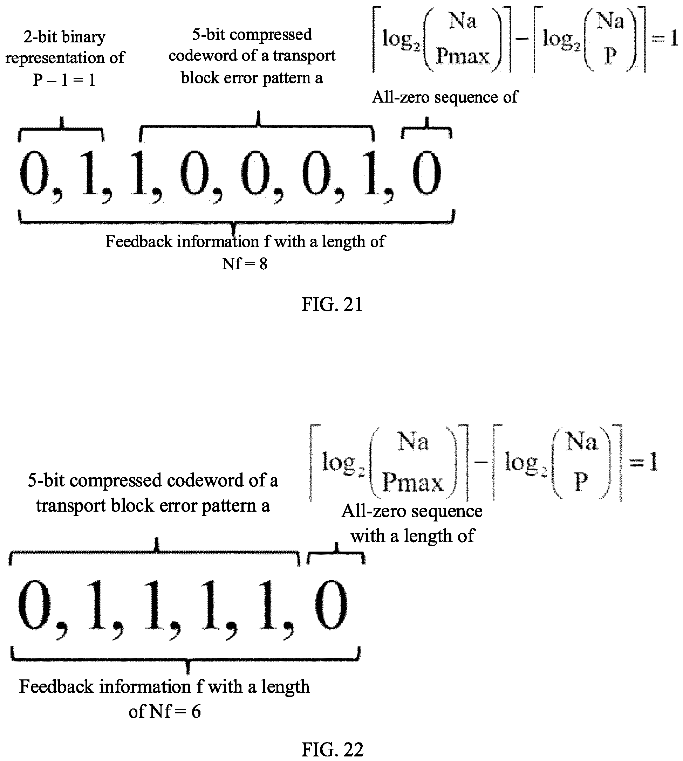

FIG. 21 is a schematic diagram of determining feedback information through arithmetic coding according to a TB error pattern provided by an example of the present disclosure. As shown in FIG. 21, the base station determines feedback information f for a TB error pattern a = [0, 0, 1, 1, 0, 0, 0, 0] according to the following method:

- the base station determines to represent P - 1 = 1 as a binary bit sequence Pb = [0, 1] with $\left\lceil \log_2(Pmax) \right\rceil = \left\lceil \log_2(4) \right\rceil = 2$ bits, where if P = 0, the base station determines Pb = [0, 0]; and
- the base station determines, according to P = 2 and the TB error pattern a = [0, 0, 1, 1, 0, 0, 0, 0], that a length of a compressed codeword is $\left\lceil \log_2 \binom{Na}{P} \right\rceil = \left\lceil \log_2 \binom{8}{2} \right\rceil = 5$ .

As shown in FIG. 20, the compressed codeword c is obtained through arithmetic coding of mapping $\binom{Na}{P} = \binom{8}{2} = 28$ sequences each having a length of Na = 8 and including P = 2 "ack" bits = 1 to a bit sequence with a length of $\left\lceil \log_2 \binom{Na}{P} \right\rceil = \left\lceil \log_2 \binom{8}{2} \right\rceil = 5$ .

The base station concatenates the bit sequence Pb = [0, 1], an arithmetic coding codeword c = [1, 0, 0, 0, 1], and an all-zero sequence with a length of $\left\lceil \log_2 \binom{Na}{Pmax} \right\rceil - \left\lceil \log_2 \binom{Na}{P} \right\rceil = \left\lceil \log_2 \binom{8}{3} \right\rceil - \left\lceil \log_2 \binom{8}{2} \right\rceil = 1$ to obtain feedback information f = [0, 1, 1, 0, 0, 0, 1, 0], where a length of the feedback information f is Nf = $\left\lceil \log_2(Pmax) \right\rceil + \left\lceil \log_2 \binom{Na}{Pmax} \right\rceil = 8$ .

In the information transmission method provided in this example, a case that the compressed codeword c cannot be an all-zero codeword is considered. When P = 0, the feedback information f is an all-zero sequence with a length of

$$Nf = \lceil \log_2(Pmax) \rceil = \left\lceil \log_2\binom{Na}{Pmax} \right\rceil$$

. When P = 1, the first $\lceil \log_2(Pmax) \rceil$ bits of the feedback information f are an all-zero sequence. As the compressed codeword c is not an all-zero codeword, the feedback information f is not an all-zero sequence when P = 1. In this way, the codeword can be distinguished from that in the case of P = 0. Compared with the coding manner in Example 8 (that is, $\lceil \log_2(Pmax+1) \rceil = \lceil \log_2(4+1) \rceil$ = 3 bits are used to represent P), 1 bit is saved to represent a value of P, thereby shortening the length of the feedback information f and reducing overheads of control signaling resources.

Example 10:

A difference between this example and Example 8 is that in this example, an "ack" bit indicating positive acknowledgment ACK is bit "0", and a "nack" bit indicating negative acknowledgment NACK is bit "1". A base station determines a TB error pattern a = [1, 1, 0, 0, 1, 1, 1, 1] according to a set of identifiers of correct TBs BI = {2, 3}, an ordered set I of TB identifiers, and a size Na of the ordered set of TB identifiers.

FIG. 22 is a schematic diagram of determining feedback information through arithmetic coding according to a TB error pattern provided by an example of the present disclosure. As shown in FIG. 22, the base station determines feedback information f for the TB error pattern a = [1, 1, 0, 0, 1, 1, 1, 1] according to the following method.

The base station determines, according to P = 2 and a size Na of the TB error pattern a equal to 8, that a length of a compressed codeword is

$$\left\lceil \log_2\binom{Na}{P} \right\rceil = \left\lceil \log_2\binom{8}{2} \right\rceil = 5$$

.

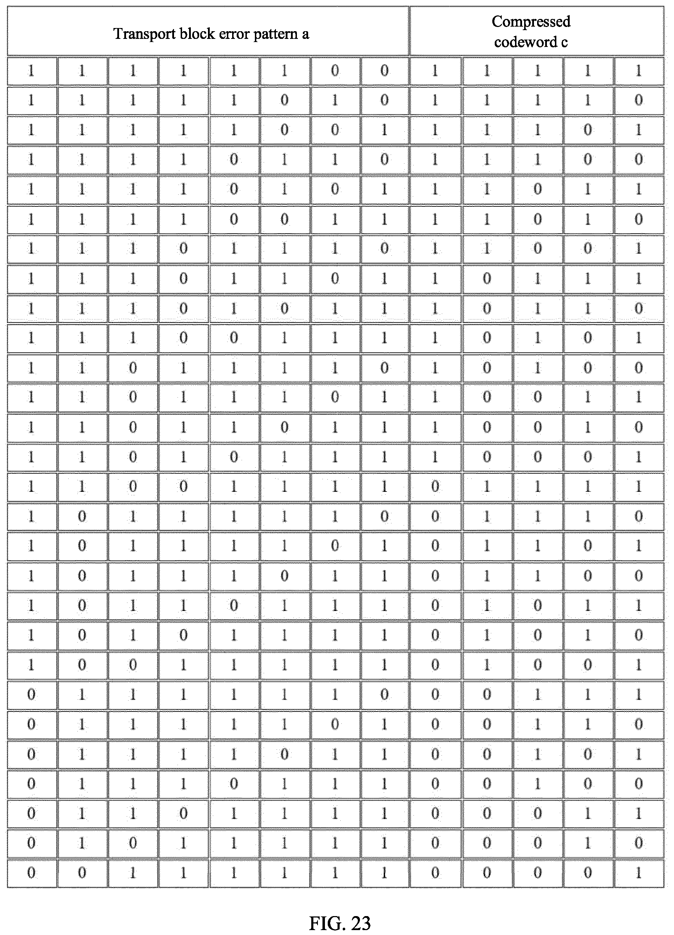

FIG. 23 is a mapping diagram of a TB error pattern and a compressed codeword provided by an example of the present disclosure. As shown in FIG. 23, a compressed codeword c = [0, 1, 1, 1, 1] is obtained through arithmetic coding of

mapping $\binom{Na}{P} = \binom{8}{2} = 28$ sequences each having a length of Na = 8 and including P = 2 "ack" bits = 0 to a bit sequence with a length of $\left\lceil \log_2\binom{Na}{P} \right\rceil = \left\lceil \log_2\binom{8}{2} \right\rceil = 5$ .

The base station concatenates the compressed codeword c = [0, 1, 1, 1, 1] and an all-zero sequence with a length

of $\left\lceil \log_2\binom{Na}{Pmax} \right\rceil - \left\lceil \log_2\binom{Na}{P} \right\rceil = \left\lceil \log_2\binom{8}{3} \right\rceil - \left\lceil \log_2\binom{8}{2} \right\rceil = 1$ to obtain feedback information f = [0, 1, 1, 1, 1, 0], where a length of the feedback information f is $Nf = \left\lceil \log_2\binom{Na}{Pmax} \right\rceil = \left\lceil \log_2\binom{8}{3} \right\rceil = 6$ .

Another difference between this example and Example 8 is that in this example, the base station sends a signal including the feedback information f = [0, 1, 1, 1, 1, 0] to a sequence of terminal devices <SN(1), SN(2), SN(3), SN(4)>. The sequence of terminal devices <SN(1), SN(2), SN(3), SN(4)> receives and decodes the signal including the feedback information f, and determines acknowledgment of the TBs b(1), b(2), b(3), and b(4) according to the following method.

If the terminal device SN(1) fails in decoding, the terminal device SN(1) determines that acknowledgment of the TB b(1) is negative acknowledgment NACK. If the terminal device SN(1) performs decoding successfully and obtains the feedback information f, the terminal device SN(1) performs arithmetic decoding on the feedback information f obtained through decoding to obtain the TB error pattern a, and according to a UE identifier 4 of the terminal device SN(1) and a(5) = 1, the terminal device SN(1) determines that acknowledgment of the TB b(1) is negative acknowledgment NACK.

If the terminal device SN(2) fails in decoding, the terminal device SN(2) determines that acknowledgment of the TB b(2) is negative acknowledgment NACK. If the terminal device SN(2) performs decoding successfully and obtains the feedback information f, the terminal device SN(2) performs arithmetic decoding on the feedback information f obtained through decoding to obtain the TB error pattern a, and according to a UE identifier 3 of the terminal device SN(2) and a(4) = 0, the terminal device SN(2) determines that acknowledgment of the TB b(2) is positive acknowledgment ACK.

If the terminal device SN(3) fails in decoding, the terminal device SN(3) determines that acknowledgment of the TB b(3) is negative acknowledgment NACK. If the terminal device SN(3) performs decoding successfully and obtains the feedback information f, the terminal device SN(3) performs arithmetic decoding on the feedback information f obtained through decoding to obtain the TB error pattern a, and according to a UE identifier 2 of the terminal device SN(3) and a(3) = 0, the terminal device SN(3) determines that acknowledgment of the TB b(3) is positive acknowledgment ACK.

If the terminal device SN(4) fails in decoding, the terminal device SN(4) determines that acknowledgment of the TB b(4) is negative acknowledgment NACK. If the terminal device SN(4) performs decoding successfully and obtains the feedback information f, the terminal device SN(4) performs arithmetic decoding on the feedback information f obtained through decoding to obtain the TB error pattern a, and according to a UE identifier 5 of the terminal device SN(4) and a(6) = 1, the terminal device SN(4) determines that acknowledgment of the TB b(4) is negative acknowledgment NACK.

In the information transmission method provided by this example, the feedback information f does not include a 2-bit binary representation of P = 2, such that the length of the feedback information f is shorter, and overheads of control signaling resources are reduced.

Example 11:

A difference between this example and Example 10 is that in this example, a maximum quantity of correct TBs Pmax = Na = 8, where Na = 8 is a size of an ordered set of TB identifiers.

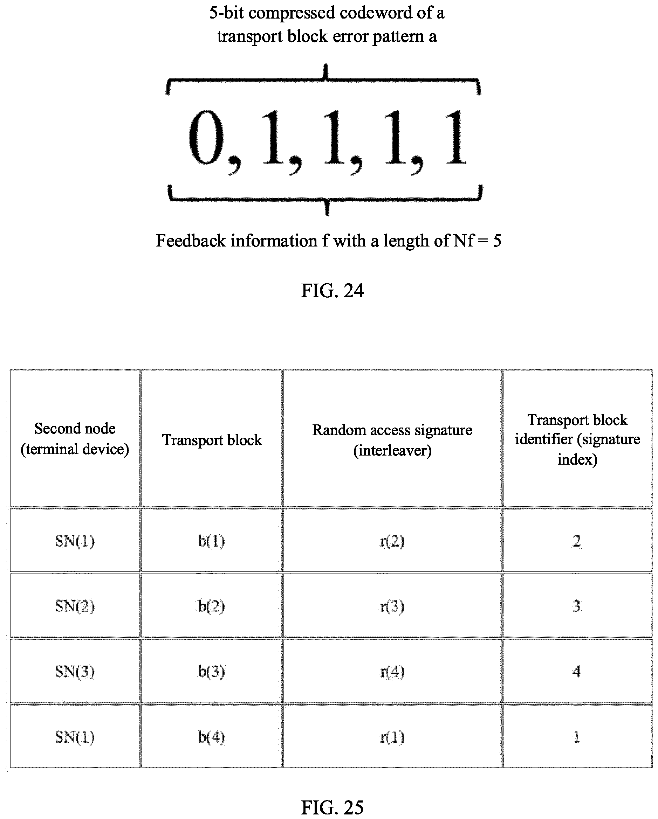

As shown in FIG. 24, a base station determines feedback information f for a TB error pattern a = [1, 1, 0, 0, 1, 1, 1, 1] according to the following method.

The base station determines, according to a quantity of correct TBs P = 2 and the TB error pattern a = [1, 1, 0, 0, 1, 1, 1, 1], that a length of a compressed codeword is

$$\left\lceil \log_2 \binom{Na}{P} \right\rceil = \left\lceil \log_2 \binom{8}{2} \right\rceil = 5$$

.

FIG. 23 is a mapping diagram of a TB error pattern and a compressed codeword provided by an example of the present disclosure. As shown in FIG. 23, a compressed codeword c = [0, 1, 1, 1, 1] is obtained through arithmetic coding of

mapping $\binom{Na}{P} = \binom{8}{2} = 28$ sequences each having a length of Na = 8 and including P = 2 "ack" bits = 0 to a bit sequence with a length of $\left\lceil \log_2 \binom{Na}{P} \right\rceil = \left\lceil \log_2 \binom{8}{2} \right\rceil = 5$ .

The base station determines that the feedback information f is the compressed codeword c, that is, f = c = [0, [1, 1, 1, 1], where a length of the feedback information f is $Nf = \left\lceil \log_2 \binom{Na}{P} \right\rceil = \left\lceil \log_2 \binom{8}{2} \right\rceil = 5$ .

In the information transmission method provided by this example, the zero-padding is not performed on the compressed codeword c for the feedback information f, such that the length of the feedback information f is shorter, and resources are further saved. Alternatively, given the same resources, a terminal device has a lower receiving SNR. A receive end decodes the feedback information f with different lengths to obtain the quantity P of correct TBs.

Example 12:

In this example, a first node is a base station and a second node is a terminal device. This example includes a plurality of terminal devices which form a sequence of terminal devices, and a TB identifier is a signature index.

FIG. 25 is a schematic diagram of a relationship among a second node, a TB, a random access signature, and a signature index provided by an example of the present disclosure. As shown in FIG. 25, the base station receives a signal, including a TB set B, sent by a sequence of terminal devices. The sequence of terminal devices includes Nu = 3 terminal devices: SN(1), SN(2), and SN(3), and the TB set B includes Nb = 4 TBs: b(1), b(2), b(3), and b(4). The signal including the TB set B includes: a signal including the TB b(1), a signal including the TB b(2), a signal including the TB b(3), and a signal including the TB b(4).

In this example, for t = 1, 2, 3, a TB b(t) in the TB set B is sent to the base station by a terminal device SN(t). The TB b(4) in the TB set B is sent to the base station by the terminal device SN(1).

For t = 1, 2, 3, 4, the TB b(t) in a TB set B corresponds to a random access signature, where the random access signature is an interleaver. Random access signatures corresponding to the TBs b(1), b(2), b(3) and b(4) are respectively random access signatures r(2), r(3), r(4) and r(1) determined by the terminal devices SN(1), SN(2), SN(3) and SN(1) according to higher layer parameters. The interleavers r(2), r(3), r(4) and r(1) are elements of an ordered set of random access signatures. The ordered set of random access signatures includes Na = 6 interleavers r(1), r(2), r(3), r(4), r(5), and r(6), where signature indexes of the interleavers r(1), r(2), r(3), r(4), r(5) and r(6) are respectively Na = 6 signature indexes 1, 2, 3, 4, 5, and 6 included in an ordered set of TB identifiers. The ordered set of TB identifiers I = <I(1), I(2), I(3), I(4), I(5), I(6)> = <1, 2, 3, 4, 5, 6>.

In this example, a maximum quantity of correct TBs Pmax = 2 is configured by the base station. A set of identifiers of correct TBs is a set of signature indexes of random access signatures included in correctly-received TBs in the TB set. The base station determines the following according to the signal including the TB set B: the set of identifiers of correct TBs is BI = {2, 3}, and a quantity P of correct TBs is equal to 2. Feedback information f is determined by the base station according to the following parameters: the set BI of identifiers of correct TBs, the quantity of correct TBs P = 2, the ordered set I of TB identifiers, a size of the ordered set of TB identifiers Na = 6, the maximum quantity of correct TBs Pmax = 2, and a TB error pattern a.

In this example, an "ack" bit indicating positive acknowledgment ACK is bit "1", and a "nack" bit indicating negative acknowledgment NACK is bit "0". In this example, the base station determines the feedback information f according to the following method.

The base station determines the TB error pattern a as a = [0, 1, 1, 0, 0, 0] according to the set of identifiers of correct TBs BI = {2, 3} and the size of the ordered set of TB identifiers Na = 6.

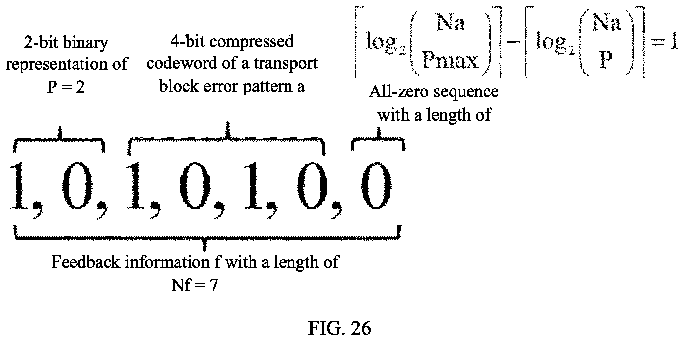

FIG. 26 is a schematic diagram of determining feedback information through arithmetic coding according to a TB error pattern provided by an example of the present disclosure. As shown in FIG. 26, the base station determines the feedback information f for the TB error pattern a = [0, 1, 1, 0, 0, 0] according to the following method.

- the base station determines that a binary representation of $\left\lceil\log_2(\text{Pmax}+1)\right\rceil = \left\lceil\log_2(2+1)\right\rceil = 2$ bits of P = 2 is a bit sequence Pb = [1, 0]; and

- the base station determines, according to P = 2 and the TB error pattern a = [0, 1, 1, 0, 0, 0], that a length of a compressed codeword is $\left\lceil\log_2\binom{\text{Na}}{\text{P}}\right\rceil = \left\lceil\log_2\binom{6}{2}\right\rceil = 4$.

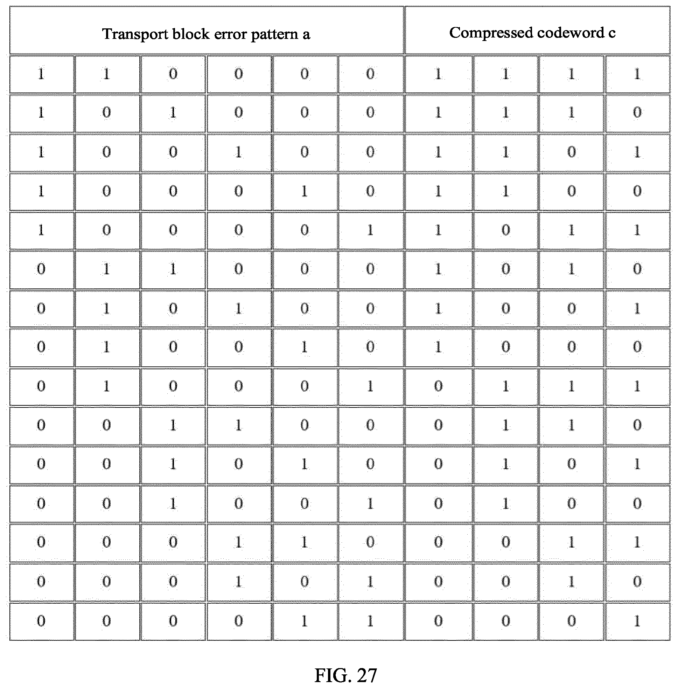

FIG. 27 is a mapping diagram of a TB error pattern and a compressed codeword provided by an example of the present disclosure. As shown in FIG. 27, a compressed codeword c = [1, 0, 1, 0] is obtained through arithmetic coding of mapping $\binom{\text{Na}}{\text{P}} = \binom{6}{2} = 15$ sequences each having a length of Na = 6 and including P = 2 bits "ack" = 1 to a bit sequence with a length of $\left\lceil\log_2\binom{\text{Na}}{\text{P}}\right\rceil = \left\lceil\log_2\binom{6}{2}\right\rceil = 4$.

The base station concatenates the bit sequence Pb = [1, 0], the compressed codeword c = [1, 0, 1, 0], and an all-zero sequence with a length of $\left\lceil\log_2\binom{\text{Na}}{\text{Pmax}}\right\rceil - \left\lceil\log_2\binom{\text{Na}}{\text{P}}\right\rceil = \left\lceil\log_2\binom{6}{3}\right\rceil - \left\lceil\log_2\binom{6}{2}\right\rceil = 1$ to obtain feedback information f = [1, 0, 1, 0, 1, 0, 0], where a length of the feedback information f is Nf = $\left\lceil\log_2(\text{Pmax}+1)\right\rceil + \left\lceil\log_2\binom{\text{Na}}{\text{Pmax}}\right\rceil = \left\lceil\log_2(2+1)\right\rceil + \left\lceil\log_2\binom{6}{3}\right\rceil = 7$.

In this example, the base station sends a signal including the feedback information f = [1, 0, 1, 0, 1, 0, 0] to a sequence of terminal devices <SN(1), SN(2), SN(3)>. The sequence of terminal devices <SN(1), SN(2), SN(3)> receives and decodes the signal including the feedback information f, and determines acknowledgment of the TBs b(1), b(2), b(3), and b(4) according to the following method.

If the terminal device SN(1) fails in decoding, the terminal device SN(1) determines that acknowledgment of each of the TBs b(1) and b(4) is negative acknowledgment NACK. If the terminal device SN(1) performs decoding successfully and obtains the feedback information f, the terminal device SN(1) performs arithmetic decoding on the feedback information f obtained through decoding to obtain the TB error pattern a; according to a signature index 2 of a random access signature corresponding to the TB b(1) and a(2) = 1, the terminal device SN(1) determines that acknowledgment of the TB b(1) is positive acknowledgment ACK; and according to a signature index 1 of a random access signature corresponding to the TB b(4) and a(1) = 0, the terminal device SN(1) determines that acknowledgment of the TB b(4) is negative acknowledgment NACK.

If the terminal device SN(2) fails in decoding, the terminal device SN(2) determines that acknowledgment of the TB b(2) is negative acknowledgment NACK. If the terminal device SN(2) performs decoding successfully and obtains the feedback information f, the terminal device SN(2) performs arithmetic decoding on the feedback information f obtained through decoding to obtain the TB error pattern a; and according to a signature index 3 of a random access signature corresponding to the TB b(2) and a(3) = 1, the terminal device SN(2) determines that acknowledgment of the TB b(2) is positive acknowledgment ACK.

If the terminal device SN(3) fails in decoding, the terminal device SN(3) determines that acknowledgment of the TB b(3) is negative acknowledgment NACK. If the terminal device SN(3) performs decoding successfully and obtains the feedback information f, the terminal device SN(3) performs arithmetic decoding on the feedback information f to obtain the TB error pattern a; and according to a signature index 4 of a random access signature corresponding to the TB b(3) and a(4) = 0, the terminal device SN(3) determines that acknowledgment of the TB b(3) is negative acknowledgment NACK.

In the information transmission method provided by this example, the terminal device SN(1) sends two TBs b(1) and b(4), but selects different random access signatures. The base station determines the feedback information f according to a signature index of a random access signature of a correctly decoded TB, such that the terminal device SN(1) can determine whether the two TBs b(1) and b(4) are correctly received. In addition, because a size of the ordered set of random access signatures is generally smaller than a size of an ordered set of UE identifiers, the length of the feedback information f can be reduced, overheads of control signaling resources can be reduced, and information transmission efficiency can be improved.

Example 13:

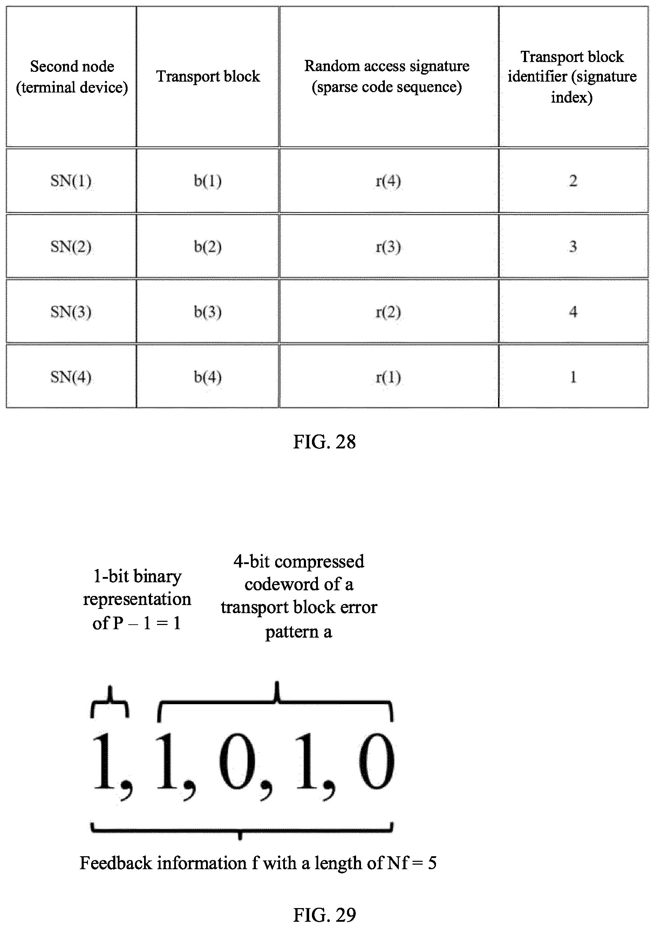

FIG. 28 is a schematic diagram of a relationship among a second node, a TB, a random access signature, and a signature index provided by an example of the present disclosure. As shown in FIG. 28, this example differs from Example 12 in that a base station receives a signal, including a TB set B, sent by a sequence of terminal devices. The sequence of terminal devices includes Nu = 4 terminal devices: SN(1), SN(2), SN(3), and SN(4), and the TB set B includes Nb = 4 TBs: b(1), b(2), b(3), and b(4). The signal including the TB set B includes: a signal including the TB b(1), a signal including the TB b(2), a signal including the TB b(3), and a signal including the TB b(4).

Another difference between this example and Example 12 is that for t = 1, 2, 3, 4, a TB b(t) in the TB set B is sent to the base station by a terminal device SN(t) in the sequence of terminal devices. The TB in the TB set B includes a random access signature, where the random access signature is a sparse code sequence. Sparse code sequences included in the TBs b(1), b(2), b(3), and b(4) in the TB set B are respectively sparse code sequences r(2), r(3), r(4) and r(1) determined by the terminal devices SN(1), SN(2), SN(3) and SN(4) according to higher layer parameters, where the sparse code sequences r(2), r(3), r(4) and r(1) are elements of an ordered set of random access signatures. The ordered set of random access signatures includes Na = 6 sparse code sequences r(1), r(2), r(3), r(4), r(5), and r(6), where signature indexes of the sparse code sequences r(1), r(2), r(3), r(4), r(5) and r(6) are respectively Na = 6 signature indexes 1, 2, 3, 4, 5, and 6 included in an ordered set of TB identifiers. The ordered set of TB identifiers I = <I(1), I(2), I(3), I(4), I(5), I(6)> = <1, 2, 3, 4, 5, 6>.

FIG. 29 is a schematic diagram of determining feedback information through arithmetic coding according to a TB error pattern provided by an example of the present disclosure. As shown in FIG. 29, the base station determines the feedback information f according to the following method:

- the base station determines that a binary representation of $\lceil \log_2(\text{Pmax}) \rceil = \lceil \log_2(2) \rceil = 1$ bits of P - 1 = 1 is a bit sequence Pb = [1], where if P = 0 or 1, the base station determines that the binary representation is bit sequence Pb = [0]; and

- the base station determines, according to P = 2 and a TB error pattern a = [0, 1, 1, 0, 0, 0], that a length of a compressed codeword is $\left\lceil \log_2 \begin{pmatrix} \text{Na} \\ \text{P} \end{pmatrix} \right\rceil = \left\lceil \log_2 \begin{pmatrix} 6 \\ 2 \end{pmatrix} \right\rceil = 4$.

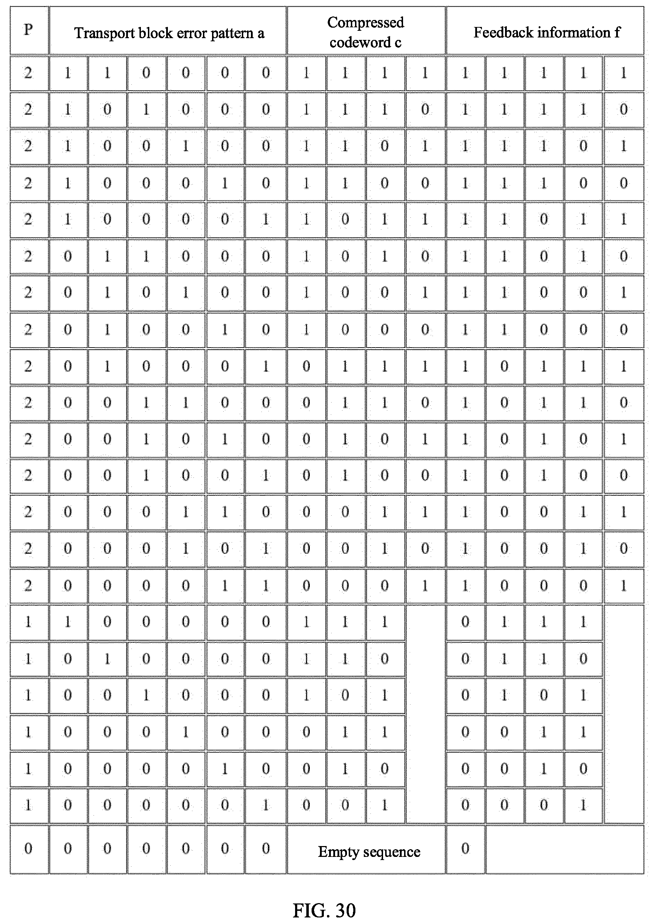

FIG. 30 is a mapping diagram of a TB error pattern, a compressed codeword, and feedback information provided by an example of the present disclosure. As shown in FIG. 30, a compressed codeword c = [1, 0, 1, 0] is obtained through arithmetic coding of mapping $\begin{pmatrix} Na \\ P \end{pmatrix} = \begin{pmatrix} 6 \\ 2 \end{pmatrix} = 15$ sequences each having a length of Na = 6 and including P = 2 bits "ack" = 1 to a bit sequence with a length of $\left\lceil \log_2 \begin{pmatrix} Na \\ P \end{pmatrix} \right\rceil = \left\lceil \log_2 \begin{pmatrix} 6 \\ 2 \end{pmatrix} \right\rceil = 4$ .

The base station concatenates the bit sequence Pb = [1] and the compressed codeword c = [1, 0, 1, 0] to obtain feedback information f = [1, 1, 0, 1, 0], where a length of the feedback information f is Nf =

$$\left\lceil \log_2 (Pmax) \right\rceil + \left\lceil \log_2 \begin{pmatrix} Na \\ P \end{pmatrix} \right\rceil = \left\lceil \log_2 (2) \right\rceil + \left\lceil \log_2 \begin{pmatrix} 6 \\ 2 \end{pmatrix} \right\rceil = 5$$ .

Another difference between this example and Example 12 is that in this example, the base station sends a signal including the feedback information f = [1, 1, 0, 1, 0] to a sequence of terminal devices <SN(1), SN(2), SN(3), SN(4)>. The sequence of terminal devices <SN(1), SN(2), SN(3), SN(4)> receives and decodes the signal including the feedback information f, and determines acknowledgment of the TBs b(1), b(2), b(3), and b(4) according to the following method.

If the terminal device SN(1) fails in decoding, the terminal device SN(1) determines that acknowledgment of the TB b(1) is negative acknowledgment NACK. If the terminal device SN(1) performs decoding successfully and obtains the feedback information f, the terminal device SN(1) performs arithmetic decoding on the feedback information f obtained through decoding to obtain the TB error pattern a; and according to a signature index 2 of a random access signature included in the TB b(1) and a(2) = 1, the terminal device SN(1) determines that acknowledgment of the TB b(1) is positive acknowledgment ACK.

If the terminal device SN(2) fails in decoding, the terminal device SN(2) determines that acknowledgment of the TB b(2) is negative acknowledgment NACK. If the terminal device SN(2) performs decoding successfully and obtains the feedback information f, the terminal device SN(2) performs arithmetic decoding on the feedback information f obtained through decoding to obtain the TB error pattern a; and according to a signature index 3 of a random access signature included in the TB b(2) and a(3) = 1, the terminal device SN(2) determines that acknowledgment of the TB b(2) is positive acknowledgment ACK.

If the terminal device SN(3) fails in decoding, the terminal device SN(3) determines that acknowledgment of the TB b(3) is negative acknowledgment NACK. If the terminal device SN(3) performs decoding successfully and obtains the feedback information f, the terminal device SN(3) performs arithmetic decoding on the feedback information f obtained through decoding to obtain the TB error pattern a; and according to a signature index 4 of a random access signature included in the TB b(3) and a(4) = 0, the terminal device SN(3) determines that acknowledgment of the TB b(3) is negative acknowledgment NACK.

If the terminal device SN(4) fails in decoding, the terminal device SN(4) determines that acknowledgment of the TB b(4) is negative acknowledgment NACK. If the terminal device SN(4) performs decoding successfully and obtains the feedback information f, the terminal device SN(4) performs arithmetic decoding on the feedback information f obtained through decoding to obtain the TB error pattern a; and according to a signature index 1 of a random access signature included in the TB b(4) and a(1) = 0, the terminal device SN(4) determines that acknowledgment of the TB b(4) is negative acknowledgment NACK.

In the information transmission method provided by this example, the length of the feedback information f varies with P, such that an average length of the feedback information f is shorter than that in Example 12. Given the same feedback resource overheads, the terminal device can receive the feedback information f with a lower SNR, to improve the coverage.

Example 14:

A difference between this example and Example 13 is that in this example, for t = 1, 2, 3, 4, a random access signature included in a TB b(t) in a TB set B is a pilot sequence, which is an element of an ordered set of random access signatures. The ordered set of random access signatures includes Na = 6 pilot sequences r(1), r(2), r(3), r(4), r(5), and r(6), where signature indexes of the pilot sequences r(1), r(2), r(3), r(4), r(5) and r(6) are respectively Na = 6 signature indexes 1, 2, 3, 4, 5, and 6 included in an ordered set of TB identifiers. The ordered set of TB identifiers I = <I(1), I(2), I(3), I(4), I(5), I(6)> = <1, 2, 3, 4, 5, 6>.

Another difference between this example and Example 13 is that a maximum quantity of correct TBs Pmax = 3 is determined by using a higher layer parameter. Feedback information f is determined by a base station according to the following parameters: a set BI of identifiers of correct TBs, a quantity of correct TBs P = 2, an ordered set I of TB identifiers, a size of the ordered set of TB identifiers Na = 6, and a maximum quantity of correct TBs Pmax = 2.

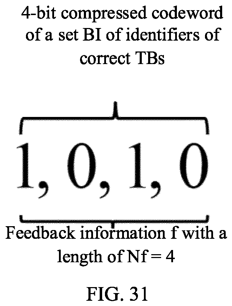

FIG. 31 is a schematic diagram of determining feedback information through arithmetic coding according to a set of identifiers of correct TBs provided by an example of the present disclosure. As shown in FIG. 31, the base station determines the feedback information f according to the following method.

The base station determines, according to P = 2 and the size of the ordered set of TB identifiers Na = 6, that a length of a compressed codeword is $\left\lceil \log_2 \binom{Na}{P} \right\rceil = \left\lceil \log_2 \binom{6}{2} \right\rceil = 4$.

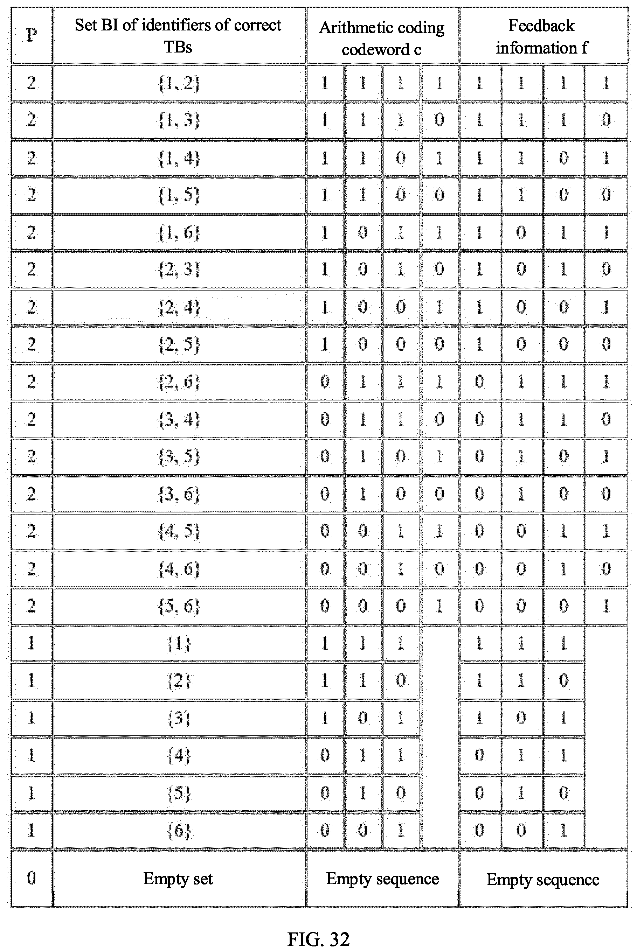

FIG. 32 is a schematic diagram of determining feedback information through arithmetic coding according to a set of identifiers of correct TBs provided by an example of the present disclosure. A compressed codeword c = [1, 0, 1, 0] is obtained through arithmetic coding of mapping $\binom{Na}{P} = \binom{6}{2}$ 15 subsets, of the ordered set of TB identifiers, including P = 2 elements to a bit sequence with a length of $\left\lceil \log_2 \binom{Na}{P} \right\rceil = \left\lceil \log_2 \binom{6}{2} \right\rceil = 4$. The compressed codeword c is as shown in FIG. 32.

The base station determines the compressed codeword c = [1, 0, 1, 0] as the feedback information f, that is, f = c = [1, 0, 1, 0], where a length of the feedback information f is $Nf = \left\lceil \log_2 \binom{Na}{P} \right\rceil = \left\lceil \log_2 \binom{6}{2} \right\rceil = 4$.

Another difference between this example and Example 13 is that in this example, the base station sends a signal including the feedback information f = [1, 0, 1, 0] to a sequence of terminal devices <SN(1), SN(2), SN(3), SN(4)>. The sequence of terminal devices <SN(1), SN(2), SN(3), SN(4)> receives and decodes the signal including the feedback information f, and determines acknowledgment of TBs b(1), b(2), b(3), and b(4) according to the following method.

If the terminal device SN(1) fails in decoding, the terminal device SN(1) determines that acknowledgment of the TB b(1) is negative acknowledgment NACK. If the terminal device SN(1) performs decoding successfully and obtains the feedback information f, the terminal device SN(1) performs arithmetic decoding on the feedback information f obtained through decoding to obtain the set BI of identifiers of correct TBs; and according to a signature index 2 of a random access signature included in the TB b(1) belonging to the set BI of identifiers of correct TBs, the terminal device SN(1) determines that acknowledgment of the TB b(1) is positive acknowledgment ACK.

If the terminal device SN(2) fails in decoding, the terminal device SN(2) determines that acknowledgment of the TB b(2) is negative acknowledgment NACK. If the terminal device SN(2) performs decoding successfully and obtains the feedback information f, the terminal device SN(2) performs arithmetic decoding on the feedback information f obtained through decoding to obtain the set BI of identifiers of correct TBs; and according to a signature index 3 of a random access signature included in the TB b(2) belonging to the set BI of identifiers of correct TBs, the terminal device SN(2) determines that acknowledgment of the TB b(2) is positive acknowledgment ACK.

If the terminal device SN(3) fails in decoding, the terminal device SN(3) determines that acknowledgment of the TB b(3) is negative acknowledgment NACK. If the terminal device SN(3) performs decoding successfully and obtains the feedback information f, the terminal device SN(3) performs arithmetic decoding on the feedback information f obtained through decoding to obtain the set BI of identifiers of correct TBs; and according to a signature index 4 of a random access signature included in the TB b(3) not belonging to the set BI of identifiers of correct TBs, the terminal device SN(3) determines that acknowledgment of the TB b(3) is negative acknowledgment NACK.

If the terminal device SN(4) fails in decoding, the terminal device SN(4) determines that acknowledgment of the TB b(4) is negative acknowledgment NACK. If the terminal device SN(4) performs decoding successfully and obtains the feedback information f, the terminal device SN(4) performs arithmetic decoding on the feedback information f obtained through decoding to obtain the set BI of identifiers of correct TBs; and according to a signature index 1 of a random access signature included in the TB b(4) not belonging to the set BI of identifiers of correct TBs, the terminal device SN(4) determines that acknowledgment of the TB b(4) is negative acknowledgment NACK.

In the information transmission method provided in this example, the feedback information f is the compressed codeword c, such that the length of the feedback information f is the shortest. When P = 0, the length of the feedback information f is $Nf = \left\lceil \log_2 \binom{Na}{0} \right\rceil = 0$. and the signal including the feedback information f is a null signal. The length of the feedback information f varies with the value of P, such that different values of P can be distinguished between at a receive end, and the set BI of identifiers of correct TBs can be recovered.

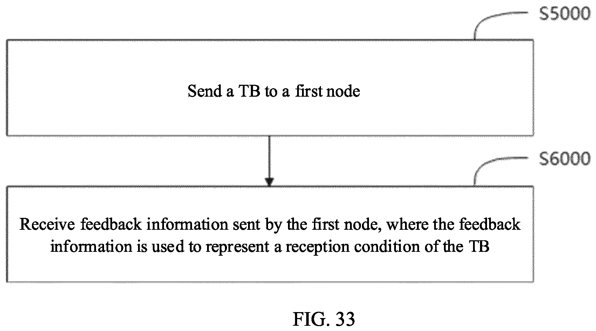

FIG. 33 shows an information transmission method provided by an embodiment of the present disclosure, including steps S5000 and S6000.

At S5000, a TB is sent to a first node.

At S6000, feedback information sent by the first node is received, where the feedback information is used to represent a reception condition of the TB.

In some embodiments, one second node sends a signal including one or more TBs to the first node. The one or more TBs form a TB set at the first node. In some other embodiments, two or more second nodes may send one or more TBs to the first node, and the TBs form a TB set.

In some embodiments, when a plurality of second nodes send TBs to the first node, the second nodes that send the TB set constitute a sequence of second nodes. Here, the sequence of second nodes includes Nu second nodes, and the TB set includes Nb TBs, where Nu and Nb are positive integers, and Nu is less than or equal to Nb.

In some embodiments, a TB in the TB set includes a TB identifier, an ordered set of TB identifiers includes Na TB identifiers I(1), I(2), ..., and I(Na), and Na is a size of the ordered set of TB identifiers. For i=1, 2, ..., Na, an $i^{th}$ element in the ordered set of TB identifiers is I(i). Here, the $i^{th}$ element I(i) in the ordered set of TB identifiers may be an integer i or an integer i-1.

In some embodiments, the TB is indicated by a TB identifier.

In some embodiments, the TB identifier may be one of the following: a UE identifier, an index value of a UE identifier, or a signature index.

In some embodiments, the UE identifier is a UE identifier of a second node in the sequence of second nodes, and UE identifiers of two different second nodes in the sequence of second nodes are different. The UE identifiers may be used for the first node to distinguish between different TBs in the TB set in a signal including the TB set, and the UE identifier is an integer.

In some embodiments, the TB identifier is a UE identifier, and elements in the ordered set of TB identifiers are UE identifiers. An example is: the ordered set of TB identifiers I = <I(1), I(2), I(3), I(4), I(5)> = <0, 1, 2, 3, 4>, where the size Na of the ordered set of TB identifiers is equal to 5, and a UE identifier corresponding to the second element I(2) in the ordered set of TB identifiers is 1. Another example is: the ordered set of TB identifiers I = <I(1), I(2), I(3), I(4), I(5)> = <1, 2, 3, 4, 5>, where the size Na of the ordered set of TB identifiers is equal to 5, and the UE identifier corresponding to the second element I(2) in the ordered set of TB identifiers is 2. Still another example is: the ordered set of TB identifiers I = <I(1), I(2), I(3), I(4)> = <0, 11, 20, 30>, where the size Na of the ordered set of TB identifiers is equal to 4, and the UE identifier corresponding to the second element I(2) in the ordered set of TB identifiers is 11.

In some embodiments, the index value of a UE identifier is an index i of an element I(k) in an ordered set of TB identifiers I = <I(1), I(2), ..., I(Na)>, i = 1, 2, ..., Na, and the index value of the UE identifier is an integer.

In some embodiments, the TB identifier is the index value of the UE identifier, the UE identifier is an element in an ordered set of UE identifiers, and the ordered set of UE identifiers includes Na UE identifiers ID(1), ID(2), ..., ID(Na). Here, Na is a size of the ordered set of UE identifiers and the size of the ordered set of TB identifiers, i = 1, 2, ..., Na, and an index value of a UE identifier corresponding to an $i^{th}$ UE identifier ID(i) in the ordered set of UE identifiers is an $i^{th}$ element I(i) in elements in the ordered set of TB identifiers. An example is: the ordered set of UE identifiers ID = <ID(1), ID(2), ID(3), ID(4)> = <0, 11, 20, 30>, and the corresponding ordered set of TB identifiers I = <I(1), I(2), I(3), I(4)> = <0, 1, 2, 3>; where the size of the ordered set of UE identifiers and the size of the ordered set of TB identifiers are both Na = 4, and an index value of a UE identifier of an element ID(2) = 11 in the ordered set of UE identifiers is the element I(2) = 1 in the ordered set of TB identifiers.

In some embodiments, the TB identifier is a signature index, and the signature index is a signature index of a random access signature, that is, one TB in the TB set includes the random access signature. The random access signature is an element in an ordered set of random access signatures, and the ordered set of random access signatures includes Na random access signatures r(1), r(2), ..., r(Na). Here, Na is a size of the ordered set of random access signatures and the size of the ordered set of TB identifiers, i = 1, 2, ..., Na, and a signature index of an $i^{th}$ random access signature r(i) in the ordered set of random access signatures is an $i^{th}$ element I(i) in the ordered set of TB identifiers, where the $i^{n}$ element I(i) in the ordered set of TB identifiers may be an integer i or an integer i-1.

It should be noted that the UE identifier may be a SUPI, a GPSI, a PEI, a NAI, an SUCI, a GUTI, an RNTI, an SI-RNTI, a P-RNTI, an RA-RNTI, a TC-RNTI, a C-RNTI, a TPC-PUCCH-RNTI, a TPC-PUSCH-RNTI, a TPC-SRS-RNTI, an INT-RNTI, an MCS-C-RNTI, a CS-RNTI, an SFI-RNTI, an SP-CSI-RNTI, or the like.

It should be noted that the random access signature may be a pilot, a reference signal, a preamble, a spread spectrum sequence, an interleaver, an interleaver pattern, an interleaver sequence, a scrambling sequence, a sparse code sequence, or the like.

In some embodiments, the second node determines a random access signature of a TB according to a UE identifier of the TB, as a random access signature included in the TB in the TB set. The random access signatures may be used for the first node to distinguish between different TBs in the TB set in the signal including the TB set.

In some embodiments, the second node determines a random access signature of a TB according to a higher layer parameter, as a random access signature included in the TB in the TB set. The random access signatures may be used for the first node to distinguish between different TBs in the TB set in the signal including the TB set.

It should be noted that the first node and the second node may be any network elements with data reception and signaling transmission functions such as base stations, relays, or terminal devices.

It should be noted that information about a set of correct TBs includes a maximum quantity Pmax of correct TBs, the ordered set of TB identifiers, the size Na of the ordered set of TB identifiers, a set of identifiers of correct TBs, a quantity P of correct TBs, a TB error pattern a, or a length Nf of feedback information f. It should be noted that the feedback information can be obtained according to one or more of the foregoing information about the correct TB, that is, the generation of the feedback information does not necessarily require all the information.

In some embodiments, the maximum quantity Pmax of correct TBs is equal to the size Na of the ordered set of TB identifiers. In some other embodiments, the maximum quantity Pmax of correct TBs is configured by the first node. In some other embodiments, the maximum quantity Pmax of correct TBs is pre-configured by using a higher layer parameter.

In some embodiments, the information about the set of correct TBs is the set of identifiers of correct TBs, and the set of identifiers of correct TBs is a set of UE identifiers included in correctly-received TBs in the TB set. The correctly-received TB is a TB whose acknowledgment state is a positive acknowledgment ACK. A UE identifier belonging to the set of identifiers of correct TBs is used to indicate that an acknowledgment state of a TB corresponding to the UE identifier is positive acknowledgment ACK. A UE identifier not belonging to the set of identifiers of correct TBs is used to indicate that an acknowledgment state of a TB corresponding to the UE identifier is negative acknowledgment NACK.

In some embodiments, the information about the set of correct TBs is the set of identifiers of correct TBs, and the set of identifiers of correct TBs is a set of index values of UE identifiers. The correctly-received TB is a TB whose acknowledgment state is a positive acknowledgment ACK. An index value of a UE identifier belonging to the set of identifiers of correct TBs is used to indicate that an acknowledgment state of a TB corresponding to the index value of the UE identifier is positive acknowledgment ACK. An index value of a UE identifier not belonging to the set of identifiers of correct TBs is used to indicate that an acknowledgment state of a TB corresponding to the index value of the UE identifier is negative acknowledgment NACK.

In some embodiments, the information about the set of correct TBs is the set of identifiers of correct TBs, and the set of identifiers of correct TBs is a set of signature indexes of random access signatures corresponding to correctly-received TBs in the TB set. The correctly-received TB is a TB whose acknowledgment state is a positive acknowledgment ACK. A signature index of a random access signature belonging to the set of identifiers of correct TBs is used to indicate that an acknowledgment state of a TB corresponding to the random access signature is positive acknowledgment ACK. A signature index of a random access signature not belonging to the set of identifiers of correct TBs is used to indicate that an acknowledgment state of a TB corresponding to the random access signature is negative acknowledgment NACK.

Example 15:

In this example, a process of obtaining feedback information f is described from the perspective of a terminal device.

As shown in FIG. 25, this example differs from Example 12 in that, Nu = 3 terminal devices SN(1), SN(2), and SN(3) included in a sequence of terminal devices separately receive a signal including the feedback information f sent by a base station. The feedback information f is feedback information of a TB set B; and the feedback information f is a bit sequence with a length of Nf =

$$\lceil \log_2(\text{Pmax}+1) \rceil + \left\lceil \log_2 \binom{\text{Na}}{\text{Pmax}} \right\rceil = \lceil \log_2(2+1) \rceil + \left\lceil \log_2 \binom{6}{3} \right\rceil = 7$$

. The TB set B includes Nb = 4 TBs: b(1), b(2), b(3), and b(4), which are respectively sent to the base station by the terminal devices SN(1), SN(2), SN(3), and SN(1). The feedback information f is determined by the base station according to a signal including the TB set B sent by the sequence of terminal devices.

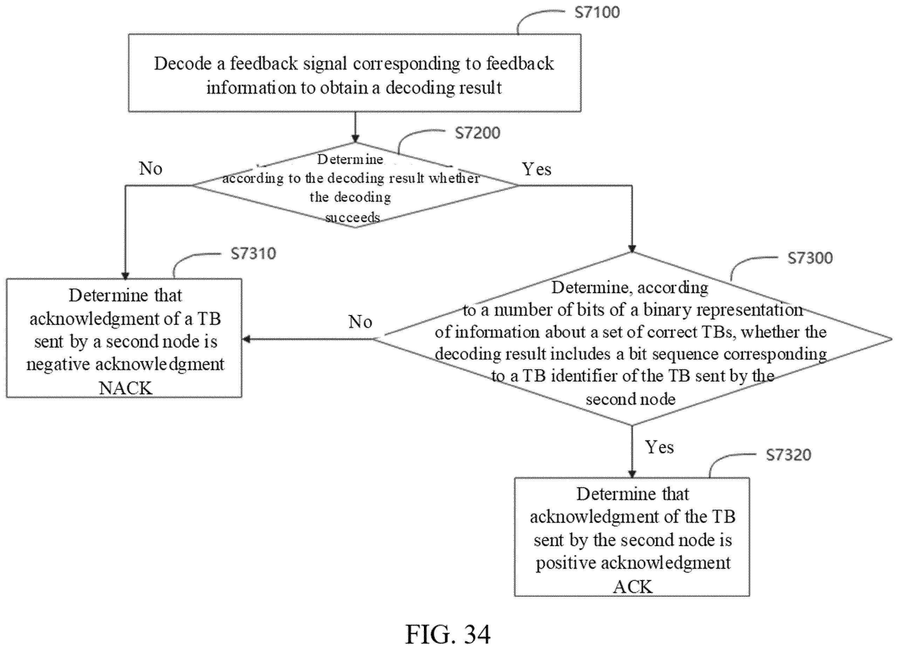

FIG. 34 is a flowchart of a determining method based on a decoding result provided by an embodiment of the present disclosure, the method including steps S7100, S7200, S7300, S7310, and S7320.

At S7100, a feedback signal corresponding to feedback information is decoded to obtain a decoding result.

At S7200, it is determined according to the decoding result whether the decoding succeeds.

At S7300, in response to the decoding being successful, it is determined, according to a number of bits of a binary representation of information about a set of correct TBs, whether the decoding result includes a bit sequence corresponding to a TB identifier of a TB sent by a second node.

At S7310, if the decoding result does not include the bit sequence corresponding to the TB identifier of the TB sent by the second node, it is determined that acknowledgment of the TB sent by the second node is negative acknowledgment NACK.

At S7320, if the decoding result includes the bit sequence corresponding to the TB identifier of the TB sent by the second node, it is determined that acknowledgment of the TB sent by the second node is positive acknowledgment ACK.

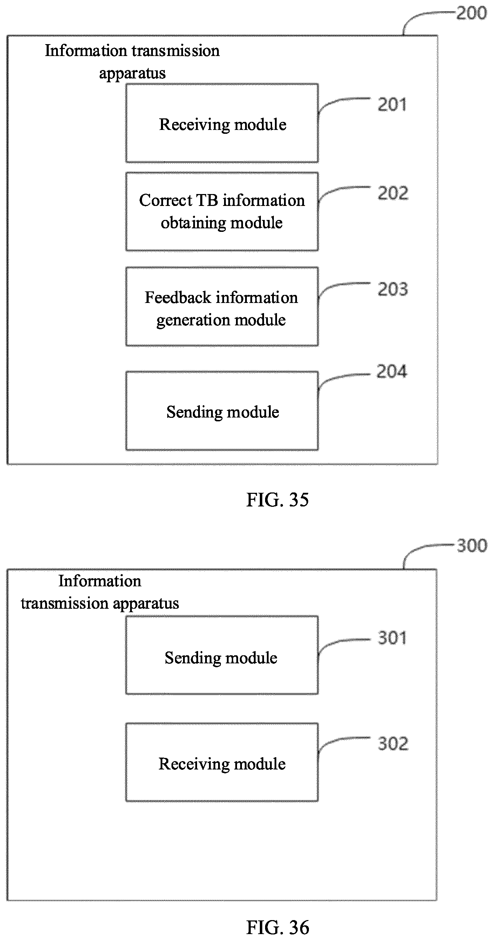

FIG. 35 is a schematic diagram of an information transmission apparatus provided by an embodiment of the present disclosure. As shown in FIG. 35, the information transmission apparatus 200 provided in this embodiment of the present disclosure is applied to a base station and can execute the information transmission method provided in the embodiments of the present disclosure. A terminal device has functional modules for execution of the method and can achieve corresponding technical effects. The apparatus can be realized by software, hardware or a combination of software and hardware, including:

- a receiving module 201 configured to receive a TB sent by the at least one second node, where the TB forms a TB set;

- a correct TB information obtaining module 202 configured to obtain information about a set of correct TBs according to the TB set;

- a feedback information generation module 203 configured to obtain feedback information according to the TB set, where the feedback information is used to represent a reception condition of the TB sent by the second node; and

- a sending module 204 configured to send the feedback information to the at least one second node.

FIG. 36 is a schematic diagram of an information transmission apparatus provided by an embodiment of the present disclosure. As shown in FIG. 36, the information transmission apparatus 300 provided in this embodiment of the present disclosure is applied to a UE and can execute the information transmission method provided in the embodiments of the present disclosure. A terminal device has functional modules for execution of the method and can achieve corresponding technical effects. The apparatus can be realized by software, hardware or a combination of software and hardware, including:

- a sending module 301 configured to send a TB to a first node, where the TB forms a TB set at the first node; and

- a receiving module 302 configured to receive feedback information sent by the first node, where the feedback information is used to represent a reception condition of the TB.

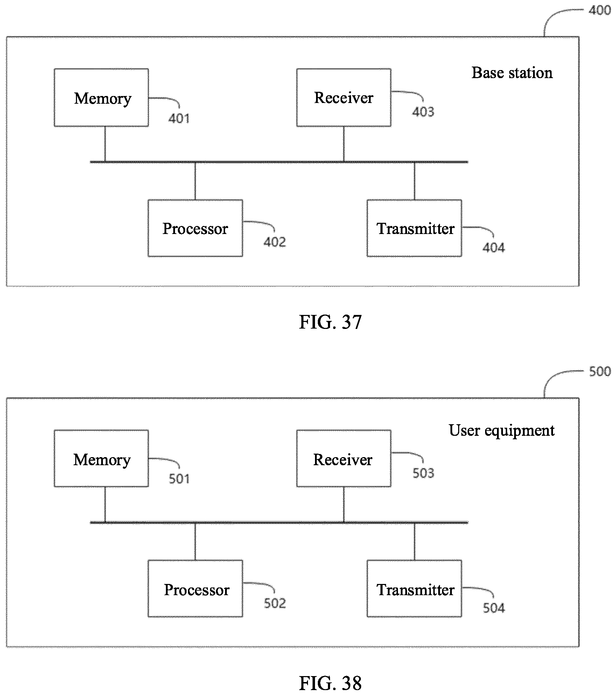

FIG, 37 is a schematic diagram of a base station provided by an embodiment of the present disclosure. As shown in FIG. 37, the base station 400 includes a memory 401, a processor 402, a receiver 403, and a transmitter 404. There may be one or more memories 401 and processors 402, although one memory 401 and one processor 402 are shown as an example in FIG. 37. The memory 401 and the processor 402 of the base station may be connected by a bus or in other ways. In FIG. 37, the connection is realized by a bus, for example.

As a computer-readable storage medium, the memory 401 may be configured to store a software program, a computer-executable program and a module, for example, the program instructions/modules corresponding to the information transmission method of any one of the embodiments of the present disclosure. The processor 402 performs the above information transmission method by executing the software programs, instructions and modules stored in the memory 401.

The memory 401 may mainly include a program storage area and a data storage area, where the program storage area may store an operating system and application program(s) required by at least one feature. In addition, the memory 401 may include a high-speed random-access memory and a non-volatile memory, for example, at least one magnetic disk storage device, a flash memory device, or another non-volatile solid-state storage device. In some examples, the memory 401 further includes memories remotely located with respect to the processor 402, and these remote memories may be connected to the device via a network. Examples of the above-mentioned network include, but are not limited to, the Internet, an intranet, a local area network, a mobile communication network, and a combination thereof.

The receiver 403 is configured to perform information reception. The transmitter 404 is configured to transmit feedback information according to the control of the processor 402.

FIG. 38 is a schematic diagram of a UE provided by an embodiment of the present disclosure. As shown in FIG. 38, the user equipment 500 includes a memory 501, a processor 502, a receiver 403, and a transmitter 404. There may be one or more memories 501 and processors 502, although one memory 501 and one processor 502 are shown as an example in FIG. 38. The memory 501 and the processor 502 of the UE may be connected by a bus or in other ways. In FIG. 38, the connection is realized by a bus, for example.

As a computer-readable storage medium, the memory 501 may be configured to store a software program, a computer-executable program and a module, for example, the program instructions/modules corresponding to the information transmission method of any one of the embodiments of the present disclosure. The processor 502 performs the above information transmission method by executing the software programs, instructions and modules stored in the memory 501.

The memory 501 may mainly include a program storage area and a data storage area, where the program storage area may store an operating system and application program(s) required by at least one feature. In addition, the memory 501 may include a high-speed random-access memory and a non-volatile memory, for example, at least one magnetic disk storage device, a flash memory device, or another non-volatile solid-state storage device. In some examples, the memory 501 further includes memories remotely located with respect to the processor 502, and these remote memories may be connected to the device via a network. Examples of the above-mentioned network include, but are not limited to, the Internet, an intranet, a local area network, a mobile communication network, and a combination thereof.

The receiver 503 is configured to receive feedback information. The transmitter 504 is configured to transmit a TB according to the control of the processor 502.

An embodiment of the present disclosure provides a computer-readable storage medium storing computer-executable instructions for executing an information transmission method as provided in any embodiment of the present disclosure.

An embodiment of the present disclosure provides a computer program product, including a computer program or computer instructions, where the computer program or the computer instructions are stored in a computer-readable storage medium, a processor of a computing device reads the computer program or the computer instructions from the computer-readable storage medium, and the computer program or the computer instructions, when executed by the processor, cause the computing device to perform the information transmission method according to any of the embodiments of the present disclosure.

The system architecture and application scenario described in the embodiment of the present disclosure are for more clearly describing the technical schemes of the embodiments of the present disclosure, and do not constitute a limitation on the technical schemes provided by the embodiments of the present disclosure. Those having ordinary skill in the art may understand that, with evolution of the system architecture and emergence of new application scenarios, the technical schemes provided by the embodiments of the present disclosure are also applicable to similar technical problems.

It can be understood by those having ordinary skill in the art that all or some of the steps of the methods, systems and functional modules/units in the devices disclosed above can be implemented as software, firmware, hardware and appropriate combinations thereof.

In a hardware implementation, the division between functional modules/units mentioned in the above description does not necessarily correspond to the division of physical components. For example, a physical component may have multiple functions, or a function or step may be performed cooperatively by several physical components. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those having ordinary skill in the art, the term computer-readable storage medium includes volatile and nonvolatile, removable and non-removable media implemented in any method or technique for storing information, such as computer-readable instructions, data structures, program modules or other data. A computer storage medium includes but is not limited to a random access memory (RAM), a read-only memory (ROM), an electrically erasable programmable read-only memory (EEPROM), a flash memory or another memory technology, a compact disc read-only memory (CD-ROM), a digital versatile disk (DVD) or another optical disk storage, a magnetic cassette, a magnetic tape, magnetic disk storage or another magnetic storage apparatus, or any other medium that can be used to store desired information and can be accessed by a computer. Furthermore, it is well known to those having ordinary skill in the art that communication media typically contain computer-readable instructions, data structures, program modules or other data in a modulated data signal such as a carrier wave or other transmission mechanism, and may include any information transmission media.

Terms such as "component", "module", and "system" used in this specification indicate computer-related entities, hardware, firmware, combinations of hardware and software, software, or software being executed. For example, a component may be, but is not limited to, a process executed by a processor, a processor, an object, an executable file, a thread of execution, a program, or a computer. As illustrated by using figures, both a computing device and an application that runs on a computing device may be components. One or more components may reside within a process or a thread of execution, and a component may be located on one computer or distributed between two or more computers. In addition, these components may be executed by various computer-readable media that store various data structures. For example, the components may communicate by using a local or remote process and based on a signal having one or more data packets (for example, data from two components interacting with another component in a local system, a distributed system, or across a network such as Internet interacting with another system by using the signal).

Some embodiments of the present disclosure have been described above with reference to the accompanying drawings and are not to limit the scope of the present disclosure. Any modifications, equivalent substitutions, and improvements made by those having ordinary skill in the art without departing from the scope and essence of the present disclosure shall fall within the scope of the present disclosure.

**Claims**

1.  An information transmission method, comprising:

    receiving a transport block, TB, sent by at least one second node, wherein the TB forms a TB set;
    obtaining information about a set of correct TBs according to the TB set;
    encoding the information about the set of correct TBs to obtain feedback information, wherein the feedback information is used to represent a reception condition of the TB sent by the at least one second node, and the encoding processing comprises performing binary representation on the information about the set of correct TBs; and
    sending the feedback information to the at least one second node.

2.  The method of claim 1, wherein the TB is indicated by a TB identifier, and the TB identifier comprises at least one of: a user equipment, UE, identifier, an index value of a UE identifier, or a signature index.

3.  The method of claim 1, wherein:

    the set of correct TBs is an empty set; and
    the encoding the information about the set of correct TBs to obtain feedback information comprises:
    determining that the feedback information is an empty sequence; wherein a feedback signal comprising the feedback information is a zero power signal.

4.  The method of claim 2 or 3, wherein:

    the encoding processing is performing binary representation on the information about the set of correct TBs, and
    the information about the set of correct TBs comprises a set of identifiers of correct TBs; and
    the encoding the information about the set of correct TBs to obtain feedback information comprises:

    obtaining a number of bits of a binary representation of the feedback information according to a quantity of elements in an ordered set of TB identifiers, wherein the ordered set of TB identifiers is an ordered set of all TB identifiers;
    obtaining, according to the number of bits of the binary representation of the feedback information, a binary representation corresponding to each element in the set of identifiers of correct TBs; and
    concatenating the binary representations corresponding to all elements in the set of identifiers of correct TBs and an all-zero sequence to obtain the feedback information.

5.  The method of claim 2 or 3, wherein:

    the encoding processing is performing binary representation on the information about the set of correct TBs, and
    the information about the set of correct TBs comprises a set of identifiers of correct TBs; and
    the encoding the information about the set of correct TBs to obtain feedback information comprises:

    obtaining a number of bits of a binary representation of the feedback information according to a quantity of elements in an ordered set of TB identifiers, wherein the ordered set of TB identifiers is an ordered set of all TB identifiers;
    obtaining, according to the number of bits of the binary representation of the feedback information, a binary representation corresponding to each element in the set of identifiers of correct TBs; and
    concatenating the binary representations corresponding to all elements in the set of identifiers of correct TBs to obtain the feedback information.

6.  The method of claim 2, further comprising:
    obtaining, according to the UE identifier, a signature index corresponding to the TB, wherein the UE identifier has a mapping relationship with the signature index.

7. The method of claim 2, further comprising:

   using the UE identifier as a part or all of a random number seed of a pseudorandom number generator to generate a pseudo-random signature index; and
   determining the pseudo-random signature index as a signature index corresponding to the TB.

8. The method of claim 1, wherein the encoding processing further comprises performing compression coding on the information about the set of correct TBs.

9. The method of claim 8, wherein the encoding the information about the set of correct TBs to obtain feedback information comprises:
   obtaining a compressed codeword according to the information about the set of correct TBs.

10. The method of claim 8, wherein the encoding the information about the set of correct TBs to obtain feedback information comprises:

    obtaining a TB error pattern according to the information about the set of correct TBs; and
    obtaining a compressed codeword according to the TB error pattern.

11. The method of claim 10, wherein:

    the information about the set of correct TBs comprises a set of identifiers of correct TBs, and an ordered set of TB identifiers; and
    the obtaining a TB error pattern according to the information about the set of correct TBs comprises:

       determining whether each element in the ordered set of TB identifiers belongs to the set of identifiers of correct TBs; and
       forming the TB error pattern according to a determination result.

12. The method of claim 10, wherein:

    the information about the set of correct TBs comprises a set of identifiers of correct TBs; and
    the obtaining a TB error pattern according to the information about the set of correct TBs comprises:

       according to a preset length of the TB error pattern, obtaining an initial pattern, of the TB error pattern, corresponding to the preset length, wherein each element in the initial pattern of the TB error pattern corresponds to a negative acknowledgment bit;
       setting, in the initial pattern of the TB error pattern according to the set of correct TBs, a bit with a sequence number equal to an element in the set of correct TBs as a positive acknowledgment bit; and
       determining the initial pattern of the TB error pattern as the TB error pattern.

13. The method of claim 9 or 10, wherein determining a length of the compressed codeword according to a size of an ordered set of TB identifiers and a quantity of correct TBs.

14. The method of claim 11 or 12, wherein determining a length of the compressed codeword according to a length of the TB error pattern and a quantity of correct TBs.

15. The method of any one of claims 9 to 12, wherein the encoding the information about the set of correct TBs to obtain feedback information comprises:

    obtaining a number of bits of a binary representation of a quantity of correct TBs according to a maximum quantity of correct TBs;
    performing binary representation on the quantity of correct TBs according to the number of bits of the binary representation of the quantity of correct TBs, to obtain a bit sequence of the quantity of correct TBs; and
    concatenating the bit sequence of the quantity of correct TBs, the compressed codeword, and an all-zero sequence to obtain the feedback information.

16. The method of any one of claims 9 to 12, wherein the encoding the information about the set of correct TBs to obtain feedback information comprises:
concatenating the compressed codeword and an all-zero sequence to obtain the feedback information.

17. The method of any one of claims 9 to 12, wherein the encoding the information about the set of correct TBs to obtain feedback information comprises:
determining the compressed codeword as the feedback information.

18. The method of claim 1, further comprising:
performing channel coding on the feedback information to obtain a first coding sequence.

19. The method of claim 8, wherein the compression coding comprises at least one of the following source coding algorithms:
arithmetic coding, Huffman coding, or Shannon-Fano coding.

20. The method of claim 1, wherein the information about the set of correct TBs comprises at least one of:
a maximum quantity of correct TBs, an ordered set of TB identifiers, a size of the ordered set of TB identifiers, a set of identifiers of correct TBs, a quantity of correct TBs, a TB error pattern, or a length of the feedback information.

21. The method of claim 20, wherein the maximum quantity of correct TBs is pre-configured by using a higher layer parameter.

22. The method of claim 2, wherein the UE identifier comprises at least one of the following:
a subscription permanent identifier, a generic public subscription identifier, a permanent equipment identifier, a network access identifier, a subscription concealed identifier, a globally unique temporary identity, a radio network temporary identifier, RNTI, a system information RNTI, a paging RNTI, a random access RNTI, a temporary cell RNTI, a cell RNTI, a transmit power control-physical uplink control channel-RNTI, a transmit power control-physical uplink shared channel-RNTI, a transmit power control-sounding reference symbols-RNTI, an interruption RNTI, a modulation coding scheme cell RNTI, a configured scheduling RNTI, a slot format indication RNTI, or a semi-persistent RNTI.

23. The method of claim 2, wherein the signature index is a signature index of a random access signature, and the random access signature comprises at least one of:
a pilot, a reference signal, a preamble, a spread spectrum sequence, an interleaver, an interleaver pattern, an interleaver sequence, a scrambling sequence, or a sparse code sequence.

24. The method of claim 18, wherein the channel coding comprises at least one of:
polar coding, low-density parity check coding, convolutional coding, turbo coding, Reed-Muller, RM, coding, Reed-Solomon, RS, coding, Bose-Chaudhuri-Hocquenghem, BCH, coding, concatenated coding, cyclic coding, block coding, Hamming coding, Golay coding, repetition coding, single-parity-check coding, cyclic redundancy check coding, superposition coding, sparse superposition coding, sparse regression coding, lattice coding, algebraic geometric coding, Goppa coding, polarization-adjusted convolutional coding, pre-transformed polar coding, or parity-check polar coding.

25. An information transmission method, which is applied to a second node, the method comprising:

sending a transport block, TB, to a first node; and
receiving feedback information sent by the first node, wherein the feedback information is used to represent a reception condition of the TB.

26. The method of claim 25, wherein the TB is indicated by a TB identifier, and the TB identifier comprises at least one of:
a user equipment, UE, identifier, an index value of a UE identifier, or a signature index.

27. The method of claim 25, further comprising:
decoding a feedback signal corresponding to the feedback information to obtain a decoding result; and
determining, according to the decoding result, the reception condition of the TB sent by the second node.

28. The method of claim 27, wherein the determining, according to the decoding result, the reception condition of the TB sent by the second node comprises:

in response to a failure of the decoding, determining that acknowledgment of the TB sent by the second node is negative acknowledgment NACK.

29. The method of claim 27, wherein the determining, according to the decoding result, the reception condition of the TB sent by the second node comprises:

in response to a success of the decoding, determining, according to a number of bits of a binary representation of information about a set of correct TBs, whether the decoding result comprises a bit sequence corresponding to the TB identifier of the TB sent by the second node.

30. An information transmission apparatus, comprising:

a receiving module, configured to receive a transport block, TB, sent by at least one second node, wherein the TB forms a TB set;
a correct TB information obtaining module, configured to obtain information about a set of correct TBs according to the TB set;
a feedback information generation module, configured to encode the information about the set of correct TBs to obtain feedback information, wherein the feedback information is used to represent a reception condition of the TB sent by the at least one second node, and the encoding processing comprises performing binary representation on the information about the set of correct TBs, or performing compression coding on the information about the set of correct TBs; and
a sending module, configured to send the feedback information to the at least one second node.

31. An information transmission apparatus, comprising:

a sending module, configured to send a transport block, TB, to a first node; and
a receiving module, configured to receive feedback information sent by the first node; wherein the feedback information is used to represent a reception condition of the TB.

32. A base station, comprising: a memory, a processor, and a computer program stored in the memory and executable by the processor, wherein the computer program, when executed by the processor, causes the processor to perform the information transmission method of any one of claims 1 to 29.

33. A user equipment, comprising: a memory, a processor, and a computer program stored in the memory and executable by the processor, wherein the computer program, when executed by the processor, causes the processor to perform the information transmission method of any one of claims 1 to 29.

34. A computer-readable storage medium, storing computer-executable instructions for performing the information transmission method of any one of claims 1 to 29.

35. A computer program product, comprising a computer program or computer instructions stored in a computer-readable storage medium, from which a processor of a computing device reads the computer program or the computer instructions, wherein the computer program or the computer instructions, when executed by the processor, cause the computing device to perform the information transmission method of any one of claims 1 to 29.

FIG. 1

S1000

Receive a TB sent by at least one second node, where the TB forms a TB set

S2000

Obtain information about a set of correct TBs according to the TB set

S3100

Encode the information about the set of correct TBs to obtain feedback information, where the feedback information is used to represent a reception condition of the TB sent by the at least one second node, and the encoding processing includes binary representation performed on the information about the set of correct TBs

S4000

Send the feedback information to the at least one second node

FIG. 2

S3111

Obtain a number of bits of a binary representation of feedback information according to a quantity of elements in an ordered set of TB identifiers, where the ordered set of TB identifiers is an ordered set of all TB identifiers

S3112

Obtain, according to the number of bits of the binary representation of the feedback information, a binary representation corresponding to each element in a set of identifiers of correct TBs

S3113

Concatenate binary representations corresponding to all elements in the set of identifiers of correct TBs and an all-zero sequence to obtain the feedback information

FIG. 3

S3121

Obtain a number of bits of a binary representation of feedback information according to a quantity of elements in an ordered set of TB identifiers, where the ordered set of TB identifiers is an ordered set of all TB identifiers

S3122

Obtain, according to the number of bits of the binary representation of the feedback information, a binary representation corresponding to each element in a set of identifiers of correct TBs

S3123

Concatenate binary representations corresponding to all elements in the set of identifiers of correct TBs to obtain the feedback information

FIG. 4

S1000

Receive a TB sent by at least one second node, where the TB forms a TB set

S2000

Obtain information about a set of correct TBs according to the TB set

S3200

Encode the information about the set of correct TBs to obtain feedback information, where the feedback information is used to represent a reception condition of the TB sent by the at least one second node, and the encoding processing includes compression coding performed on the information about the set of correct TBs

S4000

Send the feedback information to the at least one second node

FIG. 5

S3610

Determine whether each element
in an ordered set of TB identifiers belongs to
a set of identifiers of
correct TBs

Yes

No

S3621

$i^{th}$ bit of a TB error pattern
a(i) = ack

S3622

$i^{th}$ bit of a TB error pattern
a(i) = nack

FIG. 6

S3710

According to a preset length of a TB error pattern, obtain an initial pattern, of the TB error pattern, corresponding to the preset length, where each element in the initial pattern of the TB error pattern corresponds to a negative acknowledgment bit

S3720

Set, in the initial pattern of the TB error pattern according to a set of correct TBs, a bit with a sequence number equal to an element in the set of correct TBs as a positive acknowledgment bit

S3730

Determine the initial pattern of the TB error pattern as the TB error pattern

FIG. 7

```
                              ┌─────────┐
                              │  Start  │
                              └─────────┘
                                   │
                    ┌──────────────────────────┐
                    │ j=0, i=1, x=0, y=1,       │
                    │ z=0, n1=P, n=Na           │
                    └──────────────────────────┘
                                   │                          True
                          ◇ i > Na? ◇──────────────────────────────┐
                                   │ False                         │
                                   │                        ┌──────────────┐
                          ◇ I(i) ∈  ◇──── False              │  z = x + y   │
                            BI?                              └──────────────┘
                                   │ True                          │            False
                    ┌──────────────────────┐  ┌──────────────┐   ◇ j < Nc? ◇──────────┐
                    │ x  = x + (n-n1)/n*y;  │  │ y = (n-n1)/n*y│         │ True          │
                    │ y  = n1/n*y;          │  └──────────────┘  ┌──────────────┐  ┌────────┐
                    │ n1 = n1 - 1;          │                    │ z   = 2*z;   │  │  End   │
                    └──────────────────────┘                    │ j   = j + 1; │  └────────┘
                                   │                             │ c(j) = 0;    │
                    ┌──────────────────────┐                    └──────────────┘
                    │ i  = i + 1;           │                           │
                    │ n  = n - 1;           │              True   ◇ z < 1? ◇
                    │ z  = x + y;           │              ┌──────────┘    │ False
                    └──────────────────────┘              │         ┌──────────────┐
                                   │                      │         │ c(j) = 1;    │
                          ◇ z ≤ 0.5? ◇──── False          │         │ z    = z - 1;│
                                   │ True         │       │         └──────────────┘
                    ┌──────────────────────┐      │       │                │
                    │ j    = j + 1;         │      │       └────────────────┘
                    │ c(j) = 0;             │      │
                    │ x    = 2*x;           │  ◇ x ≥ 0.5? ◇──── False
                    │ y    = 2*y;           │      │ True
                    │ z    = x + y;         │  ┌──────────────┐
                    └──────────────────────┘  │ j    = j + 1; │
                                   │          │ c(j) = 1;     │
                          ◇ z ≤ 0.5? ◇        │ x    = 2*x - 1;│
                       True │        │ False  │ y    = 2*y;    │
                            │        │        └──────────────┘
```

FIG. 8

FIG. 9

```
                                                          ┌─── S3310
┌──────────────────────────────────────────────────────┐
│                                                        │
│   Obtain a number of bits of a binary representation of a quantity of   │
│      correct TBs according to a maximum quantity of correct TBs         │
│                                                        │
└──────────────────────────────────────────────────────┘
                          │
                          ▼                               ┌─── S3320
┌──────────────────────────────────────────────────────┐
│                                                        │
│  Perform binary representation on the quantity of correct TBs according │
│   to the number of bits of the binary representation of the quantity of │
│   correct TBs, to obtain a bit sequence of the quantity of correct TBs  │
│                                                        │
└──────────────────────────────────────────────────────┘
                          │
                          ▼                               ┌─── S3330
┌──────────────────────────────────────────────────────┐
│                                                        │
│     Concatenate the bit sequence of the quantity of correct TBs, a      │
│    compressed codeword, and an all-zero sequence to obtain feedback     │
│                            information                                   │
│                                                        │
└──────────────────────────────────────────────────────┘
```

FIG. 10

| Second node (terminal device) | Transport block | Transport block identifier (UE identifier) |
|---|---|---|
| SN(1) | b(1) | 4 |
| SN(2) | b(2) | 3 |
| SN(3) | b(3) | 2 |
| SN(4) | b(4) | 5 |

FIG. 11

| Second node (terminal device) | Transport block | Random access signature (preamble) | Transport block identifier (signature index) |
|---|---|---|---|
| SN(1) | b(1) | r(4) | 3 |
| SN(2) | b(2) | r(3) | 2 |
| SN(3) | b(3) | r(2) | 1 |
| SN(4) | b(4) | r(1) | 0 |

FIG. 12

3-bit binary representation of element 2 of a set BI

3-bit binary representation of element 3 of the set BI

All-zero subsequence with a length of 3 $(Pmax - P) = 3$

$$0, 1, 0, 0, 1, 1, 0, 0, 0$$

Feedback information f with a length of $3 \times Pmax = 9$

FIG. 13

| Second node | Transport block | Random access signature (reference signal) | Transport block identifier (signature index) |
|---|---|---|---|
| SN(1) | b(1) | r(1) | 1 |
| SN(2) | b(2) | r(5) | 5 |
| SN(3) | b(3) | r(3) | 3 |
| SN(4) | b(4) | r(2) | 2 |

FIG. 14

| Second node (terminal device) | Transport block | Transport block identifier (UE identifier) | Random access signature (reference signal) | Signature index |
|---|---|---|---|---|
| SN(1) | b(1) | 4 | r(5) | 4 |
| SN(2) | b(2) | 3 | r(4) | 3 |
| SN(3) | b(3) | 2 | r(5) | 4 |
| SN(4) | b(4) | 0 | r(1) | 0 |

FIG. 15

3-bit binary representation of element 4 of a set BI

3-bit binary representation of element 0 of the set BI

# 1, 0, 0, 0, 0, 0

Feedback information f with a length of $3 \times P = 6$

FIG. 16

| Second node (terminal device) | Transport block | User equipment identifier (MCS-C-RNTI) | Random access signature (scrambling sequence) | Transport block identifier (signature index) |
|---|---|---|---|---|
| SN(1) | b(1) | 4 | r(5) | 4 |
| SN(2) | b(2) | 3 | r(4) | 3 |
| SN(3) | b(3) | 2 | r(2) | 1 |
| SN(4) | b(4) | 0 | r(1) | 0 |

FIG. 17

3-bit binary representation of element 0 of a set BI  |  3-bit binary representation of element 1 of the set BI

$$0, 0, 0, 0, 0, 1$$

Feedback information f with a length of $3 \times P = 6$

FIG. 18

2-bit binary representation of P = 2

5-bit compressed codeword c of a transport block error pattern a

All-zero sequence of

$$\left\lceil \log_2 \binom{Na}{Pmax} \right\rceil - \left\lceil \log_2 \binom{Na}{P} \right\rceil = 1$$

1, 0, 1, 0, 0, 0, 1, 0

Feedback information f with a length of Nf = 8

FIG. 19

| Transport block error pattern a | | | | | | | | Compressed codeword c | | | | |
|---|---|---|---|---|---|---|---|---|---|---|---|---|
| 1 | 1 | 0 | 0 | 0 | 0 | 0 | 0 | 1 | 1 | 1 | 1 | 1 |
| 1 | 0 | 1 | 0 | 0 | 0 | 0 | 0 | 1 | 1 | 1 | 1 | 0 |
| 1 | 0 | 0 | 1 | 0 | 0 | 0 | 0 | 1 | 1 | 1 | 0 | 1 |
| 1 | 0 | 0 | 0 | 1 | 0 | 0 | 0 | 1 | 1 | 1 | 0 | 0 |
| 1 | 0 | 0 | 0 | 0 | 1 | 0 | 0 | 1 | 1 | 0 | 1 | 1 |
| 1 | 0 | 0 | 0 | 0 | 0 | 1 | 0 | 1 | 1 | 0 | 1 | 0 |
| 1 | 0 | 0 | 0 | 0 | 0 | 0 | 1 | 1 | 1 | 0 | 0 | 1 |
| 0 | 1 | 1 | 0 | 0 | 0 | 0 | 0 | 1 | 0 | 1 | 1 | 1 |
| 0 | 1 | 0 | 1 | 0 | 0 | 0 | 0 | 1 | 0 | 1 | 1 | 0 |
| 0 | 1 | 0 | 0 | 1 | 0 | 0 | 0 | 1 | 0 | 1 | 0 | 1 |
| 0 | 1 | 0 | 0 | 0 | 1 | 0 | 0 | 1 | 0 | 1 | 0 | 0 |
| 0 | 1 | 0 | 0 | 0 | 0 | 1 | 0 | 1 | 0 | 0 | 1 | 1 |
| 0 | 1 | 0 | 0 | 0 | 0 | 0 | 1 | 1 | 0 | 0 | 1 | 0 |
| 0 | 0 | 1 | 1 | 0 | 0 | 0 | 0 | 1 | 0 | 0 | 0 | 1 |
| 0 | 0 | 1 | 0 | 1 | 0 | 0 | 0 | 0 | 1 | 1 | 1 | 1 |
| 0 | 0 | 1 | 0 | 0 | 1 | 0 | 0 | 0 | 1 | 1 | 1 | 0 |
| 0 | 0 | 1 | 0 | 0 | 0 | 1 | 0 | 0 | 1 | 1 | 0 | 1 |
| 0 | 0 | 1 | 0 | 0 | 0 | 0 | 1 | 0 | 1 | 1 | 0 | 0 |
| 0 | 0 | 0 | 1 | 1 | 0 | 0 | 0 | 0 | 1 | 0 | 1 | 1 |
| 0 | 0 | 0 | 1 | 0 | 1 | 0 | 0 | 0 | 1 | 0 | 1 | 0 |
| 0 | 0 | 0 | 1 | 0 | 0 | 1 | 0 | 0 | 1 | 0 | 0 | 1 |
| 0 | 0 | 0 | 1 | 0 | 0 | 0 | 1 | 0 | 0 | 1 | 1 | 1 |
| 0 | 0 | 0 | 0 | 1 | 1 | 0 | 0 | 0 | 0 | 1 | 1 | 0 |
| 0 | 0 | 0 | 0 | 1 | 0 | 1 | 0 | 0 | 0 | 1 | 0 | 1 |
| 0 | 0 | 0 | 0 | 1 | 0 | 0 | 1 | 0 | 0 | 1 | 0 | 0 |
| 0 | 0 | 0 | 0 | 0 | 1 | 1 | 0 | 0 | 0 | 0 | 1 | 1 |
| 0 | 0 | 0 | 0 | 0 | 1 | 0 | 1 | 0 | 0 | 0 | 1 | 0 |
| 0 | 0 | 0 | 0 | 0 | 0 | 1 | 1 | 0 | 0 | 0 | 0 | 1 |

FIG. 20

2-bit binary representation of $P - 1 = 1$

5-bit compressed codeword of a transport block error pattern a

$$\left\lceil \log_2\left(\frac{Na}{Pmax}\right)\right\rceil - \left\lceil \log_2\left(\frac{Na}{P}\right)\right\rceil = 1$$

All-zero sequence of

$$0, 1, 1, 0, 0, 0, 1, 0$$

Feedback information f with a length of
$Nf = 8$

FIG. 21

5-bit compressed codeword of a transport block error pattern a

$$\left\lceil \log_2\left(\frac{Na}{Pmax}\right)\right\rceil - \left\lceil \log_2\left(\frac{Na}{P}\right)\right\rceil = 1$$

All-zero sequence with a length of

$$0, 1, 1, 1, 1, 0$$

Feedback information f with a length
of $Nf = 6$

FIG. 22

| Transport block error pattern a | | | | | | | | Compressed codeword c | | | | |
|---|---|---|---|---|---|---|---|---|---|---|---|---|
| 1 | 1 | 1 | 1 | 1 | 1 | 0 | 0 | 1 | 1 | 1 | 1 | 1 |
| 1 | 1 | 1 | 1 | 1 | 0 | 1 | 0 | 1 | 1 | 1 | 1 | 0 |
| 1 | 1 | 1 | 1 | 1 | 0 | 0 | 1 | 1 | 1 | 1 | 0 | 1 |
| 1 | 1 | 1 | 1 | 0 | 1 | 1 | 0 | 1 | 1 | 1 | 0 | 0 |
| 1 | 1 | 1 | 1 | 0 | 1 | 0 | 1 | 1 | 1 | 0 | 1 | 1 |
| 1 | 1 | 1 | 1 | 0 | 0 | 1 | 1 | 1 | 1 | 0 | 1 | 0 |
| 1 | 1 | 1 | 0 | 1 | 1 | 1 | 0 | 1 | 1 | 0 | 0 | 1 |
| 1 | 1 | 1 | 0 | 1 | 1 | 0 | 1 | 1 | 0 | 1 | 1 | 1 |
| 1 | 1 | 1 | 0 | 1 | 0 | 1 | 1 | 1 | 0 | 1 | 1 | 0 |
| 1 | 1 | 1 | 0 | 0 | 1 | 1 | 1 | 1 | 0 | 1 | 0 | 1 |
| 1 | 1 | 0 | 1 | 1 | 1 | 1 | 0 | 1 | 0 | 1 | 0 | 0 |
| 1 | 1 | 0 | 1 | 1 | 1 | 0 | 1 | 1 | 0 | 0 | 1 | 1 |
| 1 | 1 | 0 | 1 | 1 | 0 | 1 | 1 | 1 | 0 | 0 | 1 | 0 |
| 1 | 1 | 0 | 1 | 0 | 1 | 1 | 1 | 1 | 0 | 0 | 0 | 1 |
| 1 | 1 | 0 | 0 | 1 | 1 | 1 | 1 | 0 | 1 | 1 | 1 | 1 |
| 1 | 0 | 1 | 1 | 1 | 1 | 1 | 0 | 0 | 1 | 1 | 1 | 0 |
| 1 | 0 | 1 | 1 | 1 | 1 | 0 | 1 | 0 | 1 | 1 | 0 | 1 |
| 1 | 0 | 1 | 1 | 1 | 0 | 1 | 1 | 0 | 1 | 1 | 0 | 0 |
| 1 | 0 | 1 | 1 | 0 | 1 | 1 | 1 | 0 | 1 | 0 | 1 | 1 |
| 1 | 0 | 1 | 0 | 1 | 1 | 1 | 1 | 0 | 1 | 0 | 1 | 0 |
| 1 | 0 | 0 | 1 | 1 | 1 | 1 | 1 | 0 | 1 | 0 | 0 | 1 |
| 0 | 1 | 1 | 1 | 1 | 1 | 1 | 0 | 0 | 0 | 1 | 1 | 1 |
| 0 | 1 | 1 | 1 | 1 | 1 | 0 | 1 | 0 | 0 | 1 | 1 | 0 |
| 0 | 1 | 1 | 1 | 1 | 0 | 1 | 1 | 0 | 0 | 1 | 0 | 1 |
| 0 | 1 | 1 | 1 | 0 | 1 | 1 | 1 | 0 | 0 | 1 | 0 | 0 |
| 0 | 1 | 1 | 0 | 1 | 1 | 1 | 1 | 0 | 0 | 0 | 1 | 1 |
| 0 | 1 | 0 | 1 | 1 | 1 | 1 | 1 | 0 | 0 | 0 | 1 | 0 |
| 0 | 0 | 1 | 1 | 1 | 1 | 1 | 1 | 0 | 0 | 0 | 0 | 1 |

FIG. 23

5-bit compressed codeword of a
transport block error pattern a

$$0, 1, 1, 1, 1$$

Feedback information f with a length of Nf = 5

FIG. 24

| Second node (terminal device) | Transport block | Random access signature (interleaver) | Transport block identifier (signature index) |
|---|---|---|---|
| SN(1) | b(1) | r(2) | 2 |
| SN(2) | b(2) | r(3) | 3 |
| SN(3) | b(3) | r(4) | 4 |
| SN(1) | b(4) | r(1) | 1 |

FIG. 25

$$\left\lceil \log_2 \left( \frac{Na}{Pmax} \right) \right\rceil - \left\lceil \log_2 \left( \frac{Na}{P} \right) \right\rceil = 1$$

2-bit binary representation of P = 2

4-bit compressed codeword of a transport block error pattern a

All-zero sequence with a length of

1, 0, 1, 0, 1, 0, 0

Feedback information f with a length of Nf = 7

FIG. 26

| Transport block error pattern a | | | | | | Compressed codeword c | | | |
|---|---|---|---|---|---|---|---|---|---|
| 1 | 1 | 0 | 0 | 0 | 0 | 1 | 1 | 1 | 1 |
| 1 | 0 | 1 | 0 | 0 | 0 | 1 | 1 | 1 | 0 |
| 1 | 0 | 0 | 1 | 0 | 0 | 1 | 1 | 0 | 1 |
| 1 | 0 | 0 | 0 | 1 | 0 | 1 | 1 | 0 | 0 |
| 1 | 0 | 0 | 0 | 0 | 1 | 1 | 0 | 1 | 1 |
| 0 | 1 | 1 | 0 | 0 | 0 | 1 | 0 | 1 | 0 |
| 0 | 1 | 0 | 1 | 0 | 0 | 1 | 0 | 0 | 1 |
| 0 | 1 | 0 | 0 | 1 | 0 | 1 | 0 | 0 | 0 |
| 0 | 1 | 0 | 0 | 0 | 1 | 0 | 1 | 1 | 1 |
| 0 | 0 | 1 | 1 | 0 | 0 | 0 | 1 | 1 | 0 |
| 0 | 0 | 1 | 0 | 1 | 0 | 0 | 1 | 0 | 1 |
| 0 | 0 | 1 | 0 | 0 | 1 | 0 | 1 | 0 | 0 |
| 0 | 0 | 0 | 1 | 1 | 0 | 0 | 0 | 1 | 1 |
| 0 | 0 | 0 | 1 | 0 | 1 | 0 | 0 | 1 | 0 |
| 0 | 0 | 0 | 0 | 1 | 1 | 0 | 0 | 0 | 1 |

FIG. 27

| Second node (terminal device) | Transport block | Random access signature (sparse code sequence) | Transport block identifier (signature index) |
|---|---|---|---|
| SN(1) | b(1) | r(4) | 2 |
| SN(2) | b(2) | r(3) | 3 |
| SN(3) | b(3) | r(2) | 4 |
| SN(4) | b(4) | r(1) | 1 |

FIG. 28

1-bit binary representation of $P - 1 = 1$

4-bit compressed codeword of a transport block error pattern a

$$1, 1, 0, 1, 0$$

Feedback information f with a length of $Nf = 5$

FIG. 29

| P | Transport block error pattern a | | | | | | Compressed codeword c | | | | Feedback information f | | | | |
|---|---|---|---|---|---|---|---|---|---|---|---|---|---|---|---|
| 2 | 1 | 1 | 0 | 0 | 0 | 0 | 1 | 1 | 1 | 1 | 1 | 1 | 1 | 1 | 1 |
| 2 | 1 | 0 | 1 | 0 | 0 | 0 | 1 | 1 | 1 | 0 | 1 | 1 | 1 | 1 | 0 |
| 2 | 1 | 0 | 0 | 1 | 0 | 0 | 1 | 1 | 0 | 1 | 1 | 1 | 1 | 0 | 1 |
| 2 | 1 | 0 | 0 | 0 | 1 | 0 | 1 | 1 | 0 | 0 | 1 | 1 | 1 | 0 | 0 |
| 2 | 1 | 0 | 0 | 0 | 0 | 1 | 1 | 0 | 1 | 1 | 1 | 1 | 0 | 1 | 1 |
| 2 | 0 | 1 | 1 | 0 | 0 | 0 | 1 | 0 | 1 | 0 | 1 | 1 | 0 | 1 | 0 |
| 2 | 0 | 1 | 0 | 1 | 0 | 0 | 1 | 0 | 0 | 1 | 1 | 1 | 0 | 0 | 1 |
| 2 | 0 | 1 | 0 | 0 | 1 | 0 | 1 | 0 | 0 | 0 | 1 | 1 | 0 | 0 | 0 |
| 2 | 0 | 1 | 0 | 0 | 0 | 1 | 0 | 1 | 1 | 1 | 1 | 0 | 1 | 1 | 1 |
| 2 | 0 | 0 | 1 | 1 | 0 | 0 | 0 | 1 | 1 | 0 | 1 | 0 | 1 | 1 | 0 |
| 2 | 0 | 0 | 1 | 0 | 1 | 0 | 0 | 1 | 0 | 1 | 1 | 0 | 1 | 0 | 1 |
| 2 | 0 | 0 | 1 | 0 | 0 | 1 | 0 | 1 | 0 | 0 | 1 | 0 | 1 | 0 | 0 |
| 2 | 0 | 0 | 0 | 1 | 1 | 0 | 0 | 0 | 1 | 1 | 1 | 0 | 0 | 1 | 1 |
| 2 | 0 | 0 | 0 | 1 | 0 | 1 | 0 | 0 | 1 | 0 | 1 | 0 | 0 | 1 | 0 |
| 2 | 0 | 0 | 0 | 0 | 1 | 1 | 0 | 0 | 0 | 1 | 1 | 0 | 0 | 0 | 1 |
| 1 | 1 | 0 | 0 | 0 | 0 | 0 | 1 | 1 | 1 | | 0 | 1 | 1 | 1 | |
| 1 | 0 | 1 | 0 | 0 | 0 | 0 | 1 | 1 | 0 | | 0 | 1 | 1 | 0 | |
| 1 | 0 | 0 | 1 | 0 | 0 | 0 | 1 | 0 | 1 | | 0 | 1 | 0 | 1 | |
| 1 | 0 | 0 | 0 | 1 | 0 | 0 | 0 | 1 | 1 | | 0 | 0 | 1 | 1 | |
| 1 | 0 | 0 | 0 | 0 | 1 | 0 | 0 | 1 | 0 | | 0 | 0 | 1 | 0 | |
| 1 | 0 | 0 | 0 | 0 | 0 | 1 | 0 | 0 | 1 | | 0 | 0 | 0 | 1 | |
| 0 | 0 | 0 | 0 | 0 | 0 | 0 | Empty sequence | | | | 0 | | | | |

FIG. 30

4-bit compressed codeword
of a set BI of identifiers of
correct TBs

$$1, 0, 1, 0$$

Feedback information f with a
length of Nf = 4

FIG. 31

EP 4 543 115 A1

| P | Set BI of identifiers of correct TBs | Arithmetic coding codeword c | | | | Feedback information f | | | |
|---|---|---|---|---|---|---|---|---|---|
| 2 | {1, 2} | 1 | 1 | 1 | 1 | 1 | 1 | 1 | 1 |
| 2 | {1, 3} | 1 | 1 | 1 | 0 | 1 | 1 | 1 | 0 |
| 2 | {1, 4} | 1 | 1 | 0 | 1 | 1 | 1 | 0 | 1 |
| 2 | {1, 5} | 1 | 1 | 0 | 0 | 1 | 1 | 0 | 0 |
| 2 | {1, 6} | 1 | 0 | 1 | 1 | 1 | 0 | 1 | 1 |
| 2 | {2, 3} | 1 | 0 | 1 | 0 | 1 | 0 | 1 | 0 |
| 2 | {2, 4} | 1 | 0 | 0 | 1 | 1 | 0 | 0 | 1 |
| 2 | {2, 5} | 1 | 0 | 0 | 0 | 1 | 0 | 0 | 0 |
| 2 | {2, 6} | 0 | 1 | 1 | 1 | 0 | 1 | 1 | 1 |
| 2 | {3, 4} | 0 | 1 | 1 | 0 | 0 | 1 | 1 | 0 |
| 2 | {3, 5} | 0 | 1 | 0 | 1 | 0 | 1 | 0 | 1 |
| 2 | {3, 6} | 0 | 1 | 0 | 0 | 0 | 1 | 0 | 0 |
| 2 | {4, 5} | 0 | 0 | 1 | 1 | 0 | 0 | 1 | 1 |
| 2 | {4, 6} | 0 | 0 | 1 | 0 | 0 | 0 | 1 | 0 |
| 2 | {5, 6} | 0 | 0 | 0 | 1 | 0 | 0 | 0 | 1 |
| 1 | {1} | 1 | 1 | 1 | | 1 | 1 | 1 | |
| 1 | {2} | 1 | 1 | 0 | | 1 | 1 | 0 | |
| 1 | {3} | 1 | 0 | 1 | | 1 | 0 | 1 | |
| 1 | {4} | 0 | 1 | 1 | | 0 | 1 | 1 | |
| 1 | {5} | 0 | 1 | 0 | | 0 | 1 | 0 | |
| 1 | {6} | 0 | 0 | 1 | | 0 | 0 | 1 | |
| 0 | Empty set | Empty sequence | | | | Empty sequence | | | |

FIG. 32

59

S5000

Send a TB to a first node

S6000

Receive feedback information sent by the first node, where the feedback information is used to represent a reception condition of the TB

FIG. 33

Decode a feedback signal corresponding to feedback information to obtain a decoding result — S7100

Determine according to the decoding result whether the decoding succeeds — S7200

No

Yes

Determine that acknowledgment of a TB sent by a second node is negative acknowledgment NACK — S7310

Determine, according to a number of bits of a binary representation of information about a set of correct TBs, whether the decoding result includes a bit sequence corresponding to a TB identifier of the TB sent by the second node — S7300

No

Yes

Determine that acknowledgment of the TB sent by the second node is positive acknowledgment ACK — S7320

FIG. 34

200

Information transmission
apparatus

Receiving module — 201

Correct TB information
obtaining module — 202

Feedback information
generation module — 203

Sending module — 204

FIG. 35

300

Information
transmission apparatus

Sending module — 301

Receiving module — 302

FIG. 36

FIG. 37

FIG. 38

| INTERNATIONAL SEARCH REPORT | International application No. |
|---|---|
| | **PCT/CN2023/094339** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC:H04W; H04Q; H04L

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; 3GPP; CJFD; IEEE; CNKI; WOTXT: 反馈, 传输块, 编码, 压缩, 二进制, 节点, 标识, 图样, 随机, 集合, feedback, transport block, encoding, compression, binary, node, identity, pattern, random, set

**C. DOCUMENTS CONSIDERED TO BE RELEVANT**

| Category* | Citation of document, with indication, where appropriate, of the relevant passages | Relevant to claim No. |
|---|---|---|
| X | US 2020084004 A1 (NTT DOCOMO INC.) 12 March 2020 (2020-03-12)<br>see description, paragraphs [0007] to [0104] | 1-35 |
| X | US 2021328722 A1 (GUANGDONG OPPO MOBILE TELECOMMUNICATIONS CORP., LTD.) 21 October 2021 (2021-10-21)<br>see description, paragraphs [0007] to [0064] | 1-35 |
| A | CN 105515733 A (ZTE CORP.) 20 April 2016 (2016-04-20)<br>entire document | 1-35 |
| A | US 2018006791 A1 (INTERDIGITAL PATENT HOLDINGS INC.) 04 January 2018 (2018-01-04)<br>entire document | 1-35 |
| A | US 2021111740 A1 (AT & T INTELLECTUAL PROPERTY I, L.P.) 15 April 2021 (2021-04-15)<br>entire document | 1-35 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **28 August 2023** | **30 August 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/094339**

| Patent document cited in search report | | | Publication date (day/month/year) | Patent family member(s) | | | Publication date (day/month/year) |
|---|---|---|---|---|---|---|---|
| US | 2020084004 | A1 | 12 March 2020 | WO | 2018171649 | A1 | 27 September 2018 |
| US | 2021328722 | A1 | 21 October 2021 | US | 11343020 | B2 | 24 May 2022 |
| | | | | EP | 3512145 | A1 | 17 July 2019 |
| | | | | EP | 3512145 | A4 | 23 October 2019 |
| | | | | EP | 3512145 | B1 | 05 August 2020 |
| | | | | WO | 2019090710 | A1 | 16 May 2019 |
| CN | 105515733 | A | 20 April 2016 | EP | 3937402 | A1 | 12 January 2022 |
| | | | | EP | 3937402 | B1 | 26 April 2023 |
| | | | | US | 2017303284 | A1 | 19 October 2017 |
| | | | | US | 10136445 | B2 | 20 November 2018 |
| | | | | WO | 2015184919 | A1 | 10 December 2015 |
| | | | | FI | 3937402 | T3 | 07 June 2023 |
| | | | | EP | 3200376 | A1 | 02 August 2017 |
| | | | | EP | 3200376 | A4 | 31 January 2018 |
| | | | | EP | 3200376 | B1 | 06 October 2021 |
| US | 2018006791 | A1 | 04 January 2018 | US | 2021297225 | A1 | 23 September 2021 |
| | | | | FI | 3251245 | T3 | 20 June 2023 |
| | | | | US | 10601567 | B2 | 24 March 2020 |
| | | | | JP | 2022110042 | A | 28 July 2022 |
| | | | | EP | 4221011 | A1 | 02 August 2023 |
| | | | | WO | 2016123372 | A1 | 04 August 2016 |
| | | | | JP | 2018512096 | A | 10 May 2018 |
| | | | | JP | 6789224 | B2 | 25 November 2020 |
| | | | | US | 2020235892 | A1 | 23 July 2020 |
| | | | | US | 11032053 | B2 | 08 June 2021 |
| | | | | JP | 2021036699 | A | 04 March 2021 |
| | | | | JP | 7072033 | B2 | 19 May 2022 |
| | | | | EP | 3251245 | A1 | 06 December 2017 |
| | | | | EP | 3251245 | B1 | 05 April 2023 |
| US | 2021111740 | A1 | 15 April 2021 | US | 11025279 | B2 | 01 June 2021 |
| | | | | US | 2021273656 | A1 | 02 September 2021 |
| | | | | US | 11533065 | B2 | 20 December 2022 |
| | | | | US | 2023140205 | A1 | 04 May 2023 |

Form PCT/ISA/210 (patent family annex) (July 2022)

**EP 4 543 115 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210675048